(19) Europäisches Patentamt
European Patent Office
Office européen des brevets

(11) **EP 3 773 043 B1**

(12) # EUROPEAN PATENT SPECIFICATION

(45) Date of publication and mention of the grant of the patent:
**29.09.2021 Bulletin 2021/39**

(21) Application number: **19725566.4**

(22) Date of filing: **08.05.2019**

(51) Int Cl.:
***A43B 1/02*** *(2006.01)* ***A43B 23/02*** *(2006.01)*

(86) International application number:
**PCT/US2019/031392**

(87) International publication number:
**WO 2019/217599 (14.11.2019 Gazette 2019/46)**

(54) **BONDING TO POLYOLEFIN TEXTILES AND UPPERS AND ARTICLES OF FOOTWEAR FORMED THEREFROM**

VERBINDUNG AN POLYOLEFIN-TEXTILIEN UND OBERMATERIAL UND DARAUS HERGESTELLTE SCHUHWERKARTIKEL

LIAISON ENTRE TEXTILES ET TIGESS EN POLYOLÉFINE ET ARTICLES CHAUSSANTS OBTENUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2018 US 201862668662 P**
**16.11.2018 US 201862768625 P**
**22.04.2019 US 201962837120 P**

(43) Date of publication of application:
**17.02.2021 Bulletin 2021/07**

(73) Proprietor: **NIKE Innovate C.V.**
**Beaverton, OR 97005 (US)**

(72) Inventor: **FARR, Isaac**
**Beaverton, Oregon 97005 (US)**

(74) Representative: **Abel & Imray**
**Westpoint Building**
**James Street West**
**Bath BA1 2DA (GB)**

(56) References cited:
**EP-A1- 3 245 889** **WO-A1-2017/104452**
**US-A1- 2013 255 103** **US-B2- 8 505 216**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 773 043 B1

## Description

### TECHNICAL FIELD

The present disclosure generally relates to footwear components containing polyolefins and articles of footwear formed therefrom.

### BACKGROUND

The design and manufacture of footwear and sporting equipment involves a variety of factors from the aesthetic aspects, to the comfort and feel, to the performance and durability. While design and fashion may be rapidly changing, the demand for increasing performance in the footwear and sporting equipment market is unchanging. In addition, the market has shifted to demand lower-cost and recyclable materials still capable of meeting increasing performance demands. To balance these demands, designers of footwear and sporting equipment employ a variety of materials and designs for the various components.

WO 2017/104452 A1 discloses an article of footwear comprising: a covered body comprising a thermoplastic elastomer (e.g. polyolefin) component adhesively bonded to a textile component by a hot melt adhesive.

### BRIEF DESCRIPTION OF THE DRAWINGS

Further aspects of the present disclosure will be readily appreciated upon review of the detailed description, described below, when taken in conjunction with the accompanying drawings.

**FIGS. 1A-1H** depict an exemplary article of athletic footwear. **FIG. 1A** is a lateral side perspective view of the exemplary article of athletic footwear. **FIG. 1B** is a lateral side elevational view of the exemplary article of athletic footwear. **FIG. 1C** is a medial side elevational view of the exemplary article of athletic footwear. **FIG. 1D** is a top view of the exemplary article of athletic footwear. **FIG. 1E** is a front view of the exemplary article of athletic footwear. **FIG. 1F** is a rear view of the exemplary article of athletic footwear. **FIG. 1G** is an exploded perspective view of the exemplary article of athletic footwear. **FIG. 1H** is a partially exploded perspective view of the exemplary article of athletic footwear. **FIG. 1I** is a sectional view along 1-1 of the exemplary article of athletic footwear.

**FIGS. 2A-2B** depict a second exemplary article of athletic footwear. **FIG. 2A** is a lateral side elevational view of the second exemplary article of athletic footwear. **FIG. 2B** is an exploded perspective view of the second exemplary article of athletic footwear. **FIG. 2C** is a sectional view along 2-2 of the second exemplary article of athletic footwear.

**FIGS. 3A-3H** depict a third exemplary article of athletic footwear. **FIG. 3A** is a lateral side perspective view of the third exemplary article of athletic footwear. **FIG. 3B** is a lateral side elevational view of the third exemplary article of athletic footwear. **FIG. 3C** is a medial side elevational view of the third exemplary article of athletic footwear. **FIG. 3D** is a top view of the third exemplary article of athletic footwear. **FIG. 3E** is a front view of the third exemplary article of athletic footwear. **FIG. 3F** is a rear view of the third exemplary article of athletic footwear. **FIG. 3G** is an exploded perspective view of the third exemplary article of athletic footwear. **FIG. 3H** is a sectional view along 3-3 of the third exemplary article of athletic footwear.

**FIGS. 4A-4C** depict a fourth exemplary article of athletic footwear. **FIG. 4A** is a lateral side elevational view of the fourth exemplary article of athletic footwear. **FIG. 4B** is an exploded perspective view of the fourth exemplary article of athletic footwear. **FIG. 4C** is a sectional view along 4-4 of the fourth exemplary article of athletic footwear.

**FIG. 5** depicts an exploded view of a fifth exemplary sole structure having a chassis and a rigid plate providing rigidity without adding substantial amounts of extra material, and therefore maintaining a low weight.

**FIGS. 6A-6C** depict a sixth exemplary article of athletic footwear. **FIG. 6A** is a lateral side elevational view of the sixth exemplary article of athletic footwear. **FIG. 6B** is an exploded perspective view of the sixth exemplary article of athletic footwear. **FIG. 6C** is a sectional view along 6-6 of the sixth exemplary article of athletic footwear.

**FIGS. 7A-7B** depict a seventh exemplary article of athletic footwear. **FIG. 7A** is a lateral side elevational view of the seventh exemplary article of athletic footwear. **FIG. 7B** is an exploded perspective view of the seventh exemplary article of athletic footwear

**FIG. 8** depicts an exemplary interface adhesively bonding a first component and a second component.

**FIG. 9** is a flow chart describing the bonding procedure for bonding the TPO synthetic leather reference materials to rubber according to an exemplary aspect.

## DETAILED DESCRIPTION

State of the art specialty polymers for footwear and sporting equipment include polymers such as polyurethane and polyamide polymers, but there remains a need for lower-cost alternatives to these performance polymers, especially lower-cost alternatives that are recyclable and readily processable. Alternatives such as polyolefins, while cost-effective, have traditionally suffered from poor mechanical properties and poor surfaces and surface energies for bonding. New designs and materials are needed. In particular, there remains a need for components of footwear and sporting equipment which that make use of lighter and cost-effective polyolefin materials are capable of adequate bonding for footwear and other athletic equipment applications.

The present invention provides an article of footwear, athletic apparel, sporting equipment, or portion thereof comprising a textile component and a second component adhesively bonded together at an interface as defined in claim 1. In some aspects, the present disclosure is directed to bonding components of articles of footwear containing a polyolefin and articles of footwear made therefrom. In some aspects, the disclosure is directed to bonding to an upper or other textile component containing a polyolefin. Suitable textiles can include knit, woven, or non-woven textiles that contain a polyolefin yarn and/or are coated with a polyolefin. The polyolefin textile or polyolefin upper can be bonded to other textiles, can be bonded to a foam component, and/or can be bonded to a solid resin component. In some aspects, the polyolefin textile or polyolefin upper is bonded to a sole structure, is bonded to a midsole, or is bonded to a plate for an article of footwear. The other component to which the textile or upper is bonded (e.g. the sole structure, midsole, or plate) can include any conventional foam material used in footwear such as polyurethanes, ethylene-vinyl acetate co-polymers, polypropylene, polyethylene terephthalate, and copolymers and blends thereof. In some aspects, the other component includes a second polyolefin component, e.g. a polyolefin plate.

. As discussed below, the components such as textiles and uppers containing the polyolefin resin compositions exhibit poor bonding using conventional footwear bonding glues and methods. Therefore, this disclosure provides improved methods of bonding components for an article of footwear where at least the textile or upper component includes a polyolefin. The methods can create adhesive bonding with the component containing the polyolefin that meet the demanding strength and durability requirements of the footwear market.

In a specific aspect, the present invention relates to an article of footwear or a portion of an article of footwear having a textile component including a polyolefin, and a second component; wherein the first component and the second component are adhesively bonded together by a method including (i) applying a chlorinated polyolefin primer to a surface of the textile component to produce a primed surface; (ii) applying a first waterborne primer to the primed surface, prior to or contemporaneously with applying a first waterborne polyurethane adhesive to the primed surface to produce an adhesive surface; and (iii) contacting a surface of the second component to the adhesive surface to adhesively bond the second component to the textile component.

In some aspects, a surface is treated with a high-energy discharge treatment to modify the surface energy, for example a flame treatment, a corona treatment, a plasma treatment, or a combination thereof. Corona treatment (also referred to as air plasma treatment) is a surface modification technique that uses a low temperature corona discharge plasma to impart changes in the properties of a surface. The corona plasma is generated by the application of high voltage to an electrode or array of electrodes having a sharp tip. Plasma treatment can be performed in an evacuated enclosure, or chamber. The air is pumped out and a gas is allowed to flow in at low pressure before energy in the form of electrical power is applied. One benefit of plasma treatment is that it can be performed at a low temperature, meaning that heat sensitive materials can be processed.

In some aspects, an article of footwear or a portion of an article of footwear is provided having a textile component including a polyolefin, and a second component; wherein the first component and the second component are adhesively bonded together at an interface wherein the interface includes (1) a chlorinated polyolefin primer disposed on a surface of the textile component and (2) a first waterborne primer and a polyurethane adhesive disposed between the chlorinated polyolefin primer and a surface of the second component.

The present invention also provides a method of making an article of footwear, athletic apparel, sporting equipment, or portion thereof according to claim 14. In particular, methods of adhesively bonding a textile component and a second component for making an article of footwear (or a portion thereof) are provided. The methods include (i) applying a chlorinated polyolefin primer to a surface of the textile component to produce a primed surface; (ii) applying a first waterborne primer, prior to or contemporaneously with applying a first waterborne polyurethane adhesive to the primed surface to produce an adhesive surface; and (iii) contacting a surface of the second component to the adhesive surface to adhesively bond the second component to the textile component.

In various aspects, the textile component is an upper for an article of footwear. The textile component can include a fiber or a yarn containing the polyolefin. The textile can also include a first textile component which may or may not include a polyolefin and a polyolefin coating on the first textile component.

In a specific aspect, the present invention relates to an article of footwear, athletic apparel, sporting equipment, or portion thereof comprising: a textile component comprising a polyolefin, and a second component; wherein the textile component and the second component are adhesively bonded together by a method comprising: (i) applying a chlorinated polyolefin primer to a surface of the textile component to produce a primed surface; (ii) applying a first waterborne primer, prior to or contemporaneously with applying a first waterborne polyurethane adhesive to the primed surface to produce an adhesive surface; and (iii) contacting a surface of the second component to the adhesive surface to adhesively bond the second component to the textile component. The method may further comprise, prior to step (i), cleaning the surface of the textile component by one or both of (a) treating the surface with a high energy discharge and (b) applying a chemical cleaner to the surface. The textile component and the second component are optionally adhesively bonded together by a method further comprising in step (ii) applying a second waterborne polyurethane adhesive to the surface of the second component prior to the contacting step. The first waterborne polyurethane adhesive and the second waterborne polyurethane adhesive may be different. The textile component and the second component are optionally adhesively bonded together by a method further comprising in step (ii) applying a first waterborne primer to the primed surface either prior to or contemporaneously with the applying the first waterborne polyurethane adhesive; and/or applying a second waterborne primer to the surface of the second component either prior to or contemporaneously with the applying the second waterborne polyurethane adhesive. The first waterborne primer and the first waterborne polyurethane adhesive are optionally mixed together and applied contemporaneously, and/or the second waterborne primer and the second waterborne polyurethane adhesive are mixed together and applied contemporaneously.

The method optionally further comprises a high energy discharge step. The high-energy discharge treatment step optionally comprises flame treatment by exposing the surface of the textile component to a suitable oxidizing flame for a period of 0.2 seconds to 3.0 seconds, and/or corona treatment, and/or plasma treatment. In step (i) the chlorinated polyolefin primer is optionally applied to the surface at a thickness of 0.1 millimeters to 0.5 millimeters and then dried. In step (ii) the first waterborne polyurethane adhesive is optionally applied to the primed surface at a thickness of 0.1 millimeters to 0.5 millimeters. The method may further comprise, in step (i), heating the primed surface, and/or treating the primed surface with UV radiation. The method may further comprise, in step (ii), heating the adhesive surface, and/or heating the surface of the second component after applying the second waterborne polyurethane adhesive, and/or heating the primed surface after applying the first waterborne primer.

An article of footwear, athletic apparel, sporting equipment, or portion thereof comprises: a textile component and a second component adhesively bonded together at an interface; wherein the textile component comprises a polyolefin; wherein the interface comprises (1) a chlorinated polyolefin primer disposed on a surface of the textile component and (2) a first waterborne primer and a polyurethane adhesive disposed between the chlorinated polyolefin primer and a surface of the second component. The interface may further comprise a polyurethane primer disposed with the polyurethane adhesive. An adhesive peel strength between the surface of the textile component and the surface of the second component is optionally 2.0 kilograms of force per centimeter to 7.0 kilograms of force per centimeter, preferably 3.0 kilograms of force per centimeter to 7.0 kilograms of force per centimeter, more preferably 3.5 kilograms of force per centimeter to 7.0 kilograms of force per centimeter when measured according to the Adhesive Peel Strength Test.

The second component optionally comprises a polymeric material selected from the group consisting of a polyurethane, a polyamide, a polyester, a copolymer thereof, and a blend thereof, and/or a polyolefin foam or a solid polyolefin resin. The textile component optionally comprises a synthetic leather, or a fiber or a yarn comprising a polyolefin. The textile component optionally comprises a first textile component and a polyolefin coating on at least a portion of the first textile component. The first textile component optionally comprises a woven or non-woven textile or a synthetic leather. The first textile component optionally does not contain a polyolefin. The chlorinated polyolefin primer optionally comprises a modified polypropylene, and/or a polyolefin modified with functional groups comprising chlorine or chlorine and maleic anhydride functional groups, and/or a polyolefin selected from the group consisting of polyethylene, polypropylene, ethylene-propylene copolymer, ethylene-propylene-diene terpolymer, ethylene-propylene hexadiene terpolymer, ethylene-propylene-dicyclopentadiene terpolymer, ethylene-propylene-ethylidenenorbornene terpolymer, and ethylene-vinyl acetate. The chlorinated polyolefin primer optionally comprises a polyolefin having a chlorine content of 50 percent or greater, and/or a polyolefin having a molecular weight of 500 Daltons or higher.

The second component is optionally a plate having a first side and a second side, wherein the first side is configured to be ground-facing when the plate is a component of an article of footwear. The textile component is optionally adhesively bonded to the second side of the plate. The second component is optionally a midsole or a sole structure. The textile component optionally comprises an upper for an article of footwear. The textile component, the second component, or both optionally comprise a component selected from the group consisting of a plate, an upper, an insole, an outsole, a midsole, a strobel, a vamp, a tip, a foxing, a tongue, an eyestay, and a combination thereof. The polyolefin resin optionally comprises a polyolefin copolymer and an effective amount of a polymeric resin modifier. The polyolefin

resin optionally has an abrasion loss of 0.08 cubic centimeters to 0.1 cubic centimeters pursuant to ASTM D 5963-97a using the Material Sampling Procedure. The effective amount of the polymeric resin modifier is optionally an amount effective to allow the polyolefin resin to pass a flex test pursuant to the Cold Ross Flex Test using the Plaque Sampling Procedure, optionally without a significant change in an abrasion loss as compared to an abrasion loss of a second resin composition identical to the polyolefin resin except without the polymeric resin modifier when measured pursuant to ASTM D 5963-97a using the Material Sampling Procedure. The polyolefin resin optionally has an abrasion loss of 0.05 cubic centimeters to 0.1 cubic centimeters or 0.08 cubic centimeters to 0.1 cubic centimeters pursuant to ASTM D 5963-97a using the Material Sampling Procedure. The effective amount of the polymeric resin modifier is optionally an amount effective to allow the resin composition to pass a flex test pursuant to the Cold Ross Flex Test using the Plaque Sampling Procedure. The abrasion loss of the polyolefin resin is optionally 0.08 cubic centimeters to 0.1 cubic centimeters.

The polyolefin copolymer is optionally a random copolymer. The polyolefin copolymer optionally comprises a plurality of repeat units, with each of the plurality of repeat units individually derived from an alkene monomer having 1 to 6 carbon atoms, or a monomer selected from the group consisting of ethylene, propylene, 4-methyl-1-pentene, 1-butene, and a combination thereof. The polyolefin copolymer optionally comprises a plurality of repeat units each individually selected from Formula 1A-1D

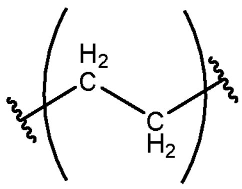
Formula 1A

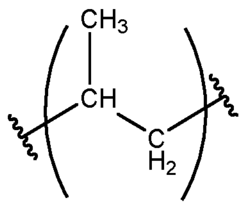
Formula 1B

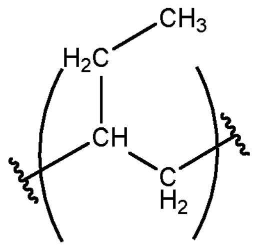
Formula 1C

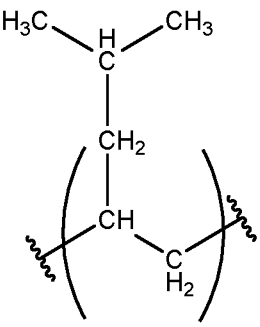
Formula 1D.

The polyolefin copolymer optionally comprises a plurality of repeat units each individually having a structure according to Formula 2

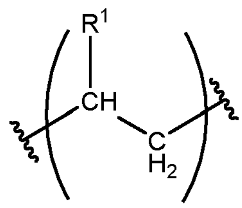
Formula 2

where $R^1$ is a hydrogen or a substituted or unsubstituted, linear or branched, $C_1$-$C_{12}$ alkyl or heteroalkyl. Polymers in the polyolefin resin may consist essentially of polyolefin copolymers. The polyolefin copolymer is optionally a random copolymer of a first plurality of repeat units and a second plurality of repeat units, and wherein each repeat unit in the first plurality of repeat units is optionally derived from ethylene and the each repeat unit in the second plurality of repeat units is optionally derived from a second olefin. The second olefin is optionally selected from the group consisting of propylene, 4-methyl-1-pentene, 1-butene, and other linear or branched terminal alkenes having 3 to 12 carbon atoms. Each of the repeat units in the first plurality of repeat units optionally has a structure according to Formula 1A, and wherein each of the repeat units in the second plurality of repeat units optionally has a structure selected from Formula 1B-1D

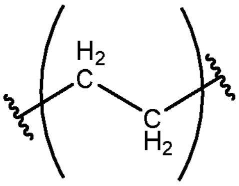

Formula 1A

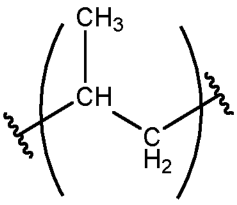

Formula 1B

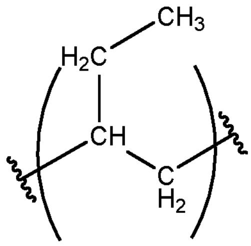

Formula 1C

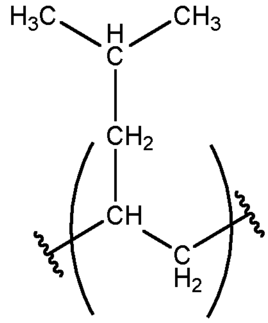

Formula 1D

.

Each of the repeat units in the first plurality of repeat units optionally has a structure according to Formula 1A, and wherein each of the repeat units in the second plurality of repeat units optionally has a structure according to Formula 2

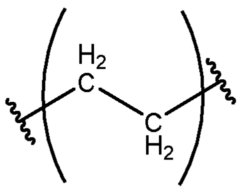

Formula 1A

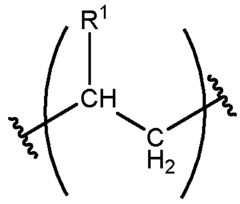

Formula 2

where $R^1$ is a hydrogen or a substituted or unsubstituted, linear or branched, $C_2$-$C_{12}$ alkyl or heteroalkyl. The polyolefin copolymer optionally comprises 80% to 99%, 85% to 99%, 90% to 99%, or 95% to 99% polyolefin repeat units by weight based upon a total weight of the polyolefin copolymer, and/or 1% to 5%, 1% to 3%, 2% to 3%, or 2% to 5% ethylene by weight based upon a total weight of the polyolefin copolymer. The polyolefin copolymer may be substantially free of polyurethanes. Polymer chains of the polyolefin copolymer may be substantially free of urethane repeat units. The resin composition may be substantially free of polymer chains including urethane repeat units. The polyolefin copolymer may be substantially free of polyamide. Polymer chains of the polyolefin copolymer may be substantially free of amide repeat units. The polyolefin resin may be substantially free of polymer chains including amide repeat units.

The polyolefin resin optionally comprises a polypropylene copolymer and an effective amount of a polymeric resin modifier. The polyolefin resin optionally has an abrasion loss of 0.05 cubic centimeters ($cm^3$) to 0.1 cubic centimeters ($cm^3$), 0.07 cubic centimeters ($cm^3$) to 0.1 cubic centimeters ($cm^3$), 0.08 cubic centimeters ($cm^3$) to 0.1 cubic centimeters ($cm^3$), or 0.08 cubic centimeters ($cm^3$) to 0.11 cubic centimeters ($cm^3$) pursuant to ASTM D 5963-97a using the Material Sampling Procedure. The effective amount of the polymeric resin modifier is optionally an amount effective to allow the resin composition to pass a flex test pursuant to the Cold Ross Flex Test using the Plaque Sampling Procedure without a significant change in an abrasion loss as compared to an abrasion loss of a second resin composition identical to the resin composition except without the polymeric resin modifier when measured pursuant to ASTM D 5963-97a using the Material Sampling Procedure. The abrasion loss of the polyolefin resin is optionally 0.05 cubic centimeters ($cm^3$) to 0.1 cubic centimeters ($cm^3$), 0.07 cubic centimeters ($cm^3$) to 0.1 cubic centimeters ($cm^3$), 0.08 cubic centimeters ($cm^3$) to 0.1 cubic centimeters ($cm^3$), or 0.08 cubic centimeters ($cm^3$) to 0.11 cubic centimeters ($cm^3$). The polypropylene copolymer is optionally a random copolymer. The polypropylene copolymer optionally comprises 80% to 99%, 85% to 99%, 90% to 99%, or 95% to 99% polypropylene repeat units by weight based upon a total weight of the polypropylene copolymer, and/or 1% to 5%, 1% to 3%, 2% to 3%, or 2% to 5% ethylene by weight based upon a total weight of the polypropylene copolymer. The polypropylene copolymer is optionally a random copolymer comprising 2% to 3% of a first plurality of repeat units by weight and 80% to 99% by weight of a second plurality of repeat units based upon a total weight of the polypropylene copolymer; wherein each of the repeat units in the first plurality of repeat units optionally has a structure according to Formula 1A and each of the repeat units in the second plurality of repeat units optionally has a structure according to Formula 1B

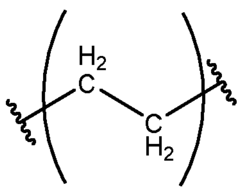 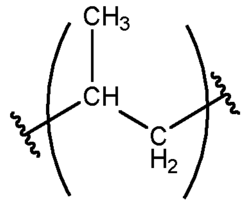

Formula 1A Formula 1B .

The polypropylene copolymer may be substantially free of polyurethane. Polymer chains of the polypropylene copolymer may be substantially free of urethane repeat units. The polyolefin resin may be substantially free of polymer chains including urethane repeat units. The polypropylene copolymer may be substantially free of polyamide. Polymer chains of the polypropylene copolymer may be substantially free of amide repeat units. Polymers in the polyolefin resin optionally consist essentially of propylene repeat units. The polyolefin resin optionally consists essentially of polypropylene copolymers. The polypropylene copolymer is optionally a random copolymer of ethylene and propylene.

The abrasion loss of the polyolefin resin is optionally within 20% of an abrasion loss of the otherwise same resin composition except without the resin modifier when measured pursuant to ASTM D 5963-97a using the Material Sampling Procedure. The polyolefin resin optionally has a % crystallization of 35%, 30%, 25%, or less when measured according to the Differential Scanning Calorimeter (DSC) Test using the Material Sampling Procedure, and/or is at least 4 percentage points less than a % crystallization of the otherwise same resin composition except without the polymeric resin modifier when measured according to the DSC Test using the Material Sampling Procedure. The effective amount of the polymeric resin modifier is optionally 5% to 30%, 5% to 25%, 5% to 20%, 5% to 15%, 5% to 10%, 10% to 15%, 10% to 20%, 10% to 25%, or 10% to 30% by weight based upon a total weight of the polyolefin resin, or is 20%, 15%, 10%, 5%, by weight, or less based upon a total weight of the polyolefin resin. The polymeric resin modifier optionally comprises 10% to 15% ethylene repeat units by weight based upon a total weight of the polymeric resin modifier. The polymeric resin modifier optionally comprises 10% to 15% repeat units according to Formula 1A by weight based upon a total weight of the polymeric resin modifier

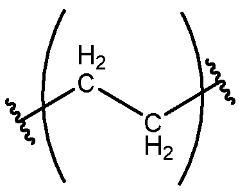

Formula 1A .

The resin composition optionally has a total ethylene repeat unit content of 3% to 7% by weight based upon a total weight of the resin composition. The polymeric resin modifier optionally has an ethylene repeat unit content of 10% to 15% by weight based upon a total weight of the polymeric resin modifier. The polymeric resin modifier is optionally a copolymer comprising isotactic repeat units derived from an olefin. The polymeric resin modifier is optionally a copolymer comprising repeat units according to Formula 1B, and wherein the repeat units according to Formula 1B are arranged in an isotactic stereochemical configuration

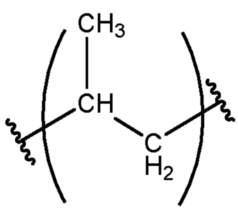

Formula 1B .

An otherwise same resin composition except without the polymeric resin modifier optionally does not pass the

cold Ross flex test using the Material Sampling Procedure. The polymeric resin modifier is optionally a copolymer comprising isotactic propylene repeat units and ethylene repeat units. The polymeric resin modifier is optionally a copolymer comprising a first plurality of repeat units and a second plurality of repeat units; wherein each of the repeat units in the first plurality of repeat units optionally has a structure according to Formula 1A and each of the repeat units in the second plurality of repeat units optionally has a structure according to Formula 1B, and wherein the repeat units in the second plurality of repeat units are arranged in an isotactic stereochemical configuration

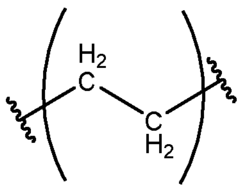

Formula 1A

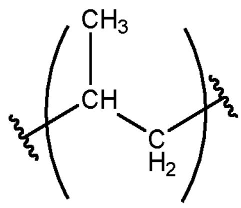

Formula 1B

.

The polymeric resin modifier is optionally a metallocene catalyzed polymer, or a metallocene catalyzed copolymer, or a metallocene catalyzed propylene copolymer.

The textile component may further comprise a clarifying agent. The clarifying agent is optionally present in an amount from 0.5 % by weight to 5 % by weight or 1.5 % by weight to 2.5% by weight based upon a total weight of the polyolefin resin. The clarifying agent is optionally selected from the group consisting of a substituted or unsubstituted dibenzylidene sorbitol, 1,3-O-2,4-bis(3,4-dimethylbenzylidene) sorbitol, 1,2,3-trideoxy-4,6:5,7-bis-O-[(4-propylphenyl)methylene], and a derivative thereof. The clarifying agent optionally comprises an acetal compound that is the condensation product of a polyhydric alcohol and an aromatic aldehyde. The polyhydric alcohol is optionally selected from the group consisting of acyclic polyols such as xylitol and sorbitol and acyclic deoxy polyols such as 1,2,3-trideoxynonitol or 1,2,3-trideoxynon-1-enitol. The aromatic aldehyde is optionally selected from the group consisting of benzaldehyde and substituted benzaldehydes.

The second component optionally comprises a plate, the plate having a first side and a second side, wherein the first side is optionally configured to be ground-facing when the plate is a component of an article of footwear; and the textile component is bonded to the plate. The textile is optionally on the second side. The article of footwear, athletic apparel, sporting equipment, or portion thereof may further comprise a lower chassis, wherein the lower chassis is optionally configured to be on the first side of the plate, or to wrap around the plate and to engage or be attached to an upper when the sole structure is a component of an article of footwear, or to attach to the upper at the bite line when the sole structure is a component of an article of footwear. The lower chassis optionally comprises a polymer selected from the group consisting of polypropylene, polypropylene/polyethylene copolymers, copolymers of ethylene and higher olefins such as polyethylene/polyoctene copolymers, copolymers thereof including one or more additional polymers, and blends thereof. The chassis optionally comprises a polyolefin, or a resin composition comprising a polyolefin and an effective amount of a polymeric resin modifier.

The textile is optionally on the first side of the plate, and wherein the textile optionally comprises a patterned or decorative textile. The textile is optionally on the first side of the plate, and wherein a bond strength of the first side to the chassis is optionally greater than a bond strength of the otherwise same plate to the otherwise same chassis using the otherwise same bonding procedure except without the textile. The textile optionally comprises a first textile on the first side of the plate and a second textile on the second side of the plate. The first textile and the second textile may be different, or the same. The sole structure is optionally configured to extend from a medial side to a lateral side of the article of footwear when the sole structure is the component of the article of footwear. A length of the plate is optionally configured to extend through a metatarsal region to a midfoot region, or through a midfoot region to a heel region, or from a toe region to a heel region of the article of footwear when the sole structure is the component of the article of footwear.

The first side of the plate optionally includes traction elements. The traction elements may be integrally formed in the plate. The traction elements optionally include the injection molded resin composition. The chassis optionally includes traction elements on a side of the chassis that is configured to be ground facing when the sole structure is a component of an article of footwear. The traction elements may be integrally formed in the chassis. The first side of the plate optionally comprises one or more openings configured to receive a detachable traction element. The chassis optionally includes one or more openings configured to receive a detachable traction element on a side of the chassis that is configured to be ground facing when the sole structure is a component of an article of footwear. The traction elements optionally comprise a second resin that is different from the polyolefin resin. The second resin optionally

comprises a polystyrene, a polyethylene, an ethylene-α-olefin copolymer, an ethylene-propylene rubber (EPDM), a polybutene, a polyisobutylene, a poly-4-methylpent-1-ene, a polyisoprene, a polybutadiene, a ethylene-methacrylic acid copolymer, an olefin elastomer, a copolymer thereof, or a blend or mixture thereof. The second resin optionally comprises 20%, 10%, or less of a polyolefin; and/or 20%, 10%, or less of polypropylene. The second resin optionally comprises an ethylene-propylene rubber (EPDM) dispersed in a polypropylene, and/or a block copolymer comprising a polystyrene block. The block copolymer optionally comprises a copolymer of styrene and one or both of ethylene and butylene.

The textile is optionally disposed on the plate by injection molding the plate onto the textile, by laminating the textile onto the plate, by welding the textile onto the plate, and/or by bonding to the plate using an adhesive. The textile is optionally selected from the group consisting of a woven textile, a non-woven textile, a knit textile, a braided textile, and a combination thereof. The textile optionally comprises one or more fibers comprising a polymer selected from the group consisting of a polyester, a polyamide, a polyolefin, a blend thereof, and a combination thereof, or a yarn comprising the fibers. A surface roughness of the surface comprising the textile is optionally greater than a surface roughness of the otherwise same surface except without the textile. The plate may further comprise a clarifying agent. The chassis is optionally configured to wrap around the plate and to engage or be attached to an upper, or to attach to the upper at the bite line when the sole structure is a component of an article of footwear. The chassis optionally comprises a polymer selected from the group consisting of polypropylene, polypropylene/polyethylene copolymers, copolymers of ethylene and higher olefins such as polyethylene/polyoctene copolymers, copolymers thereof including one or more additional polymers, and blends thereof. The chassis optionally comprises a second resin that is different from the polyolefin resin. The plate optionally comprises a resin composition comprising a polyolefin and an effective amount of a polymeric resin modifier. The plate may further comprise a clarifying agent.

The first side of the plate optionally comprises a hydrogel material. The hydrogel material optionally comprises a polyurethane hydrogel. The polyurethane hydrogel is optionally a reaction polymer of a diisocyanate with a polyol. The hydrogel material optionally comprises a polyamide hydrogel. The polyamide hydrogel is optionally a reaction polymer of a condensation of diamino compounds with dicarboxylic acids. The hydrogel material optionally comprises a polyurea hydrogel. The polyurea hydrogel is optionally a reaction polymer of a diisocyanate with a diamine. The hydrogel material optionally comprises a polyester hydrogel. The polyester hydrogel is optionally a reaction polymer of a dicarboxylic acid with a diol. The hydrogel material optionally comprises a polycarbonate hydrogel. The polycarbonate hydrogel is optionally a reaction polymer of a diol with phosgene or a carbonate diester. The hydrogel material optionally comprises a polyetheramide hydrogel. The polyetheramide hydrogel is optionally a reaction polymer of dicarboxylic acid and polyether diamine. The hydrogel material optionally comprises a hydrogel formed of addition polymers of ethylenically unsaturated monomers, or of a copolymer, wherein the copolymer is optionally a combination of two or more types of polymers within each polymer chain. The copolymer is optionally selected from the group consisting of: a polyurethane/polyurea copolymer, a polyurethane/polyester copolymer, and a polyester/polycarbonate copolymer. The sole structure optionally comprises the chassis, and wherein the chassis or a side of the chassis that is optionally configured to be ground facing when the sole structure is a component of an article of footwear comprises the hydrogel material. The hydrogel material optionally has a water cycling weight loss from 0 wt. % to 15 wt. %, or of less than 15 wt. % as measured using the Water Cycling Test with the Component Sampling Procedure. The hydrogel material optionally has a water cycling weight loss of less than 10 wt. %. The hydrogel material optionally has a dry-state thickness in the range of 0.2 mm to 2.0 mm. The hydrogel material optionally has a saturated-state thickness that is at least 100% greater than the dry-state thickness of the hydrogel material. The saturated-state thickness of the hydrogel material is optionally at least 200% greater than the dry-state thickness of the hydrogel material.

The sole structure has a ground facing side, and the hydrogel material is optionally affixed to the ground facing side of the sole structure. The textile is optionally on the ground facing side of the sole structure, and wherein the textile is optionally a knit textile, a woven textile, a non-woven textile, a braided textile, or a combination thereof. The sole structure may further include an adhesive, a primer, or a tie layer located between the ground facing side and the hydrogel material or elastomeric material. One or more of the adhesive, the primer, and the tie layer optionally include a polymer having epoxy segments, urethane segments, acrylic segments, cyanoacrylate segments, silicone segments, or any combination thereof. One or more of the polyolefin resin of the plate, the adhesive, the primer, and the tie layer optionally include a polymer having maleic anhydride functional groups. One or more of the plate, the adhesive, the primer, and the tie layer optionally include maleic anhydride. The adhesive, the primer or the tie layer optionally includes a thermoplastic polyurethane. The ground facing side of the sole structure optionally includes a texture. The ground facing side of the sole structure formed by the hydrogel material optionally has a mud pull-off force that is less than 12 Newton as determined by the Mud Pull-Off Test using the Component Sampling Procedure.

The sole component optionally comprises a plate comprising a polyolefin, and wherein the textile component may be adhesively bonded directly to the plate. The sole component optionally comprises a foam composition comprising a polyolefin resin, and wherein the textile component may be adhesively bonded directly to the foam composition. The sole component optionally comprises a thermoplastic polymer selected from the group consisting of a polyurethane, a polyamide, a polyester, a copolymer thereof, and a blend thereof; and wherein the textile component may be adhesively

bonded directly to the thermoplastic polymer. The textile component may be adhesively bonded directly to the upper. The article optionally includes a mechanical bond between the plate and the upper, and/or an adhesive bond between the surface comprising the textile and the upper, and/or a bond between the chassis and the upper. One or more of the resin composition of the plate, the resin composition of the chassis, and a polymeric material of the upper are optionally melded together.

The present invention further provides a method of making an article of footwear, athletic apparel, sporting equipment, or portion thereof, the method comprising (i) applying a chlorinated polyolefin primer to a surface of a textile component to produce a primed surface, wherein the textile component comprises a polyolefin; (ii) applying a first waterbome primer to the primed surface, prior to or contemporaneously with applying a first waterborne polyurethane adhesive to the primed surface to produce an adhesive surface; and (iii) contacting a surface of the second component to the adhesive surface to adhesively bond the second component to the textile component. The method may further comprise, prior to step (i), cleaning the surface of the textile component by one or both of (a) treating the surface with a high energy discharge and (b) applying a chemical cleaner to the surface. The method may further comprise in step (ii) applying a second waterborne polyurethane adhesive to the surface of the second component prior to the contacting step. The first waterborne polyurethane adhesive and the second waterborne polyurethane adhesive may be different. The cleaning step optionally comprises washing the surface of the textile component with water, a cleaner, or a combination thereof prior to a high-energy discharge treatment. The method may further comprise in step (ii) applying a second waterborne primer to the surface of the second component either prior to or contemporaneously with the applying the second waterborne polyurethane adhesive. The first waterborne primer and the first waterborne polyurethane adhesive are optionally mixed together and applied contemporaneously, and/or wherein the second waterborne primer and the second waterborne polyurethane adhesive are optionally mixed together and applied contemporaneously.

The high-energy discharge treatment step optionally comprises a flame treatment by exposing the surface of the textile component to a suitable oxidizing flame for a period of 0.2 seconds to 3.0 seconds, and/or corona treatment, and/or plasma treatment. The method may further comprise in step (i) applying the chlorinated polyolefin primer to the surface at a thickness of 0.1 millimeters to 0.5 millimeters and then dried, and/or in step (ii) applying the first waterborne polyurethane adhesive to the primed surface at a thickness of 0.1 millimeters to 0.5 millimeters. The second component optionally comprises a polymeric material selected from the group consisting of a polyurethane, a polyamide, a polyester, a copolymer thereof, and a blend thereof. The second component optionally comprises a second polyolefin, and/or a polymer foam or a solid polymer resin. The textile component optionally comprises a synthetic leather, and/or a fiber or a yarn comprising a polyolefin. The textile component optionally comprises a first textile component and a polyolefin coating on at least a portion of the first textile component. The first textile component optionally does not contain a polyolefin. The chlorinated polyolefin primer optionally comprises a modified polypropylene, and/or a polyolefin modified with functional groups comprising chlorine or chlorine and maleic anhydride functional groups, and/or a polyolefin selected from the group consisting of polyethylene, polypropylene, ethylene-propylene copolymer, ethylene-propylene-diene terpolymer, ethylene-propylene hexadiene terpolymer, ethylene-propylene-dicyclopentadiene terpolymer, ethylene-propylene-ethylidenenorbornene terpolymer, and ethylene-vinyl acetate. The chlorinated polyolefin primer optionally comprises a polyolefin having a chlorine content of 50 percent or greater and/or a molecular weight of 500 Daltons or higher.

The second component is optionally a plate having a first side and a second side, wherein the first side is optionally configured to be ground-facing when the plate is a component of an article of footwear. The textile component may be adhesively bonded to the second side of the plate. The second component is optionally a midsole or a sole structure. The textile component optionally comprises an upper for an article of footwear. The textile component, the second component, or both optionally comprise a component selected from the group consisting of a plate, an upper, an insole, an outsole, a midsole, a strobel, a vamp, a tip, a foxing, a tongue, an eyestay, and a combination thereof. The method may further comprise in step (i), heating the primed surface.The method may further comprise in step (ii), heating the adhesive surface, and/or heating the surface of the second component after applying the second waterborne polyurethane adhesive, and/or heating the primed surface after applying the first waterborne primer and/or in step (ii), heating the primed surface after applying the second waterborne primer. The method optionally comprises disposing a textile onto a surface of a polyolefin resin composition. The method optionally comprises injection molding the polyolefin resin composition onto the textile. The method may comprise one or more of laminating the textile onto a surface of the resin composition, welding the textile onto a surface of the resin composition, and bonding to a surface of the resin composition using an adhesive. The textile is optionally selected from the group consisting of a woven textile, a non-woven textile, a knit textile, a braided textile, and a combination thereof. The textile optionally comprises one or more fibers comprising a polymer selected from the group consisting of a polyester, a polyamide, a polyolefin, a blend thereof, and a combination thereof. The textile optionally comprises a yarn comprising the fibers. A surface roughness of the surface comprising the textile is optionally greater than a surface roughness of the otherwise same surface except without the textile.

The method optionally comprises disposing a textile onto a surface of a plate, wherein the plate optionally comprises a polyolefin resin composition. The method optionally comprises injection molding the plate onto the textile. The method optionally comprises one or more of laminating the textile onto a surface of the plate, welding the textile

onto a surface of the plate, and bonding to a surface of the plate using an adhesive. The textile is optionally selected from the group consisting of a woven textile, a non-woven textile, a knit textile, a braided textile, and a combination thereof. The textile optionally comprises one or more fibers comprising a polymer selected from the group consisting of a polyester, a polyamide, a polyolefin, a blend thereof, and a combination thereof. The textile optionally comprises a yarn comprising the fibers. A surface roughness of the surface comprising the textile is optionally greater than a surface roughness of the otherwise same surface except without the textile. The method may further comprise disposing the plate in a chassis configured to be on a ground facing side of the plate when the sole structure is a component of an article of footwear. The method may further comprise injection molding the plate into a chassis configured to be on a ground facing side of the plate when the sole structure is a component of an article of footwear. The chassis is optionally injection molded prior to injection molding the plate.

**Articles of Footwear and Portions Thereof and Methods of Making**

In some aspects, the present disclosure is directed to articles of footwear including a polyolefin textile or a textile component containing a polyolefin. Polyolefin polymers offer several advantages in terms of costs and mechanical properties, but have not been extensively used in footwear. Applicants have found that in some aspects, when polyolefin components are used in the footwear, bonding to a surface of the polyolefin component (e.g. bonding between the polyolefin textile and a foam or resin component) may be unsatisfactory. Therefore, this disclosure provides improved methods of bonding components where one of the components includes a textile component containing a polyolefin. Articles of footwear and portions thereof are provided including at least one textile component including a polyolefin, where the textile component including the polyolefin is adhesively bonded to another component to form the article of footwear or portion thereof. Not wishing to be bound by any particular theory, it is believed that the methods provided herein can lead to improved bonding, e.g. between a polyolefin textile and a plate or a midsole, particularly when the plate or midsole is formed of a different polymeric resin than the textile. Using the methods herein can, in some aspects, provide an improved surface energy for bonding and for wetting of the adhesive to the polyolefin portion of the textule, thereby increasing the strength of an adhesive bond between the textile and the second component as compared to using a plate adhesively bonded without the methods.

**FIG. 1A** is a lateral side perspective view of an exemplary cleated article of athletic footwear, for example a soccer/futbol boot **110.** As seen in **FIG. 1A,** the article of footwear **110** includes an upper **112** and a sole structure **113,** which includes an optional midsole **114** and a plate **116** . The midsole **114** is located between the plate **116** and the upper **112,** and includes a portion which extends from the region of the plate **116** configured to be ground-facing onto a medial portion of the upper **112.** As illustrated in **FIG. 1A,** the upper **112** is bonded to the midsole **114,** and the midsole **114** is in turn bonded to the plate **116.** The midsole **114** can be formed of a material which protects the upper from abrasion, or a cushioning material, or a material which both protects the upper from abrasion and provides cushioning. The midsole **114** can be formed from the same material as plate **116.** The plate **116** includes multiple traction elements **118.** When worn, traction elements **118** provide traction to a wearer so as to enhance stability. One or more of the traction elements **118** can be integrally formed with the plate, as illustrated in **FIG. 1A,** or can be removable. Optionally, one or more of the traction elements **118** can include a traction element tip **119** configured to be ground-contacting. The traction element tip **119** can be integrally formed with the traction element **118.** Optionally, the traction element tip **119** can be formed of a different material (e.g., a metal, or a polymeric material containing different polymers) than the rest of the traction element **118.** **FIG. 1B** is a lateral side elevational view of article of footwear **110.** When the article of footwear **110** is worn, the lateral side of the article **110** is generally oriented on the side facing away from the centerline of the wearer's body. **FIG. 1C** is a medial side elevational view of the article of footwear **110.** When the article of footwear **110** is worn, the medial side generally faces toward the centerline of the wearer's body. **FIG. 1D** is a top view of the article of footwear **110** (with no sock liner in place) and without a lasting board or other board-like member **115,** and further shows upper **112.** Upper **112** includes a padded collar **120.** Alternatively or in addition, the upper can include a region configured to extend up to or over a wearer's ankle (not illustrated). In at least one aspect, upper **112** is tongueless, with the upper wrapping from the medial side of the wearer's foot, over the top of the foot, and under the lateral side portion of the upper, as illustrated in **FIG. 1D**. Alternatively, the article of footwear can include a tongue (not illustrated). As illustrated in **FIG. 1A-1G,** the laces of the article of footwear **110** optionally can be located on the lateral side of the article. In other examples, the article of footwear may have a slip-on design or may include a closure system other than laces (not illustrated). **FIG. 1E** and **FIG. 1F** are, respectively, front and rear elevational views of the article of footwear **110.**

**FIG. 1G** is an exploded perspective view of the article of footwear **110** showing upper **112** and plate **116.** As seen in **FIG. 1D,** upper **112** includes a strobel **138.** As illustrated in **FIG. 1D,** the strobel **138** is roughly the shape of a wearer's foot, and closes the bottom of the upper **112,** and is stitched to other components to form the upper **112** along the periphery of the strobel **138** with stitching **185.** A lasting board or other board-like member **115** can be located above or below the strobel **138.** In some aspects, a lasting board or other board-like member can replace the strobel. The lasting board or other board-like member **115** can extend substantially the entire length of the plate, or can be present

in a portion of the length of the plate, such as, for example, in the toe region **130,** or in the midfoot region, or in the heel region. Upper **112** including strobel **138** is bonded to the upper surface **140** of midsole **114** (**FIG. 1G).** The lower surface **141** of midsole **114** can be bonded to the upper surface **152** of the plate **116** at the interface **160** using a method described herein.

In at least one aspect, plate **116** and midsole **114** are first bonded before upper **112** and/or strobel **138** is bonded to midsole **114.** However, this not necessarily the case, and in some aspects the upper **112** is bonded to midsole **114** before the plate **116 and** midsole **114** are bonded to each other. In some aspects, the article of footwear **110** can include a removable sock liner (not pictured). As is known in the art, a sock liner conforms to and lines the inner bottom surface of a shoe and is the component contacted by the sole (or socked sole) of a wearer's foot.

Midsole **114** is, in at least one aspect, a one-piece cushioning element formed from a polymeric foam. The foam can be a closed-cell polymeric foam. In at least one aspect, the polymeric foam is a polyolefin foam. In some aspects, the midsole **114** is a polyolefin foam, and the upper surface **140** of midsole **114** is adhesively bonded to the lower surface **139** of the upper **112** at an interface **161.** Other suitable polymeric foams for a cushioning element can include polyurethane (PU) foams, ethylene vinyl acetate (EVA) foams, polyethylene foams, polypropylene foams, or a blend or other combination thereof. In some aspects, midsole **114** is made from an ethylene vinyl acetate (EVA) foam. In other aspects, midsole **114** can be formed from polyurethane foam. Midsole **114** can also have a "skin" layer used for, e.g., coloring. In some aspects, the thickness of midsole **114** varies from approximately 4 to 6 millimeters in the heel region to approximately 2 to 3 millimeters in the toe region. Midsole **114** has a minimum height in forward portions of the side regions so as to be unobtrusive. Increased height in the midfoot regions provides additional support and cushioning.

**FIG. 2A** is a lateral side elevational view of an exemplary article of footwear **210** that does not have a midsole. The article of footwear **210** includes an upper **212** and an outsole, specifically a plate **216,** but without a midsole. When the article of footwear **210** is worn, the lateral side of the article **210** is generally oriented on the side facing away from the centerline of the wearer's body. The plate **216** includes multiple traction elements **218.** When worn, traction elements **218** provide traction to a wearer so as to enhance stability. One or more of the traction elements **218** can be integrally formed with the plate, as illustrated in **FIG. 2A,** or can be removable. Optionally, one or more of the traction elements **218** can include a traction element tip **219** configured to be ground-contacting. The traction element tip **219** can be integrally formed with the traction element **218.** Optionally, the traction element tip **219** can be formed of a different material (e.g., a metal, or a polymeric material containing different polymers) than the rest of the traction element **218.** **FIG. 2B** is an exploded perspective view of the article of footwear **210** showing upper **212** and plate **216.** In this aspect, the upper surface **252** of the plate **216** can be bonded directly to the lower surface **239** of the upper **212** at the interface **260** using a method described herein.

**FIG. 3A** is a lateral side perspective view of an exemplary cleated article of athletic footwear **310,** for example a soccer/futbol boot. As seen in **FIG. 3A,** the article of footwear **310** includes an upper **312** and a sole structure **313,** which includes a plate **316** and a textile **314** disposed on the upper side **352** of the plate. The textile **314** is located between the plate **316** and the upper **312.** The plate **316** includes multiple traction elements **318.** When worn, traction elements **318** provide traction to a wearer so as to enhance stability. One or more of the traction elements **318** can be integrally formed with the plate, as illustrated in **FIG. 3A,** or can be removable. Optionally, one or more of the traction elements **318** can include a traction element tip (not pictured) configured to be ground-contacting. The traction element tip can be integrally formed with the traction element **318.** Optionally, the traction element tip can be formed of a different material (e.g., a metal, or a polymeric material containing different polymers) than the rest of the traction element **318.** **FIG. 3B** is a lateral side elevational view of article of footwear **310.** When the article of footwear **310** is worn, the lateral side of the article **310** is generally oriented on the side facing away from the centerline of the wearer's body. **FIG. 3C** is a medial side elevational view of the article of footwear **310.** When the article of footwear **310** is worn, the medial side generally faces toward the centerline of the wearer's body. **FIG. 3D** is a top view of the article of footwear **310** (with no sock liner in place) and without a lasting board or other board-like member **315,** and further shows upper **312.** Upper **312** includes a padded collar **320.** Alternatively or in addition, the upper can include a region configured to extend up to or over a wearer's ankle (not illustrated). In at least one aspect, upper **312** is tongueless, with the upper wrapping from the medial side of the wearer's foot, over the top of the foot, and under the lateral side portion of the upper, as illustrated in **FIG. 3D.** Alternatively, the article of footwear can include a tongue (not illustrated). As illustrated in **FIG. 3A-3G,** the laces of the article of footwear **310** optionally can be located on the lateral side of the article. In other examples, the article of footwear may have a slip-on design or may include a closure system other than laces (not illustrated). **FIG. 3E** and **FIG. 3F** are, respectively, front and rear elevational views of the article of footwear **310.**

**FIG. 3G** is an exploded perspective view of the article of footwear **310** showing upper **312,** plate **316,** and textile **314.** As seen in **FIG. 3D,** upper **312** includes a strobel **338.** As illustrated in **FIG. 3D,** the strobel **338** is roughly the shape of a wearer's foot, and closes the bottom of the upper **312,** and is stitched to other components to form the upper **312** along the periphery of the strobel **338** with stitching **385.** A lasting board or other board-like member **315** can be located above or below the strobel **338.** In some aspects, a lasting board or other board-like member can replace the strobel.

The lasting board or other board-like member **315** can extend substantially the entire length of the plate, or can be present in a portion of the length of the plate, such as, for example, in the toe region **330,** or in the midfoot region, or in the heel region. Upper **312** including strobel **338** is bonded to the upper surface **340** of the textile **314 (FIGS. 3G-3H).** The lower surface **342** of the textile **314** can be bonded or melded to the upper surface **352** of the plate **316.** In some aspects, the lower surface **342** of the textile **314** can be mechanically bonded to the upper surface **352** of the plate **316** by melding polymers in the textile **314** and the polymeric resin of the plate **316.** Alternatively or in addition, upper **312** including strobel **338** are mechanically bonded to the upper surface **340** of the textile **314** by melding the polymeric resin of the upper **312** or strobel **338** with the polymeric resin of the plate **316.** In some aspects, the bonding can include both adhesive bonding and mechanical bonding.

In at least one aspect, plate **316** and textile **314** are first bonded before upper **312** and/or strobel **338** is bonded to textile **314.** In some aspects, the article of footwear **310** can include a removable sock liner (not pictured). As is known in the art, a sock liner conforms to and lines the inner bottom surface of a shoe and is the component contacted by the sole (or socked sole) of a wearer's foot.

**FIGS. 4A-4C** depict a fourth exemplary article of athletic footwear. **FIG. 4A** is a lateral side elevational view of the exemplary article of athletic footwear. **FIG. 4B** is an exploded perspective view of the fourth exemplary article of athletic footwear. **FIG. 4C** is a sectional view along 4-4 of the fourth exemplary article of athletic footwear. **FIG. 4A** is a lateral side elevational view of an exemplary article of footwear **410** that does not have a textile. The article of footwear **410** includes an upper **412** and a sole structure **413** having a plate **416** and a chassis **417.** The chassis **417** includes multiple traction elements **418.** The traction elements **418** can be formed entirely from the chassis **417** material or, as pictured in **FIG. 4B,** the traction elements **418** can have a corresponding inner traction element **419** that is formed in the plate **416** and encased by the chassis **417.** Optionally, one or more of the traction elements **418** can include a traction element tip (not pictured) configured to be ground-contacting. The article of footwear **410** can include a lasting board member **415** which can extend substantially the entire length of the plate **416.**

In some aspects, the sole structure may include a plate to provide rigidity, strength, and/or support without substantially adding weight. For example, some exemplary sole structure aspects may include a plate having certain features that provide resistance to vertical bending, lateral bending, and/or torsion. As depicted in **FIG. 5,** the plate **500** can include a reinforcing rib **510** longitudinally along the plate. The reinforcing rib can include a hollow structure, and thus, may provide rigidity without adding substantial amounts of extra material, and therefore maintains a low weight. The plate **500** can sit within a chassis **530,** for example with a recess **520** in the chassis **530.**

In some aspects, when the sole structure includes a plate and a chassis configured to wrap around the plate and to engage or be attached to an upper when the sole structure is a component of an article of footwear, the sole structure also includes one or more textiles. For example, a textile can be between the plate and the upper and can provide for improved bonding between the plate and the upper. A textile can also be positioned between the plate and the chassis. In aspects where the textile is between the plate and the chassis, the textile can provide for improved adhesion between the plate and the chassis and/or the textile can be a decorative or ornamental textile. In some aspects, the sole structure can include a decorative textile on the exterior or ground facing surface of the chassis. For example, as depicted in **FIGS. 6A-6C,** the article of footwear **610** includes an upper **612** and a sole structure **613** having a plate **616** and a chassis **617.** The chassis **617** includes multiple traction elements **618.** The traction elements **618** can be formed entirely from the chassis **617** material as pictured. Optionally, one or more of the traction elements **618** can include a traction element tip (not pictured) configured to be ground-contacting. A textile **614** is positioned between the plate **616** and the chassis **617.** The article of footwear **610** can include a lasting board member **615** which can extend substantially the entire length of the plate **616.**

**FIG. 7A** is a lateral side elevational view of an exemplary article of footwear **710** including separate heel plate **715,** midfoot plate **716,** and toe plate **717.** The article of footwear **710** includes an upper **712** and a heel plate **715,** midfoot plate **716,** and toe plate **717.** Each of the heel plate **715,** midfoot plate **716,** and toe plate **717** include multiple traction elements **718.** When worn, traction elements **718** provide traction to a wearer so as to enhance stability. One or more of the traction elements **718** can be integrally formed with the heel plate **715,** midfoot plate **716,** and/or toe plate **717,** as illustrated in **FIG. 7A,** or can be removable. **FIG. 7B** is an exploded perspective view of the article of footwear **710** showing upper **712,** heel plate **715,** midfoot plate **716,** and toe plate **717.** In this aspect, the upper surface **725** of the heel plate **715** can include a heel textile **735.** The upper surface **727** of the toe plate **717** can include a toe textile **737.** Likewise, the upper surface **726** of the midfoot plate **716** includes a midfoot textile **736.** The textiles can provide for improved bonding between upper **712,** heel plate **715,** midfoot plate **716,** and toe plate **717.**

In some aspects an article of footwear or portion thereof is provided formed from two or more components that are adhesively bonded where at least one of the components is a textile component including a polyolefin. In some aspects, the textile component is adhesively bonded to a second component including a midsole or a plate. In some aspects, the second component includes a plate, an insole, an outsole, a midsole, a strobel, a vamp, a tip, a foxing, a tongue, an eyestay, or a combination thereof. In at least some aspects, an adhesive peel strength between the surface of the textile component and the surface of the second component is 1.0 kilograms of force per centimeter to 10.0

kilograms of force per centimeter, 2.0 kilograms of force per centimeter to 8.0 kilograms of force per centimeter, 2.0 kilograms of force per centimeter to 6.0 kilograms of force per centimeter, 2.5 kilograms of force per centimeter to 6.0 kilograms of force per centimeter, or 3.2 kilograms of force per centimeter to 6.0 kilograms of force per centimeter when measured according to the Adhesive Peel Strength Test.

The methods can be used to adhesively bond to a variety of second components (i.e. to a variety of materials). In some aspects, the second component includes a polyurethane (PU) foams, ethylene vinyl acetate (EVA) foams, polyethylene foams, polypropylene foams, or a blend or other combination thereof.

In some aspects, the article of footwear or portion thereof includes a textile component containing a polyolefin, and a second component; wherein the first component and the second component are adhesively bonded together by a method including (i) applying a chlorinated polyolefin primer to a surface of the textile component to produce a primed surface; (ii) applying a first waterborne polyurethane adhesive to the primed surface to produce an adhesive surface; and (iii) contacting a surface of the second component to the adhesive surface to adhesively bond the second component to the textile component. The method can further include prior to step (i), cleaning the surface of the textile component by one or both of (a) treating the surface with a high energy discharge and (b) applying a chemical cleaner to the surface. The high-energy discharge treatment step in step (i) can include flame treatment by exposing the surface of the first component to a suitable oxidizing flame for a period of 0.1 seconds to 10.0 seconds, 0.2 seconds to 3.0 seconds, or 0.3 seconds to 2.0 seconds. The high-energy discharge treatment step in step (i) can include flame treatment, corona treatment, plasma treatment, or a combination thereof. In step (ii) the chlorinated polyolefin primer can be applied to the treated surface at a thickness of 0.05 millimeters to 1.5 millimeters, 0.1 millimeters to 1.0 millimeters, 0.1 millimeters to 0.5 millimeters, or 0.2 millimeters to 0.4 millimeters and then dried.

The method can further include in step (iii) applying a second waterborne polyurethane adhesive to the surface of the second component prior to the contacting step. The first waterborne polyurethane adhesive and the second waterborne polyurethane adhesive can be the same or different. The method can further include in step (iii) applying a first waterborne primer to the primed surface either prior to or contemporaneously with the applying the first waterborne polyurethane adhesive. The first waterborne primer and the first waterborne polyurethane adhesive can be mixed together and applied contemporaneously. The second waterborne primer and the second waterborne polyurethane adhesive can be mixed together and applied contemporaneously. In step (iii) the first waterborne polyurethane adhesive can be applied to the primed surface at a thickness of 0.05 millimeters to 1.5 millimeters, 0.1 millimeters to 1.0 millimeters, 0.1 millimeters to 0.5 millimeters, or 0.2 millimeters to 0.4 millimeters.

The methods can include applying heat (a) to the primed surface of the first component after applying the chlorinated polyolefin primer, (b) to the adhesive surface of the first component after applying the first waterborne polyurethane adhesive, (c) to the surface of the second component after applying the second waterborne polyurethane adhesive, (d) to the primed surface after applying the first waterborne primer, or (e) any combination thereof. The applying heat can include applying heat, e.g. using an oven, at a temperature of 45°C to 75°C or 60°C.

The methods include bonding a surface of a first component and a surface of a second component using a waterborne polyurethane adhesive. In some aspects, a waterborne polyurethane adhesive is applied to the surface of the first component. In some aspects, a second waterborne polyurethane adhesive can be applied to the surface of the second component prior to the contacting step. The first waterborne polyurethane adhesive and the second waterborne polyurethane adhesive can be the same or different.

In some aspects, the article of footwear or portion thereof includes a textile component containing a polyolefin resin, and a second component; wherein the textile component and the second component are adhesively bonded together at an interface. The interface can include (1) a chlorinated polyolefin primer disposed on a surface of the textile component and (2) a polyurethane adhesive disposed between the chlorinated polyolefin primer and a surface of the second component. Applicants have found that in some aspects a chlorinated polyolefin primer can create an improved surface for bonding to a component containing a polyolefin such that the adhesive bond formed is capable of meeting the adhesive strength and durability demands of the footwear industry. The includes, in some aspects, an adhesive peel strength between the surface of the first component and the surface of the second component that is at least 2.0 kilograms of force per centimeter, at least 2.5 kilograms of force per centimeter, at least 3.0 kilograms of force per centimeter, or at least 3.2 kilograms of force per centimeter when measured according to the Adhesive Peel Strength Test. The interface can further include a polyurethane primer disposed with the polyurethane adhesive.

An exemplary interface **800** adhesively bonding a first component **810** and a second component **820** is depicted in **FIG. 8.** A chlorinated polyolefin primer **830** disposed on a surface **811** of the first component **810.** The first component **810** includes a polyolefin resin or other polyolefin material. The chlorinated polyolefin primer **830** can provide an improved surface energy for bonding and for wetting of the adhesive to the polyolefin plate as compared to the surface **811** of the first component **810** except without the chlorinated polyolefin primer, thereby increasing the adhesive strength of the interface **800.** A polyurethane adhesive **840** is disposed between the chlorinated polyolefin primer **830** and a surface **821** of the second component **820.** The polyurethane adhesive **840** can further include a polyurethane primer disposed with the polyurethane adhesive **840.** In some aspects, the surface **821** of the second component **820** can also have a

second chlorinated polyolefin primer **850,** for example when the second component **820** also includes a polyolefin.

The methods and interfaces include a chlorinated polyolefin primer or the use thereof. The chlorinated polyolefin primer can include a modified polypropylene. The chlorinated polyolefin primer can include a polyolefin modified with functional groups such as chlorine or chlorine and maleic anhydride functional groups. The chlorinated polyolefin primer can include a polyolefin selected from the group consisting of polyethylene, polypropylene, ethylene-propylene copolymer, ethylene-propylene-diene terpolymer, ethylene-propylene hexadiene terpolymer, ethylene-propylene-dicyclopentadiene terpolymer, and ethylene-propylene-ethylidenenorbornene terpolymer. The chlorinated polyolefin primer can include a polyolefin having a chlorine content of 20 percent, 30 percent, 40 percent, 50 percent, 60 percent, or greater. The chlorinated polyolefin primer can include a polyolefin having a molecular weight of 300 Daltons, 400 Daltons, 500 Daltons, 550 Daltons, or higher. The chlorinated polyolefin primer can be applied in a suitable solvent such as ethyl acetate, methyl ethyl ketone, acetone, a combination thereof, or a combination with one or more additional solvents. The amount of chlorinated polyolefin in the chlorinated polyolefin primer can be 0.5 wt% to 40 wt% or 1 wt% to 5 wt%, with the remainder being solvent, optionally including one or more additives.

In some aspects, the sole structures include the plate and a textile disposed on one or more surfaces of the plate. Not wishing to be bound by any particular theory, it is believed that including the textile disposed on one or more surfaces of the plate can lead to improved bonding between the plate and the upper, particularly when the upper is formed of a different polymeric resin than the plate. In one example, using a textile comprising fibers or yarns formed of a polymeric material having a different surface energy as compared to the surface energy of the polyolefin resin of the plate may facilitate bonding between an upper which comprises a polymeric material having a surface energy which is closer to the surface energy of the textile than to the surface energy of the polyolefin resin of the plate, thereby increasing the strength of a bond between the plate and the upper as compared to using a plate without the textile. Using a textile can provide a textured surface having a greater surface area, providing greater opportunity to form mechanical bonds between the upper and the plate, thereby increasing the strength of a bond between the plate and the upper as compared to using a plate without the textile. As an additional benefit, the textile can be used to provide a decorative or stylistic surface in some aspects. In some aspects, the surface comprising the textile is adhesively bonded to a second component using according to the aspects described elsewhere herein.

The sole structures can include a textile on one or more surfaces of the plate. For instance, when the plate has a first side and a second side, the first side can be configured to be ground-facing when the plate is a component of an article of footwear and the second side can be configured to be upward facing. In some aspects, the textile is on one or both of the first side and the second side. In some aspects, one or both of the first side and the second side are adhesively bonded to a second component according to the aspects described herein. The textile and/or the adhesive bond (e.g. according to the various aspects described herein) can provide for improved bonding between the plate and other components of the sole structure, e.g. between the plate and a chassis. The textile can also provide for improved adhesive bonding between the plate and the upper when the sole structure is a component of an article of footwear. In some aspects, the textile is a patterned or decorative textile.

In some aspects, the sole structures include a chassis. In some aspects, the chassis is in combination with one or more textiles in the sole structure, while in some aspects the sole structure includes a chassis and no textile. The chassis can be configured to be on the first side or ground facing side of the plate. In some aspects, the chassis is configured to wrap around the plate and to engage or be attached to an upper when the sole structure is a component of an article of footwear. The chassis can attach to the upper at the bite line. In some aspects, the adhesive bond or interface is between the plate and the chassis, optionally including a textile disposed between or integrated into the plate and/or the chassis.

In some aspects, the traction elements are made from the same or nearly the same polyolefin resin composition as the plate. In other aspects, the traction elements are made from a second resin that is different from the polyolefin resin. In some aspects, the sole structure includes a chassis and the chassis is made from the second resin. The second resin can include a polystyrene, a polyethylene, an ethylene-$\alpha$-olefin copolymer, an ethylene-propylene rubber (EPDM), a polybutene, a polyisobutylene, a poly-4-methylpent-1-ene, a polyisoprene, a polybutadiene, a ethylene-methacrylic acid copolymer, an olefin elastomer, a copolymer thereof, or a blend or mixture thereof. In some aspects, the second resin includes 20%, 10%, or less of a polyolefin. The second resin can include 20%, 10%, or less of polypropylene. The second resin can include an ethylene-propylene rubber (EPDM) dispersed in a polypropylene. The second resin can include a a block copolymer comprising a polystyrene block. The block copolymer comprises can be, for example. a copolymer of styrene and one or both of ethylene and butylene. In general, the second resin can be any resin that is compatible with the polyolefin resin and that has the appropriate durability and mechanical properties.

In particular, the second resin (e.g. a polystyrene, a polyethylene, an ethylene-$\alpha$-olefin copolymer, an ethylene-propylene rubber (EPDM), a polybutene, a polyisobutylene, a poly-4-methylpent-1-ene, a polyisoprene, a polybutadiene, a ethylene-methacrylic acid copolymer, an olefin elastomer, a copolymer thereof, or a blend or mixture thereof) have been found to bond well to the resin compositions of the present disclosure.

Additionally, second resins containing an ethylene-propylene rubber (EPDM) dispersed in a polypropylene, or

containing a block copolymer having a polystyrene block; and wherein the block copolymer includes a copolymer of styrene and one or both of ethylene and butylene, have been found to be particularly useful in ground-contacting portions of traction elements, as these compositions both bond well to the resin compositions of the present disclosure, and can provide an even higher level of abrasion-resistance than the resin compositions of the present disclosure, which may be desired in the ground-contacting portions of traction elements.

In some aspects, it can be beneficial to include a clarifying agent in the plate (in the polyolefin resin) and/or, when a chassis is present, in the chassis. The clarifying agent can allow for clear visibility of a textile through the plate. The clarifying agent can be present in any suitable amount to provide sufficient optical clarity of the final plate or sole structure. In some aspects, the clarifying agent is present in an amount from 0.5 % by weight to 5 % by weight or 1.5 % by weight to 2.5% by weight based upon a total weight of the polyolefin resin. The clarifying agent can include those selected from the group of substituted or unsubstituted dibenzylidene sorbitol, 1,3-O-2,4-bis(3,4-dimethylbenzylidene) sorbitol, 1,2,3-trideoxy-4,6:5,7-bis-O-[(4-propylphenyl)methylene], and a derivative thereof. The clarifying agent can include an acetal compound that is the condensation product of a polyhydric alcohol and an aromatic aldehyde. The polyhydric alcohol can include those selected from the group consisting of acyclic polyols such as xylitol and sorbitol and acyclic deoxy polyols such as 1,2,3-trideoxynonitol or 1,2,3-trideoxynon-1-enitol. The aromatic aldehyde can include those selected from the group consisting of benzaldehyde and substituted benzaldehydes.

**Polyolefin Textile Components**

A variety of polyolefin textiles are provided, i.e. a textile component including a polyolefin homo- or co-polymer. The textile component can have the abrasion resistance and flexural durability suitable for use in the articles of footwear and components described above. In some aspects, a textile component is provided including a polyolefin polymer, and an effective amount of a polymeric resin modifier. The effective amount of the resin modifier provides improved flexural durability while maintaining a suitable abrasion resistance. For example, in some aspects the effective amount of the polymeric resin modifier is an amount effective to allow the textile composition to pass a flex test pursuant to the Cold Ross Flex Test using the Plaque Sampling Procedure. At the same time, the resin composition can still have a suitable abrasion loss when measured pursuant to ASTM D 5963-97a using the Material Sampling Procedure. In some aspects, the otherwise same textile composition except without the polymeric resin modifier does not pass the cold Ross flex test using the Material Sampling Procedure.

The textile component can include a thread, fiber, or yarn including a polyolefin. A yarn can include a plurality of substantially aligned filaments, wherein at least some of the filaments are polyolefin polymers. A thread can include a first yarn and a second yarn. The first yarn includes a plurality of polyolefin filaments. The second yarn can be twisted with the first yarn. The textile component can be a woven textile, a non-woven textile, a knitted textile, or any combination thereof. A woven textile can include a warp strand and a weft strand. The warp strand extends in a first direction and includes a plurality of substantially aligned filaments. The weft strand extends in a second direction that is substantially perpendicular to the first direction. One or both of the warp strand and the weft strand can include a polyolefin polymer. A knitted textile can include at least one strand that forms a plurality of interlocked loops arranged in courses and wales. The strand can include a polyolefin.

The textile component can include a variety of polyolefin polymers. The polymers can be alternating copolymers or random copolymers or block copolymers or graft copolymers. In some aspects, the polymers are random copolymers. In some aspects, the polymer includes a plurality of repeat units, with each of the plurality of repeat units individually derived from an alkene monomer having 1 to 6 carbon atoms. In other aspects, the polymer includes a plurality of repeat units, with each of the plurality of repeat units individually derived from a monomer selected from the group consisting of ethylene, propylene, 4-methyl-1-pentene, 1-butene, 1-octene, and a combination thereof. In some aspects, the polyolefin copolymer includes a plurality of repeat units each individually selected from Formula 1A-1D. In some aspects, the polyolefin copolymer includes a first plurality of repeat units having a structure according to Formula 1A, and a second plurality of repeat units having a structure selected from Formula 1B-1D.

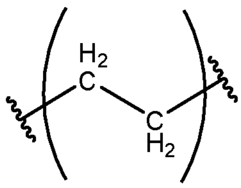 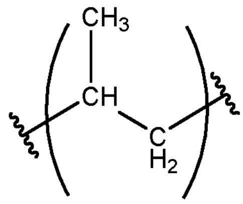 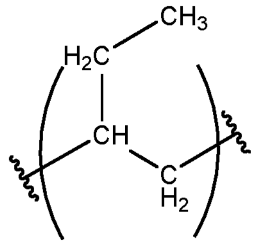 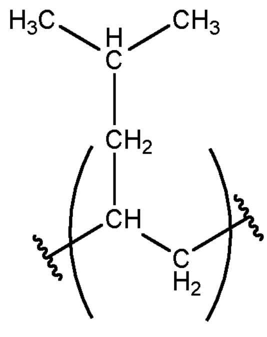

Formula 1A Formula 1B Formula 1C Formula 1D

In some aspects, the polyolefin polymer includes a plurality of repeat units each individually having a structure according to Formula 2

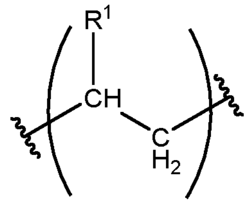

Formula 2

where $R^1$ is a hydrogen or a substituted or unsubstituted, linear or branched, $C_1$-$C_{12}$ alkyl. $C_1$-$C_6$ alkyl, $C_1$-$C_3$ alkyl, $C_1$-$C_{12}$ heteroalkyl, $C_1$-$C_6$ heteroalkyl, or $C_1$-$C_3$ heteroalkyl. In some aspects, each of the repeat units in the first plurality of repeat units has a structure according to Formula 1A above, and each of the repeat units in the second plurality of repeat units has a structure according to Formula 2 above.

In some aspects, the polyolefin polymer is a random copolymer of a first plurality of repeat units and a second plurality of repeat units, and each repeat unit in the first plurality of repeat units is derived from ethylene and the each repeat unit in the second plurality of repeat units is derived from a second olefin. In some aspects, the second olefin is an alkene monomer having 1 to 6 carbon atoms. In other aspects, the second olefin includes propylene, 4-methyl-1-pentene, 1-butene, or other linear or branched terminal alkenes having 3 to 12 carbon atoms. In some aspects, the polyolefin copolymer contains 80% to 99%, 85% to 99%, 90% to 99%, or 95% to 99% polyolefin repeat units by weight based upon a total weight of the polyolefin copolymer. In some aspects, the polyolefin copolymer consists essentially of polyolefin repeat units. In some aspects, polymers in the textile component consist essentially of polyolefin copolymers.

The polyolefin copolymer can include ethylene, i.e. can include repeat units derived from ethylene such as those in Formula 1A. In some aspects, the polyolefin copolymer includes 1% to 5%,1% to 3%, 2% to 3%, or 2% to 5% ethylene by weight based upon a total weight of the polyolefin copolymer.

The textile components can be made without the need for polyurethanes and/or without the need for polyamides. For example, in some aspects the polyolefin copolymer is substantially free of polyurethanes. In some aspects, the polymer chains of the polyolefin copolymer are substantially free of urethane repeat units. In some aspects, the textile component is substantially free of polymer chains including urethane repeat units. In some aspects, the polyolefin copolymer is substantially free of polyamide. In some aspects, the polymer chains of the polyolefin copolymer are substantially free of amide repeat units. In some aspects, the textile component is substantially free of polymer chains including amide repeat units.

In some aspects, the polyolefin copolymer includes polypropylene or is a polypropylene copolymer. In some aspects, the polymeric component of the textile component (i.e., the portion of the resin composition that is formed by all of the polymers present in the composition) consists essentially of polypropylene copolymers. In some aspects the textile component is provided including a polypropylene copolymer, and an effective amount of a polymeric resin modifier, wherein the textile component has an abrasion loss as described above, and wherein the effective amount of the polymeric resin modifier is an amount effective to allow the textile component to pass a flex test pursuant to the Cold Ross Flex Test using the Plaque Sampling Procedure. In some aspects, the effective amount of the polymeric resin modifier is an amount effective to allow the textile component to pass a flex test pursuant to the Cold Ross Flex Test using the Plaque Sampling Procedure without a significant change in an abrasion loss as compared to an abrasion loss of a second resin

composition identical to the resin composition except without the polymeric resin modifier when measured pursuant to ASTM D 5963-97a using the Material Sampling Procedure.

The polypropylene copolymer can include a random copolymer, e.g. a random copolymer of ethylene and propylene. The polypropylene copolymer can include 80% to 99%, 85% to 99%, 90% to 99%, or 95% to 99% propylene repeat units by weight based upon a total weight of the polypropylene copolymer. In some aspects, the polypropylene copolymer includes 1% to 5%, 1% to 3%, 2% to 3%, or 2% to 5% ethylene by weight based upon a total weight of the polypropylene copolymer. In some aspects, the polypropylene copolymer is a random copolymer including 2% to 3% of a first plurality of repeat units by weight and 80% to 99% by weight of a second plurality of repeat units based upon a total weight of the polypropylene copolymer; wherein each of the repeat units in the first plurality of repeat units has a structure according to Formula 1A above and each of the repeat units in the second plurality of repeat units has a structure according to Formula 1B above.

In some aspects, the effective amount of the polymeric resin modifier is 5% to 30%, 5% to 25%, 5% to 20%, 5% to 15%, 5% to 10%, 10% to 15%, 10% to 20%, 10% to 25%, or 10% to 30% by weight based upon a total weight of the resin composition. In some aspects, the effective amount of the polymeric resin modifier is 20%, 15%, 10%, 5%, or less by weight based upon a total weight of the resin composition.

The polymeric resin modifier can include a variety of exemplary resin modifiers described herein. In some aspects, the polymeric resin modifier is a metallocene catalyzed copolymer primarily composed of isotactic propylene repeat units with 11% by weight-15% by weight of ethylene repeat units based on a total weight of metallocene catalyzed copolymer randomly distributed along the copolymer. In some aspects, the polymeric resin modifier includes 10% to 15% ethylene repeat units by weight based upon a total weight of the polymeric resin modifier. In some aspects, the polymeric resin modifier includes 10% to 15% repeat units according to Formula 1A above by weight based upon a total weight of the polymeric resin modifier. In some aspects, the polymeric resin modifier is a copolymer of repeat units according to Formula 1B above, and the repeat units according to Formula 1B are arranged in an isotactic stereochemical configuration.

In some aspects, the polymeric resin modifier is a copolymer containing isotactic propylene repeat units and ethylene repeat units. In some aspects, the polymeric resin modifier is a copolymer including a first plurality of repeat units and a second plurality of repeat units; wherein each of the repeat units in the first plurality of repeat units has a structure according to Formula 1A above and each of the repeat units in the second plurality of repeat units has a structure according to Formula 1B above, and wherein the repeat units in the second plurality of repeat units are arranged in an isotactic stereochemical configuration.

**Polyolefin Resin Compositions**

A variety of polyolefin resin compositions are provided, i.e. a resin composition including a polyolefin homo- or co-polymer. The resin compositions can have the abrasion resistance and flexural durability suitable for use in the articles of footwear and components described above. In some aspects, a resin composition is provided including a polyolefin polymer, and an effective amount of a polymeric resin modifier. The effective amount of the resin modifier provides improved flexural durability while maintaining a suitable abrasion resistance. For example, in some aspects the effective amount of the polymeric resin modifier is an amount effective to allow the resin composition to pass a flex test pursuant to the Cold Ross Flex Test using the Plaque Sampling Procedure. At the same time, the resin composition can still have a suitable abrasion loss when measured pursuant to ASTM D 5963-97a using the Material Sampling Procedure. In some aspects, the otherwise same resin composition except without the polymeric resin modifier does not pass the cold Ross flex test using the Material Sampling Procedure.

The polymeric resin modifier can provide improved flexural strength, toughness, creep resistance, or flexural durability without a significant loss in the abrasion resistance. In some aspects, a resin composition is provided including a polyolefin copolymer, and an effective amount of a polymeric resin modifier, wherein the effective amount of the polymeric resin modifier is an amount effective to allow the resin composition to pass a flex test pursuant to the Cold Ross Flex Test using the Plaque Sampling Procedure without a significant change in an abrasion loss as compared to an abrasion loss of a second resin composition identical to the resin composition except without the polymeric resin modifier when measured pursuant to ASTM D 5963-97a using the Material Sampling Procedure. In other words, in some aspects, the effective amount of the polymeric resin modifier is an amount which is sufficient to produce a resin composition that does not stress whiten or crack during 150,000 flex cycles of the Cold Ross Flex test, while the abrasion resistance of the resin composition has not been significantly degraded and thus is not significantly different than the abrasion resistance of a comparator resin composition which is otherwise identical to the resin composition except that it is free of the polymeric resin modifier.

In some aspects, the resin composition has an abrasion loss of 0.07 cubic centimeters ($cm^3$) to 0.1 cubic centimeters ($cm^3$), 0.08 cubic centimeters ($cm^3$) to 0.1 cubic centimeters ($cm^3$), or 0.08 cubic centimeters ($cm^3$) to 0.11 cubic centimeters ($cm^3$) pursuant to ASTM D 5963-97a using the Material Sampling Procedure. In some aspects, the

resin composition has no significant change in the abrasion loss as compared to an abrasion loss of a second resin composition identical to the resin composition except without the polymeric resin modifier when measured pursuant to ASTM D 5963-97a using the Material Sampling Procedure. A change is abrasion loss, as used herein, is said to not be significant when the change is 30%, 25%, 20%, 15%, 10%, or less when measured pursuant to ASTM D 5963-97a using the Material Sampling Procedure.

The resin compositions can include a variety of polyolefin polymers. The polymers can be alternating copolymers or random copolymers or block copolymers or graft copolymers. In some aspects, the polymers are random copolymers. In some aspects, the polymer includes a plurality of repeat units, with each of the plurality of repeat units individually derived from an alkene monomer having 1 to 6 carbon atoms. In other aspects, the polymer includes a plurality of repeat units, with each of the plurality of repeat units individually derived from a monomer selected from the group consisting of ethylene, propylene, 4-methyl-1-pentene, 1-butene, 1-octene, and a combination thereof. In some aspects, the polyolefin copolymer includes a plurality of repeat units each individually selected from Formula 1A-1D. In some aspects, the polyolefin copolymer includes a first plurality of repeat units having a structure according to Formula 1A, and a second plurality of repeat units having a structure selected from Formula 1B-1D.

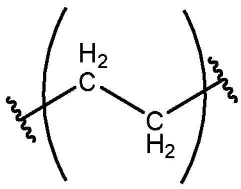
Formula 1A

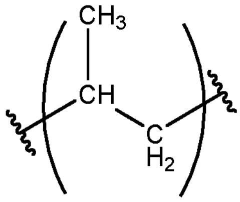
Formula 1B

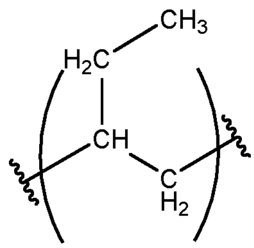
Formula 1C

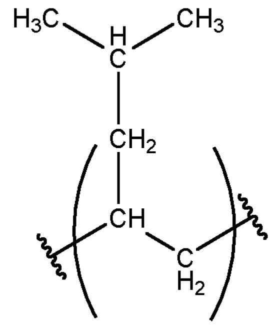
Formula 1D

In some aspects, the polyolefin polymer includes a plurality of repeat units each individually having a structure according to Formula 2

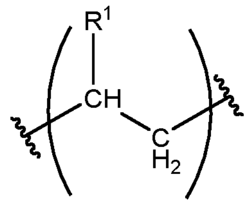
Formula 2

where $R^1$ is a hydrogen or a substituted or unsubstituted, linear or branched, $C_1$-$C_{12}$ alkyl. $C_1$-$C_6$ alkyl, $C_1$-$C_3$ alkyl, $C_1$-$C_{12}$ heteroalkyl, $C_1$-$C_6$ heteroalkyl, or $C_1$-$C_3$ heteroalkyl. In some aspects, each of the repeat units in the first plurality of repeat units has a structure according to Formula 1A above, and each of the repeat units in the second plurality of repeat units has a structure according to Formula 2 above.

In some aspects, the polyolefin polymer is a random copolymer of a first plurality of repeat units and a second plurality of repeat units, and each repeat unit in the first plurality of repeat units is derived from ethylene and the each repeat unit in the second plurality of repeat units is derived from a second olefin. In some aspects, the second olefin is an alkene monomer having 1 to 6 carbon atoms. In other aspects, the second olefin includes propylene, 4-methyl-1-pentene, 1-butene, or other linear or branched terminal alkenes having 3 to 12 carbon atoms. In some aspects, the polyolefin copolymer contains 80% to 99%, 85% to 99%, 90% to 99%, or 95% to 99% polyolefin repeat units by weight based upon a total weight of the polyolefin copolymer. In some aspects, the polyolefin copolymer consists essentially of polyolefin repeat units. In some aspects, polymers in the resin composition consist essentially of polyolefin copolymers.

The polyolefin copolymer can include ethylene, i.e. can include repeat units derived from ethylene such as those in Formula 1A. In some aspects, the polyolefin copolymer includes 1% to 5%, 1% to 3%, 2% to 3%, or 2% to 5% ethylene by weight based upon a total weight of the polyolefin copolymer.

The resin compositions can be made without the need for polyurethanes and/or without the need for polyamides.

For example, in some aspects the polyolefin copolymer is substantially free of polyurethanes. In some aspects, the polymer chains of the polyolefin copolymer are substantially free of urethane repeat units. In some aspects, the resin composition is substantially free of polymer chains including urethane repeat units. In some aspects, the polyolefin copolymer is substantially free of polyamide. In some aspects, the polymer chains of the polyolefin copolymer are substantially free of amide repeat units. In some aspects, the resin composition is substantially free of polymer chains including amide repeat units.

In some aspects, the polyolefin copolymer includes polypropylene or is a polypropylene copolymer. In some aspects, the polymeric component of the resin composition (i.e., the portion of the resin composition that is formed by all of the polymers present in the composition) consists essentially of polypropylene copolymers. In some aspects the resin composition is provided including a polypropylene copolymer, and an effective amount of a polymeric resin modifier, wherein the resin composition has an abrasion loss as described above, and wherein the effective amount of the polymeric resin modifier is an amount effective to allow the resin composition to pass a flex test pursuant to the Cold Ross Flex Test using the Plaque Sampling Procedure. In some aspects, the effective amount of the polymeric resin modifier is an amount effective to allow the resin composition to pass a flex test pursuant to the Cold Ross Flex Test using the Plaque Sampling Procedure without a significant change in an abrasion loss as compared to an abrasion loss of a second resin composition identical to the resin composition except without the polymeric resin modifier when measured pursuant to ASTM D 5963-97a using the Material Sampling Procedure.

The polypropylene copolymer can include a random copolymer, e.g. a random copolymer of ethylene and propylene. The polypropylene copolymer can include 80% to 99%, 85% to 99%, 90% to 99%, or 95% to 99% propylene repeat units by weight based upon a total weight of the polypropylene copolymer. In some aspects, the polypropylene copolymer includes 1% to 5%, 1% to 3%, 2% to 3%, or 2% to 5% ethylene by weight based upon a total weight of the polypropylene copolymer. In some aspects, the polypropylene copolymer is a random copolymer including 2% to 3% of a first plurality of repeat units by weight and 80% to 99% by weight of a second plurality of repeat units based upon a total weight of the polypropylene copolymer; wherein each of the repeat units in the first plurality of repeat units has a structure according to Formula 1A above and each of the repeat units in the second plurality of repeat units has a structure according to Formula 1B above.

The combination of abrasion resistance and flexural durability can be related to the overall crystallinity of the resin composition. In some aspects, the resin composition has a percent crystallization (% crystallization) of 45%, 40%, 35%, 30%, 25% or less when measured according to the Differential Scanning Calorimeter (DSC) Test using the Material Sampling Procedure. It has been found that adding the polymeric resin modifier to the resin composition in an amount which only slightly decreases the % crystallinity of the resin composition as compared to an otherwise identical resin composition except without the polymeric resin modifier can result in resin compositions which are able to pass the Cold Ross Flex test while maintaining a relatively low abrasion loss. In some aspects, the polymeric resin modifier leads to a decrease in the percent crystallinity (% crystallinity) of the resin composition. In some aspects, the resin composition has a percent crystallization (% crystallization) that is at least 6, at least 5, at least 4, at least 3, or at least 2 percentage points less than a percent crystallization (% crystallization) of the otherwise same resin composition except without the polymeric resin modifier when measured according to the Differential Scanning Calorimeter (DSC) Test using the Material Sampling Procedure.

In some aspects, the effective amount of the polymeric resin modifier is 5% to 30%, 5% to 25%, 5% to 20%, 5% to 15%, 5% to 10%, 10% to 15%, 10% to 20%, 10% to 25%, or 10% to 30% by weight based upon a total weight of the resin composition. In some aspects, the effective amount of the polymeric resin modifier is 20%, 15%, 10%, 5%, or less by weight based upon a total weight of the resin composition.

The polymeric resin modifier can include a variety of exemplary resin modifiers described herein. In some aspects, the polymeric resin modifier is a metallocene catalyzed copolymer primarily composed of isotactic propylene repeat units with 11% by weight-15% by weight of ethylene repeat units based on a total weight of metallocene catalyzed copolymer randomly distributed along the copolymer. In some aspects, the polymeric resin modifier includes 10% to 15% ethylene repeat units by weight based upon a total weight of the polymeric resin modifier. In some aspects, the polymeric resin modifier includes 10% to 15% repeat units according to Formula 1A above by weight based upon a total weight of the polymeric resin modifier. In some aspects, the polymeric resin modifier is a copolymer of repeat units according to Formula 1B above, and the repeat units according to Formula 1B are arranged in an isotactic stereochemical configuration.

In some aspects, the polymeric resin modifier is a copolymer containing isotactic propylene repeat units and ethylene repeat units. In some aspects, the polymeric resin modifier is a copolymer including a first plurality of repeat units and a second plurality of repeat units; wherein each of the repeat units in the first plurality of repeat units has a structure according to Formula 1A above and each of the repeat units in the second plurality of repeat units has a structure according to Formula 1B above, and wherein the repeat units in the second plurality of repeat units are arranged in an isotactic stereochemical configuration.

**Hydrogel Materials**

In an aspect, the hydrogel material comprises a polyurethane hydrogel. The hydrogel material can comprise a polyamide hydrogel, a polyurea hydrogel, a polyester hydrogel, a polycarbonate hydrogel, a polyetheramide hydrogel, a hydrogel formed of addition polymers of ethylenically unsaturated monomers, copolymers thereof (e.g., co-polyesters, co-polyethers, copolyamides, co-polyurethanes, co-polyolefins), and combinations thereof. Additional details are provided herein.

The term "externally facing" as used in "extemally facing layer" refers to the position the element is intended to be in when the element is present in an article during normal use. If the article is footwear, the element is positioned toward the ground during normal use by a wearer when in a standing position, and thus can contact the ground including unpaved surfaces when the footwear is used in a conventional manner, such as standing, walking or running on an unpaved surface. In other words, even though the element may not necessarily be facing the ground during various steps of manufacturing or shipping, if the element is intended to face the ground during normal use by a wearer, the element is understood to be externally-facing or more specifically for an article of footwear, ground-facing. In some circumstances, due to the presence of elements such as traction elements, the externally facing *(e.g.,* ground-facing) surface can be positioned toward the ground during conventional use but may not necessarily come into contact the ground. For example, on hard ground or paved surfaces, the terminal ends of traction elements on the outsole may directly contact the ground, while portions of the outsole located between the traction elements do not. As described in this example, the portions of the outsole located between the traction elements are considered to be externally facing *(e.g.,* ground-facing) even though they may not directly contact the ground in all circumstances.

It has been found the layered material and articles incorporating the layered material (e.g. footwear) can prevent or reduce the accumulation of soil on the externally-facing layer of the layered material during wear on unpaved surfaces. As used herein, the term "soil" can include any of a variety of materials commonly present on a ground or playing surface and which might otherwise adhere to an outsole or exposed midsole of a footwear article. Soil can include inorganic materials such as mud, sand, dirt, and gravel; organic matter such as grass, turf, leaves, other vegetation, and excrement; and combinations of inorganic and organic materials such as clay. Additionally, soil can include other materials such as pulverized rubber which may be present on or in an unpaved surface.

While not wishing to be bound by theory, it is believed that the layered material (e.g., the hydrogel material) in accordance with the present disclosure, when sufficiently wet with water (including water containing dissolved, dispersed or otherwise suspended materials) can provide compressive compliance and/or expulsion of uptaken water. In particular, it is believed that the compressive compliance of the wet layered material, the expulsion of liquid from the wet layered material, or both in combination, can disrupt the adhesion of soil on or at the outsole, or the cohesion of the particles to each other, or can disrupt both the adhesion and cohesion. This disruption in the adhesion and/or cohesion of soil is believed to be a responsible mechanism for preventing (or otherwise reducing) the soil from accumulating on the footwear outsole (due to the presence of the wet material).

This disruption in the adhesion and/or cohesion of soil is believed to be a responsible mechanism for preventing (or otherwise reducing) the soil from accumulating on the footwear outsole (due to the presence of the layered material). As can be appreciated, preventing soil from accumulating on the bottom of footwear can improve the performance of traction elements present on the outsole during wear on unpaved surfaces, can prevent the footwear from gaining weight due to accumulated soil during wear, can preserve ball handling performance of the footwear, and thus can provide significant benefits to wearer as compared to an article of footwear without the material present on the outsole.

In aspects where the layered material *(e.g.,* hydrogel material) swells, the swelling of the layered material can be observed as an increase in material thickness from the dry-state thickness of the layered material, through a range of intermediate-state thicknesses as additional water is absorbed, and finally to a saturated-state thickness layered material, which is an average thickness of the layered material when fully saturated with water. For example, the saturated-state thickness for the fully saturated layered material can be greater than 150%, greater than 200%, greater than 250%, greater than 300%, greater than 350%, greater than 400%, or greater than 500%, of the dry-state thickness for the same layered material (e.g., the hydrogel material), as characterized by the Swelling Capacity Test. In some aspects, the saturated-state thickness for the fully saturated layered material can be 150% to 500%, 150% to 400%, 150% to 300%, or 200% to 300% of the dry-state thickness for the same layered material. Examples of suitable average thicknesses for the layered material in a wet state (referred to as a saturated-state thickness) can be 0.2 millimeters to 10 millimeters, 0.2 millimeters to 5 millimeters, 0.2 millimeters to 2 millimeters, 0.25 millimeters to 2 millimeters, or 0.5 millimeters to 1 millimeter.

In particular aspects, the layered material in neat form can have an increase in thickness at 1 hour of 35% to 400%, 50% to 300%, or 100% to 200%, as characterized by the Swelling Capacity Test. In some further embodiments, the layered material in neat form can have an increase in thickness at 24 hours of 45% to 500%, 100% to 400%, or 150% to 300%. Correspondingly, the outsole film in neat form can have an increase in film volume at 1 hour of 50% to 500%, 75% to 400%, or 100% to 300%.

In particular aspects, the layered material can quickly take up water that is in contact with the layered material. For instance, the layered material can take up water from mud and wet grass, such as during a warmup period prior to a competitive match. Alternatively (or additionally), the layered material can be pre-conditioned with water so that the layered material is partially or fully saturated, such as by spraying or soaking the layered material with water prior to use.

In particular aspects, the layered material can exhibit an overall water uptake capacity of 25% to 225% as measured in the Water Uptake Capacity Test over a soaking time of 24 hours using the Component Sampling Procedure, as will be defined below. Alternatively, the overall water uptake capacity exhibited by the layered material is in the range of 30% to 200%; alternatively, 50% to 150%; alternatively, 75% to 125%. For the purpose of this disclosure, the term "overall water uptake capacity" is used to represent the amount of water by weight taken up by the layered material as a percentage by weight of dry layered material. The procedure for measuring overall water uptake capacity includes measurement of the "dry" weight of the layered material, immersion of the layered material in water at ambient temperature (-23°C) for a predetermined amount of time, followed by re-measurement of the weight of the layered material when "wet". The procedure for measuring the overall weight uptake capacity according to the Water Uptake Capacity Test using the Component Sampling Procedure is described below.

In an aspect, the layered material can also be characterized by a water uptake rate of 10 $g/m^2/\sqrt{min}$ to 120 $g/m^2/\sqrt{min}$ as measured in the Water Uptake Rate Test using the Material Sampling Procedure. The water uptake rate is defined as the weight (in grams) of water absorbed per square meter ($m^2$) of the elastomeric material over the square root of the soaking time ($\sqrt{min}$). Alternatively, the water uptake rate ranges from 12 $g/m^2/\sqrt{min}$ to 100 $g/m^2/\sqrt{min}$; alternatively, from 25 $g/m^2/\sqrt{min}$ to 90 $g/m^2/\sqrt{min}$; alternatively, up to 60 $g/m^2/\sqrt{min}$.

In an aspect, the overall water uptake capacity and the water uptake rate can be dependent upon the amount of the hydrogel material that is present in the layered material. The hydrogel material can characterized by a water uptake capacity of 50% to 2000% as measured according to the Water Uptake Capacity Test using the Material Sampling Procedure. In this case, the water uptake capacity of the hydrogel material is determined based on the amount of water by weight taken up by the hydrogel material as a percentage by weight of dry hydrogel material. Alternatively, the water uptake capacity exhibited by the hydrogel material is in the range of 100% to 1500%; alternatively, in the range of 300% to 1200%.

As also discussed above, in some aspects, the surface of the layered material preferably exhibits hydrophilic properties. The hydrophilic properties of the layered material surface can be characterized by determining the static sessile drop contact angle of the layered material's surface. Accordingly, in some examples, the layered material's surface in a dry state has a static sessile drop contact angle (or dry-state contact angle) of less than 105°, or less than 95°, less than 85°, as characterized by the Contact Angle Test. The Contact Angle Test can be conducted on a sample obtained in accordance with the Article Sampling Procedure or the Co-Extruded Film Sampling Procedure. In some further examples, the layered material in a dry state has a static sessile drop contact angle ranging from 60° to 100°, from 70° to 100°, or from 65° to 95°.

In other examples, the surface of the layered material in a wet state has a static sessile drop contact angle (or wet-state contact angle) of less than 90°, less than 80°, less than 70°, or less than 60°. In some further examples, the surface in a wet state has a static sessile drop contact angle ranging from 45° to 75°. In some cases, the dry-state static sessile drop contact angle of the surface is greater than the wet-state static sessile drop contact angle of the surface by at least 10°, at least 15°, or at least 20°, for example from 10° to 40°, from 10° to 30°, or from 10° to 20°.

The surface of the layered material, including the surface of an article can also exhibit a low coefficient of friction when the material is wet. Examples of suitable coefficients of friction for the layered material in a dry state (or dry-state coefficient of friction) are less than 1.5, for instance ranging from 0.3 to 1.3, or from 0.3 to 0.7, as characterized by the Coefficient of Friction Test. The Coefficient of Friction Test can be conducted on a sample obtained in accordance with the Article Sampling Procedure, or the Co-Extruded Film Sampling Procedure. Examples of suitable coefficients of friction for the layered material in a wet state (or wet-state coefficient of friction) are less than 0.8 or less than 0.6, for instance ranging from 0.05 to 0.6, from 0.1 to 0.6, or from 0.3 to 0.5. Furthermore, the layered material can exhibit a reduction in its coefficient of friction from its dry state to its wet state, such as a reduction ranging from 15% to 90%, or from 50% to 80%. In some cases, the dry-state coefficient of friction is greater than the wet-state coefficient of friction for the material, for example being higher by a value of at least 0.3 or 0.5, such as 0.3 to 1.2 or 0.5 to 1.

Furthermore, the compliance of the layered material, including an article comprising the material, can be characterized by based on the layered material's storage modulus in the dry state (when equilibrated at 0% relative humidity (RH)), and in a partially wet state (e.g., when equilibrated at 50% RHor at 90% RH), and by reductions in its storage modulus between the dry and wet states. In particular, the layered material can have a reduction in storage modulus ($\Delta E'$) from the dry state relative to the wet state. A reduction in storage modulus as the water concentration in the hydrogel-containing material increases corresponds to an increase in compliance, because less stress is required for a given strain/deformation.

In some aspects, the layered material exhibits a reduction in the storage modulus from its dry state to its wet state (50% RH) of more than 20%, more than 40%, more than 60%, more than 75%, more than 90%, or more than 99%,

relative to the storage modulus in the dry state, and as characterized by the Storage Modulus Test with the Neat Film Sampling Process.

In some further aspects, the dry-state storage modulus of the layered material is greater than its wet-state (50% RH) storage modulus by more than 25 megaPascals (MPa), by more than 50 MPa, by more than 100 MPa, by more than 300 MPa, or by more than 500 MPa, for example ranging from 25 MPa to 800 MPa, from 50 MPa to 800 MPa, from 100 MPa to 800 MPa, from 200 MPa to 800 MPa, from 400 MPa to 800 MPa, from 25 MPa to 200 MPa, from 25 MPa to 100 MPa, or from 50 MPa to 200 MPa. Additionally, the dry-state storage modulus can range from 40 MPa to 800 MPa, from 100 MPa to 600 MPa, or from 200 MPa to 400 MPa, as characterized by the Storage Modulus Test. Additionally, the wet-state storage modulus can range from 0.003 MPa to 100 MPa, from 1 MPa to 60 MPa, or from 20 MPa to 40 MPa.

In other aspects, the layered material exhibits a reduction in the storage modulus from its dry state to its wet state (90% RH) of more than 20%, more than 40%, more than 60%, more than 75%, more than 90%, or more than 99%, relative to the storage modulus in the dry state, and as characterized by the Storage Modulus Test with the Neat Film Sampling Process. In further aspects, the dry-state storage modulus of the layered material is greater than its wet-state (90% RH) storage modulus by more than 25 megaPascals (MPa), by more than 50 MPa, by more than 100 MPa, by more than 300 MPa, or by more than 500 MPa, for example ranging from 25 MPa to 800 MPa, from 50 MPa to 800 MPa, from 100 MPa to 800 MPa, from 200 MPa to 800 MPa, from 400 MPa to 800 MPa, from 25 MPa to 200 MPa, from 25 MPa to 100 MPa, or from 50 MPa to 200 MPa. Additionally, the dry-state storage modulus can range from 40 MPa to 800 MPa, from 100 MPa to 600 MPa, or from 200 MPa to 400 MPa, as characterized by the Storage Modulus Test. Additionally, the wet-state storage modulus can range from 0.003 MPa to 100 MPa, from 1 MPa to 60 MPa, or from 20 MPa to 40 MPa.

In addition to a reduction in storage modulus, the layered material can also exhibit a reduction in its glass transition temperature from the dry state (when equilibrated at 0% relative humidity (RH) to the wet state (when equilibrated at 90% RH). While not wishing to be bound by theory, it is believed that the water taken up by the layered material plasticizes the layered material, which reduces its storage modulus and its glass transition temperature, rendering the layered material more compliant (e.g., compressible, expandable, and stretchable).

In some aspects, the layered material can exhibit a reduction in glass transition temperature ($\Delta T_g$) from its dry-state (0% RH) glass transition temperature to its wet-state glass transition (90% RH) temperature of more than a 5°C difference, more than a 6°C difference, more than a 10°C difference, or more than a 15°C difference, as characterized by the Glass Transition Temperature Test with the Neat Film Sampling Process or the Neat Material Sampling Process. For instance, the reduction in glass transition temperature ($\Delta T_g$) can range from more than a 5°C difference to a 40°C difference, from more than a 6°C difference to a 50°C difference, form more than a 10°C difference to a 30°C difference, from more than a 30°C difference to a 45°C difference, or from a 15°C difference to a 20°C difference. The layered material can also exhibit a dry glass transition temperature ranging from -40°C to -80°C, or from -40°C to -60°C.

Alternatively (or additionally), the reduction in glass transition temperature ($\Delta T_g$) can range from a 5°C difference to a 40°C difference, form a 10°C difference to a 30°C difference, or from a 15°C difference to a 20°C difference. The layered material can also exhibit a dry glass transition temperature ranging from -40°C to -80°C, or from -40°C to -60°C.

The total amount of water that the layered material can take up depends on a variety of factors, such as its composition (e.g., its hydrophilicity), its cross-linking density, its thickness, and the like. The water uptake capacity and the water uptake rate of the layered material are dependent on the size and shape of its geometry, and are typically based on the same factors. Conversely, the water uptake rate is transient and can be defined kinetically. The three primary factors for water uptake rate for layered material present given part geometry include time, thickness, and the exposed surface area available for taking up water.

Even though the layered material can swell as it takes up water and transitions between the different material states with corresponding thicknesses, the saturated-state thickness of the layered material preferably remains less than the length of the traction element. This selection of the layered material and its corresponding dry and saturated thicknesses ensures that the traction elements can continue to provide ground-engaging traction during use of the footwear, even when the layered material is in a fully swollen state. For example, the average clearance difference between the lengths of the traction elements and the saturated-state thickness of the layered material is desirably at least 8 millimeters. For example, the average clearance distance can be at least 9 millimeters, 10 millimeters, or more.

As also mentioned above, in addition to swelling, the compliance of the layered material can also increase from being relatively stiff (i.e., dry-state) to being increasingly stretchable, compressible, and malleable (i.e., wet-state). The increased compliance accordingly can allow the layered material to readily compress under an applied pressure (e.g., during a foot strike on the ground), and in some aspects, to quickly expel at least a portion of its retained water (depending on the extent of compression). While not wishing to be bound by theory, it is believed that this compressive compliance alone, water expulsion alone, or both in combination can disrupt the adhesion and/or cohesion of soil, which prevents or otherwise reduces the accumulation of soil.

In addition to quickly expelling water, in particular examples, the compressed layered material is capable of quickly re-absorbing water when the compression is released (e.g., liftoff from a foot strike during normal use). As such,

during use in a wet or damp environment (e.g., a muddy or wet ground), the layered material can dynamically expel and repeatedly take up water over successive foot strikes, particularly from a wet surface. As such, the layered material can continue to prevent soil accumulation over extended periods of time (e.g., during an entire competitive match), particularly when there is ground water available for re-uptake.

In addition to being effective at preventing soil accumulation, the layered material has also been found to be sufficiently durable for its intended use on the ground-contacting side of the article of footwear. In various aspects, the useful life of the layered material (and footwear containing it) is at least 10 hours, 20 hours, 50 hours, 100 hours, 120 hours, or 150 hours of wear.

As used herein, the terms "take up", "taking up", "uptake", "uptaking", and the like refer to the drawing of a liquid (e.g., water) from an external source into the layered material, such as by absorption, adsorption, or both. Furthermore, as briefly mentioned above, the term "water" refers to an aqueous liquid that can be pure water, or can be an aqueous carrier with lesser amounts of dissolved, dispersed or otherwise suspended materials (e.g., particulates, other liquids, and the like).

As described herein, the externally facing layer includes the first material. In an aspect, the first material comprises a hydrogel material. The hydrogel material can comprise a polymeric hydrogel. In aspect, the polymeric hydrogel can comprise or consist essentially of a polyurethane hydrogel. Polyurethane hydrogels are prepared from one or more diisocyanate and one or more hydrophilic diol. The polymer may also include a hydrophobic diol in addition to the hydrophilic diol. The polymerization is normally carried out using roughly an equivalent amount of the diol and diisocyanate. Examples of hydrophilic diols are polyethylene glycols or copolymers of ethylene glycol and propylene glycol. The diisocyanate can be selected from a wide variety of aliphatic or aromatic diisocyanates. The hydrophobicity of the resulting polymer is determined by the amount and type of the hydrophilic diols, the type and amount of the hydrophobic diols, and the type and amount of the diisocyanates. Additional details regarding polyurethane are provided herein.

In an aspect, the polymeric hydrogel can comprise or consist essentially of a polyurea hydrogel. Polyurea hydrogels are prepared from one or more diisocyanate and one or more hydrophilic diamine. The polymer may also include a hydrophobic diamine in addition to the hydrophilic diamines. The polymerization is normally carried out using roughly an equivalent amount of the diamine and diisocyanate. Typical hydrophilic diamines are amine-terminated polyethylene oxides and amine-terminated copolymers of polyethylene oxide/polypropylene. Examples are Jeffamine® diamines sold by Huntsman (The Woodlands, TX, USA). The diisocyanate can be selected from a wide variety of aliphatic or aromatic diisocyanates. The hydrophobicity of the resulting polymer is determined by the amount and type of the hydrophilic diamine, the type and amount of the hydrophobic amine, and the type and amount of the diisocyanate. Additional details regarding polyurea are provided herein.

In an aspect, the polymeric hydrogel can comprise or consist essentially of a polyester hydrogel. Polyester hydrogels can be prepared from dicarboxylic acids (or dicarboxylic acid derivatives) and diols where part or all of the diol is a hydrophilic diol. Examples of hydrophilic diols are polyethylene glycols or copolymers of ethylene glycol and propylene glycol. A second hydrophobic diol can also be used to control the polarity of the final polymer. One or more diacid can be used which can be either aromatic or aliphatic. Of particular interest are block polyesters prepared from hydrophilic diols and lactones of hydroxyacids. The lactone is polymerized on the each end of the hydrophilic diol to produce a triblock polymer. In addition, these triblock segments can be linked together to produce a multiblock polymer by reaction with a dicarboxylic acid. Additional details regarding polyurea are provided herein.

In an aspect, the polymeric hydrogel can comprise or consist essentially of a polycarbonate hydrogel. Polycarbonates are typically prepared by reacting a diol with phosgene or a carbonate diester. A hydrophilic polycarbonate is produced when part or all of the diol is a hydrophilic diol. Examples of hydrophilic diols are hydroxyl terminated polyethers of ethylene glycol or polyethers of ethylene glycol with propylene glycol. A second hydrophobic diol can also be included to control the polarity of the final polymer. Additional details regarding polycarbonate are provided herein.

In an embodiment, the polymeric hydrogel can comprise or consist essentially of a polyetheramide hydrogel. Polyetheramides are prepared from dicarboxylic acids (or dicarboxylic acid derivatives) and polyether diamines (a polyether terminated on each end with an amino group). Hydrophilic amine-terminated polyethers produce hydrophilic polymers that will swell with water. Hydrophobic diamines can be used in conjunction with hydrophilic diamines to control the hydrophilicity of the final polymer. In addition, the type dicarboxylic acid segment can be selected to control the polarity of the polymer and the physical properties of the polymer. Typical hydrophilic diamines are amine-terminated polyethylene oxides and amine-terminated copolymers of polyethylene oxide/polypropylene. Examples are Jeffamine® diamines sold by Huntsman (The Woodlands, TX, USA). Additional details regarding polyetheramide are provided herein.

In an aspect, the polymeric hydrogel can comprise or consist essentially of a hydrogel formed of addition polymers of ethylenically unsaturated monomers. The addition polymers of ethylenically unsaturated monomers can be random polymers. Polymers prepared by free radical polymerization of one of more hydrophilic ethylenically unsaturated monomer and one or more hydrophobic ethylenically unsaturated monomers. Examples of hydrophilic monomers are acrylic acid, methacrylic acid, 2-acrylamido-2-methylpropane sulphonic acid, vinyl sulphonic acid, sodium p-styrene sulfonate, [3-(methacryloylamino)propyl]trimethylammonium chloride, 2-hydroxyethyl methacrylate, acrylamide, N,N-dimethylacrylamide, 2-vinylpyrrolidone, (meth)acrylate esters of polyethylene glycol, and (meth)acrylate esters of polyethylene glycol monomethyl ether. Examples of hydrophobic monomers are (meth)acrylate esters of C1 to C4 alcohols, polystyrene, polystyrene methacrylate macromonomer and mono(meth)acrylate esters of siloxanes. The water uptake and physical characteristics are tuned by selection of the monomer and the amounts of each monomer type. Additional details regarding ethylenically unsaturated monomers are provided herein.

The addition polymers of ethylenically unsaturated monomers can be comb polymers. Comb polymers are produced when one of the monomers is a macromer (an oligomer with an ethylenically unsaturated group one end). In one case the main chain is hydrophilic while the side chains are hydrophobic. Alternatively the comb backbone can be hydrophobic while the side chains are hydrophilic. An example is a backbone of a hydrophobic monomer such as styrene with the methacrylate monoester of polyethylene glycol.

The addition polymers of ethylenically unsaturated monomers can be block polymers. Block polymers of ethylenically unsaturated monomers can be prepared by methods such as anionic polymerization or controlled free radical polymerization. Hydrogels are produced when the polymer has both hydrophilic blocks and hydrophobic blocks. The polymer can be a diblock polymer (A-B) polymer, triblock polymer (A-B-A) or multiblock polymer. Triblock polymers with hydrophobic end blocks and a hydrophilic center block are most useful for this application. Block polymers can be prepared by other means as well. Partial hydrolysis of polyacrylonitrile polymers produces multiblock polymers with hydrophilic domains (hydrolyzed) separated by hydrophobic domains (unhydrolyzed) such that the partially hydrolyzed polymer acts as a hydrogel. The hydrolysis converts acrylonitrile units to hydrophilic acrylamide or acrylic acid units in a multiblock pattern.

The polymeric hydrogel can comprise or consist essentially of a hydrogel formed of copolymers. Copolymers combine two or more types of polymers within each polymer chain to achieve the desired set of properties. Of particular interest are polyurethane/polyurea copolymers, polyurethane/polyester copolymers, polyester/polycarbonate copolymers.

Now having described aspects of the hydrogel material, the elastomer material, the thermoplastic hot melt adhesive, and the tie layer, additional details are provided regarding the thermoplastic polymer. In aspects, thermoplastic polymer can include polymers of the same or different types of monomers *(e.g.,* homopolymers and copolymers, including terpolymers). In certain aspects, the thermoplastic polymer can include different monomers randomly distributed in the polymer *(e.g.,* a random co-polymer). The term "polymer" refers to a polymerized molecule having one or more monomer species that can be the same or different. When the monomer species are the same, the polymer can be termed homopolymer and when the monomers are different, the polymer can be referred to as a copolymer. The term "copolymer" is a polymer having two or more types of monomer species, and includes terpolymers (i.e., copolymers having three monomer species). In an aspect, the "monomer" can include different functional groups or segments, but for simplicity is generally referred to as a monomer.

For example, the thermoplastic polymer can be a polymer having repeating polymeric units of the same chemical structure (segments) which are relatively harder (hard segments), and repeating polymeric segments which are relatively softer (soft segments). In various aspects, the polymer has repeating hard segments and soft segments, physical crosslinks can be present within the segments or between the segments or both within and between the segments. Particular examples of hard segments include isocyanate segments. Particular examples of soft segments include an alkoxy group such as polyether segments and polyester segments. As used herein, the polymeric segment can be referred to as being a particular type of polymeric segment such as, for example, an isocyanate segment *(e.g.,* diisocyante segment), an alkoky polyamide segment *(e.g.,* a polyether segment, a polyester segment), and the like. It is understood that the chemical structure of the segment is derived from the described chemical structure. For example, an isocyanate segment is a polymerized unit including an isocyanate functional group. When referring to polymeric segments of a particular chemical structure, the polymer can contain up to 10 mol % of segments of other chemical structures. For example, as used herein, a polyether segment is understood to include up to 10 mol % of non-polyether segments.

In certain aspects, the thermoplastic polymer can be a thermoplastic polyurethane (also referred to as "TPU"). In aspects, the thermoplastic polyurethane can be a thermoplastic polyurethane polymer. In such aspects, the thermoplastic polyurethane polymer can include hard and soft segments. In aspects, the hard segments can comprise or consist of isocyanate segments *(e.g.,* diisocyanate segments). In the same or alternative aspects, the soft segments can comprise or consist of alkoxy segments *(e.g.,* polyether segments, or polyester segments, or a combination of polyether segments and polyester segments). In a particular aspect, the thermoplastic material can comprise or consist essentially of an elastomeric thermoplastic polyurethane having repeating hard segments and repeating soft segments.

Thermoplastic Polyurethanes

In aspects, one or more of the thermoplastic polyurethanes can be produced by polymerizing one or more isocyanates with one or more polyols to produce polymer chains having carbamate linkages (-N(CO)O-) as illustrated below in Formula 1, where the isocyanate(s) each preferably include two or more isocyanate (—NCO) groups per

molecule, such as 2, 3, or 4 isocyanate groups per molecule (although, single-functional isocyanates can also be optionally included, *e.g.,* as chain terminating units).

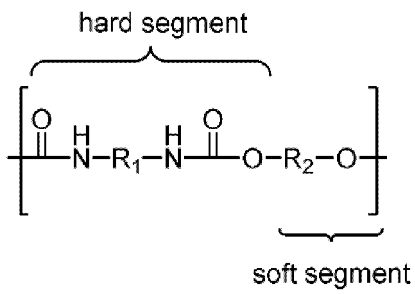

(Formula 1)

In these embodiments, each $R_1$ and $R_2$ independently is an aliphatic or aromatic segment. Optionally, each $R_2$ can be a hydrophilic segment.

Additionally, the isocyanates can also be chain extended with one or more chain extenders to bridge two or more isocyanates. This can produce polyurethane polymer chains as illustrated below in Formula 2, where $R_3$ includes the chain extender. As with each $R_1$ and $R_3$, each $R_3$ independently is an aliphatic or aromatic segment.

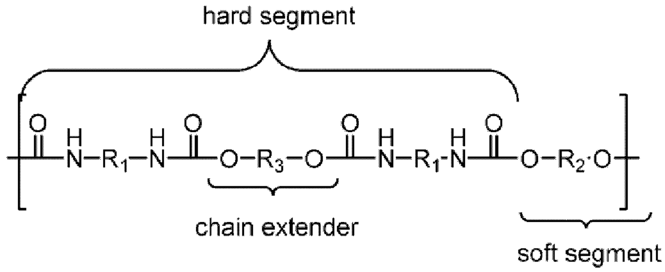

(Formula 2)

Each segment $R_1$, or the first segment, in Formulas 1 and 2 can independently include a linear or branched $C_{3-30}$ segment, based on the particular isocyanate(s) used, and can be aliphatic, aromatic, or include a combination of aliphatic portions(s) and aromatic portion(s). The term "aliphatic" refers to a saturated or unsaturated organic molecule that does not include a cyclically conjugated ring system having delocalized pi electrons. In comparison, the term "aromatic" refers to a cyclically conjugated ring system having delocalized pi electrons, which exhibits greater stability than a hypothetical ring system having localized pi electrons.

Each segment $R^1$ can be present in an amount of 5% to 85% by weight, from 5% to 70% by weight, or from 10% to 50% by weight, based on the total weight of the reactant monomers.

In aliphatic embodiments (from aliphatic isocyanate(s)), each segment $R^1$ can include a linear aliphatic group, a branched aliphatic group, a cycloaliphatic group, or combinations thereof. For instance, each segment $R^1$ can include a linear or branched $C_{3-20}$ alkylene segment *(e.g.,* $C_{4-15}$ alkylene or $C_{6-10}$ alkylene), one or more $C_{3-8}$ cycloalkylene segments *(e.g.,* cyclopropyl, cyclobutyl, cyclopentyl, cyclohexyl, cycloheptyl, or cyclooctyl), and combinations thereof.

Examples of suitable aliphatic diisocyanates for producing the polyurethane polymer chains include hexamethylene diisocyanate (HDI), isophorone diisocyanate (IPDI), butylenediisocyanate (BDI), bisisocyanatocyclohexylmethane (HMDI), 2,2,4-trimethylhexamethylene diisocyanate ($T_mDI$), bisisocyanatomethylcyclohexane, bisisocyanatomethyltricyclodecane, norbornane diisocyanate (NDI), cyclohexane diisocyanate (CHDI), 4,4'-dicyclohexylmethane diisocyanate (H12MDI), diisocyanatododecane, lysine diisocyanate, and combinations thereof.

In an aspect, the diisocyanate segments can include aliphatic diisocyanate segments. In one aspect, a majority of the diisocyanate segments comprise the aliphatic diisocyanate segments. In an aspect, at least 90% of the diisocyanate segments are aliphatic diisocyanate segments. In an aspect, the diisocyanate segments consist essentially of aliphatic diisocyanate segments. In an aspect, the aliphatic diisocyanate segments are substantially *(e.g.* 50% or more, 60% or more, 70% or more, 80% or more, 90% or more) linear aliphatic diisocyanate segments. In an aspect, at least 80% of the aliphatic diisocyanate segments are aliphatic diisocyanate segments that are free of side chains. In an aspect, the

aliphatic diisocyanate segments include $C_2$-$C_{10}$ linear aliphatic diisocyanate segments.

In aromatic embodiments (from aromatic isocyanate(s)), each segment $R_1$ can include one or more aromatic groups, such as phenyl, naphthyl, tetrahydronaphthyl, phenanthrenyl, biphenylenyl, indanyl, indenyl, anthracenyl, and fluorenyl. Unless otherwise indicated, an aromatic group can be an unsubstituted aromatic group or a substituted aromatic group, and can also include heteroaromatic groups. "Heteroaromatic" refers to monocyclic or polycyclic *(e.g.,* fused bicyclic and fused tricyclic) aromatic ring systems, where one to four ring atoms are selected from oxygen, nitrogen, or sulfur, and the remaining ring atoms are carbon, and where the ring system is joined to the remainder of the molecule by any of the ring atoms. Examples of suitable heteroaryl groups include pyridyl, pyrazinyl, pyrimidinyl, pyrrolyl, pyrazolyl, imidazolyl, thiazolyl, tetrazolyl, oxazolyl, isooxazolyl, thiadiazolyl, oxadiazolyl, furanyl, quinolinyl, isoquinolinyl, benzoxazolyl, benzimidazolyl, and benzothiazolyl.

Examples of suitable aromatic diisocyanates for producing the polyurethane polymer chains include toluene diisocyanate (TDI), TDI adducts with trimethyloylpropane ($T_mP$), methylene diphenyl diisocyanate (MDI), xylene diisocyanate (XDI), tetramethylxylylene diisocyanate ($T_mXDI$), hydrogenated xylene diisocyanate (HXDI), naphthalene 1,5-diisocyanate (NDI), 1,5-tetrahydronaphthalene diisocyanate, para-phenylene diisocyanate (PPDI), 3,3' -dimethyldipheny1-4, 4' -diisocyanate (DDDI), 4,4 '-dibenzyl diisocyanate (DBDI), 4-chloro-1,3-phenylene diisocyanate, and combinations thereof. In some embodiments, the polymer chains are substantially free of aromatic groups.

In particular aspects, the polyurethane polymer chains are produced from diisocynates including HMDI, TDI, MDI, $H_{12}$ aliphatics, and combinations thereof. For example, the low processing temperature polymeric composition of the present disclosure can comprise one or more polyurethane polymer chains are produced from diisocynates including HMDI, TDI, MDI, $H_{12}$ aliphatics, and combinations thereof.

In certain aspects, polyurethane chains which are crosslinked *(e.g.,* partially crosslinked polyurethane polymers which retain thermoplastic properties) or which can be crosslinked, can be used in accordance with the present disclosure. It is possible to produce crosslinked or crosslinkable polyurethane polymer chains using multi-functional isocyantes. Examples of suitable triisocyanates for producing the polyurethane polymer chains include TDI, HDI, and IPDI adducts with trimethyloylpropane ($T_mP$), uretdiones (i.e., dimerized isocyanates), polymeric MDI, and combinations thereof.

Segment $R_3$ in Formula 2 can include a linear or branched $C_2$-$C_{10}$ segment, based on the particular chain extender polyol used, and can be, for example, aliphatic, aromatic, or polyether. Examples of suitable chain extender polyols for producing the polyurethane polymer chains include ethylene glycol, lower oligomers of ethylene glycol *(e.g.,* diethylene glycol, triethylene glycol, and tetraethylene glycol), 1,2-propylene glycol, 1,3-propylene glycol, lower oligomers of propylene glycol *(e.g.,* dipropylene glycol, tripropylene glycol, and tetrapropylene glycol), 1,4-butylene glycol, 2,3-butylene glycol, 1,6-hexanediol, 1,8-octanediol, neopentyl glycol, 1 ,4-cyclohexanedimethanol, 2-ethyl-1,6-hexanediol, 1-methyl-1,3-propanediol, 2-methyl-1,3-propanediol, dihydroxyalkylated aromatic compounds *(e.g.,* bis(2-hydroxyethyl) ethers of hydroquinone and resorcinol, xylene-a,a-diols, bis(2-hydroxyethyl) ethers of xylene-a,a-diols, and combinations thereof.

Segment $R_2$ in Formula 1 and 2 can include a polyether group, a polyester group, a polycarbonate group, an aliphatic group, or an aromatic group. Each segment $R_2$ can be present in an amount of 5% to 85% by weight, from 5% to 70% by weight, or from 10% to 50% by weight, based on the total weight of the reactant monomers.

In some examples, at least one $R_2$ segment of the thermoplastic polyurethane includes a polyether segment (i.e., a segment having one or more ether groups). Suitable polyethers include, but are not limited to, polyethylene oxide (PEO), polypropylene oxide (PPO), polytetrahydrofuran (PTHF), polytetramethylene oxide (P $T_mO$), and combinations thereof. The term "alkyl" as used herein refers to straight chained and branched saturated hydrocarbon groups containing one to thirty carbon atoms, for example, one to twenty carbon atoms, or one to ten carbon atoms. The term $C_n$ means the alkyl group has "n" carbon atoms. For example, $C_4$ alkyl refers to an alkyl group that has 4 carbon atoms. $C_{1-7}$ alkyl refers to an alkyl group having a number of carbon atoms encompassing the entire range (i.e., 1 to 7 carbon atoms), as well as all subgroups *(e.g.,* 1-6, 2-7, 1-5, 3-6, 1, 2, 3, 4, 5, 6, and 7 carbon atoms). Non-limiting examples of alkyl groups include, methyl, ethyl, n-propyl, isopropyl, n-butyl, sec-butyl (2-methylpropyl), t-butyl (1,1-dimethylethyl), 3,3-dimethylpentyl, and 2-ethylhexyl. Unless otherwise indicated, an alkyl group can be an unsubstituted alkyl group or a substituted alkyl group.

In some examples of the thermoplastic polyurethane, the at least one $R_2$ segment includes a polyester segment. The polyester segment can be derived from the polyesterification of one or more dihydric alcohols *(e.g.,* ethylene glycol, 1,3-propylene glycol, 1,2-propylene glycol, 1,4-butanediol, 1,3-butanediol, 2-methylpentanediol-1,5,diethylene glycol, 1,5-pentanediol, 1,5-hexanediol, 1,2-dodecanediol, cyclohexanedimethanol, and combinations thereof) with one or more dicarboxylic acids *(e.g.,* adipic acid, succinic acid, sebacic acid, suberic acid, methyladipic acid, glutaric acid, pimelic acid, azelaic acid, thiodipropionic acid and citraconic acid and combinations thereof). The polyester also can be derived from polycarbonate prepolymers, such as poly(hexamethylene carbonate) glycol, poly(propylene carbonate) glycol, poly(tetramethylene carbonate)glycol, and poly(nonanemethylene carbonate) glycol. Suitable polyesters can include, for example, polyethylene adipate (PEA), poly(1,4-butylene adipate), poly(tetramethylene adipate), poly(hexamethylene adipate), polycaprolactone, polyhexamethylene carbonate, poly(propylene carbonate), poly(tetramethylene carbonate),

poly(nonanemethylene carbonate), and combinations thereof.

In various of the thermoplastic polyurethanes, at least one $R_2$ segment includes a polycarbonate segment. The polycarbonate segment can be derived from the reaction of one or more dihydric alcohols *(e.g.,* ethylene glycol, 1,3-propylene glycol, 1,2-propylene glycol, 1,4-butanediol, 1,3-butanediol, 2-methylpentanedio1-1,5, diethylene glycol, 1,5-pentanediol, 1,5-hexanediol, 1,2-dodecanediol, cyclohexanedimethanol, and combinations thereof) with ethylene carbonate.

In various examples, the aliphatic group is linear and can include, for example, a $C_{1-20}$ alkylene chain or a $C_{1-20}$ alkenylene chain *(e.g.,* methylene, ethylene, propylene, butylene, pentylene, hexylene, heptylene, octylene, nonylene, decylene, undecylene, dodecylene, tridecylene, ethenylene, propenylene, butenylene, pentenylene, hexenylene, heptenylene, octenylene, nonenylene, decenylene, undecenylene, dodecenylene, tridecenylene). The term "alkylene" refers to a bivalent hydrocarbon. The term $C_n$ means the alkylene group has "n" carbon atoms. For example, $C_{1-6}$ alkylene refers to an alkylene group having, *e.g.,* 1, 2, 3, 4, 5, or 6 carbon atoms. The term "alkenylene" refers to a bivalent hydrocarbon having at least one double bond.

In various aspects, the aliphatic and aromatic groups can be substituted with one or more pendant relatively hydrophilic and/or charged groups. In some aspects, the pendant hydrophilic group includes one or more *(e.g.,* 2, 3, 4, 5, 6, 7, 8, 9, 10 or more) hydroxyl groups. In various aspects, the pendant hydrophilic group includes one or more *(e.g.,* 2, 3, 4, 5, 6, 7, 8, 9, 10 or more) amino groups. In some cases, the pendant hydrophilic group includes one or more *(e.g.,* 2, 3, 4, 5, 6, 7, 8, 9, 10 or more) carboxylate groups. For example, the aliphatic group can include one or more polyacrylic acid group. In some cases, the pendant hydrophilic group includes one or more *(e.g.,* 2, 3, 4, 5, 6, 7, 8, 9, 10 or more) sulfonate groups. In some cases, the pendant hydrophilic group includes one or more *(e.g.,* 2, 3, 4, 5, 6, 7, 8, 9, 10 or more) phosphate groups. In some examples, the pendant hydrophilic group includes one or more ammonium groups *(e.g.,* tertiary and/or quaternary ammonium). In other examples, the pendant hydrophilic group includes one or more zwitterionic groups *(e.g.,* a betaine, such as poly(carboxybetaine (pCB) and ammonium phosphonate groups such as a phosphatidylcholine group).

In some aspects, the $R_2$ segment can include charged groups that are capable of binding to a counterion to ionically crosslink the thermoplastic polymer and form ionomers. In these aspects, for example, $R_2$ is an aliphatic or aromatic group having pendant amino, carboxylate, sulfonate, phosphate, ammonium, or zwitterionic groups, or combinations thereof.

In various cases when a pendant hydrophilic group is present, the pendant "hydrophilic" group is at least one polyether group, such as two polyether groups. In other cases, the pendant hydrophilic group is at least one polyester. In various cases, the pendant hydrophilic group is polylactone group *(e.g.,* polyvinylpyrrolidone). Each carbon atom of the pendant hydrophilic group can optionally be substituted with, *e.g.,* a $C_{1-6}$ alkyl group. In some of these aspects, the aliphatic and aromatic groups can be graft polymeric groups, wherein the pendant groups are homopolymeric groups *(e.g.,* polyether groups, polyester groups, polyvinylpyrrolidone groups).

In some aspects, the pendant hydrophilic group is a polyether group *(e.g.,* a polyethylene oxide group, a polyethylene glycol group), a polyvinylpyrrolidone group, a polyacrylic acid group, or combinations thereof.

The pendant hydrophilic group can be bonded to the aliphatic group or aromatic group through a linker. The linker can be any bifunctional small molecule *(e.g.,* $C_{1-20}$) capable of linking the pendant hydrophilic group to the aliphatic or aromatic group. For example, the linker can include a diisocyanate group, as previously described herein, which when linked to the pendant hydrophilic group and to the aliphatic or aromatic group forms a carbamate bond. In some aspects, the linker can be 4,4'-diphenylmethane diisocyanate (MDI), as shown below.

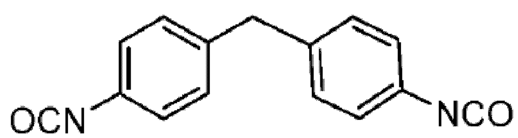

(Formula 3)

In some exemplary aspects, the pendant hydrophilic group is a polyethylene oxide group and the linking group is MDI, as shown below.

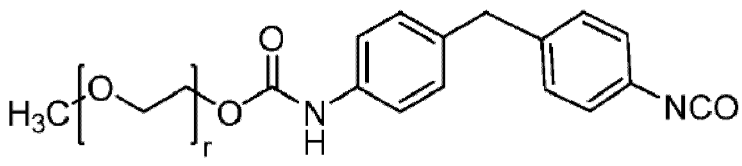

(Formula 4)

In some cases, the pendant hydrophilic group is functionalized to enable it to bond to the aliphatic or aromatic group, optionally through the linker. In various aspects, for example, when the pendant hydrophilic group includes an alkene group, which can undergo a Michael addition with a sulfhydryl-containing bifunctional molecule (i.e., a molecule having a second reactive group, such as a hydroxyl group or amino group), to result in a hydrophilic group that can react with the polymer backbone, optionally through the linker, using the second reactive group. For example, when the pendant hydrophilic group is a polyvinylpyrrolidone group, it can react with the sulfhydryl group on mercaptoethanol to result in hydroxyl-functionalized polyvinylpyrrolidone, as shown below.

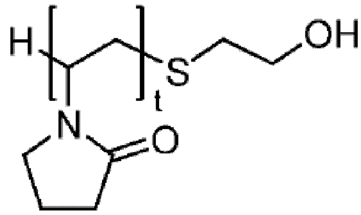

(Formula 5)

In some of the aspects disclosed herein, at least one $R_2$ segment includes a polytetramethylene oxide group. In other exemplary aspects, at least one $R_2$ segment can include an aliphatic polyol group functionalized with a polyethylene oxide group or polyvinylpyrrolidone group, such as the polyols described in E.P. Patent No. 2 462 908. For example, the $R_2$ segment can be derived from the reaction product of a polyol *(e.g.,* pentaerythritol or 2,2,3-trihydroxypropanol) and either MDI-derivatized methoxypolyethylene glycol (to obtain compounds as shown in Formulas 6 or 7) or with MDI-derivatized polyvinylpyrrolidone (to obtain compounds as shown in Formulas 8 or 9) that had been previously been reacted with mercaptoethanol, as shown below.

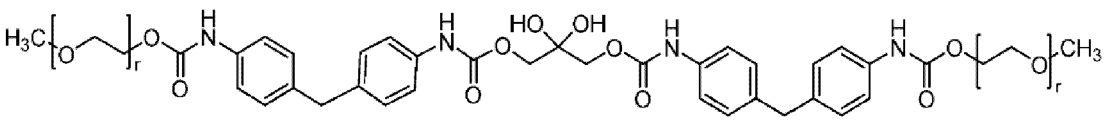

(Formula 6)

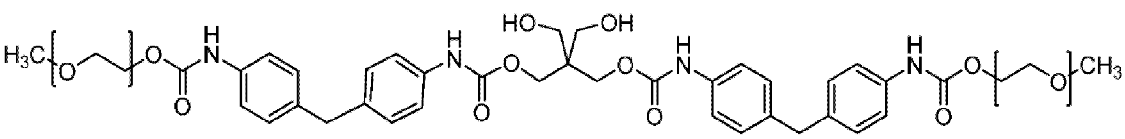

(Formula 7)

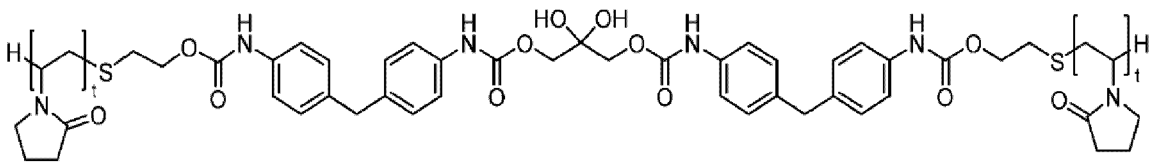

(Formula 8)

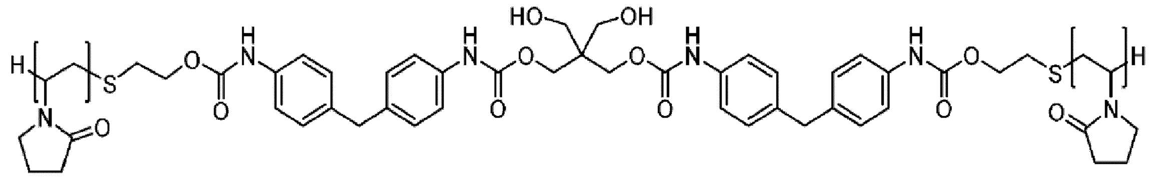

(Formula 9)

In various cases, at least one $R_2$ is a polysiloxane, In these cases, $R_2$ can be derived from a silicone monomer of Formula 10, such as a silicone monomer disclosed in U.S. Pat. No. 5,969,076:

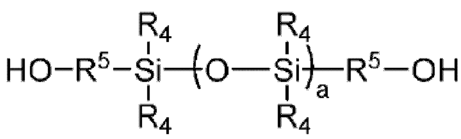

(Formula 10)

wherein: a is 1 to 10 or larger *(e.g.,* 1, 2, 3, 4, 5, 6, 7, 8, 9, or 10); each $R_4$ independently is hydrogen, $C_{1-18}$ alkyl, $C_{2-18}$ alkenyl, aryl, or polyether; and each $R_5$ independently is $C_{1-10}$ alkylene, polyether, or polyurethane.

In some aspects, each $R_4$ independently is a H, $C_{1-10}$ alkyl, $C_{2-10}$ alkenyl, $C_{1-6}$ aryl, polyethylene, polypropylene, or polybutylene group. For example, each $R_4$ can independently be selected from the group consisting of methyl, ethyl, n-propyl, isopropyl, n-butyl, isobutyl, s-butyl, t-butyl, ethenyl, propenyl, phenyl, and polyethylene groups.

In various aspects, each $R^5$ independently includes a $C_{1-10}$ alkylene group *(e.g.,* a methylene, ethylene, propylene, butylene, pentylene, hexylene, heptylene, octylene, nonylene, or decylene group). In other cases, each $R^5$ is a polyether group *(e.g.,* a polyethylene, polypropylene, or polybutylene group). In various cases, each R5 is a polyurethane group.

Optionally, in some aspects, the polyurethane can include an at least partially crosslinked polymeric network that includes polymer chains that are derivatives of polyurethane. In such cases, it is understood that the level of crosslinking is such that the polyurethane retains thermoplastic properties (i.e., the crosslinked thermoplastic polyurethane can be softened or melted and re-solidified under the processing conditions described herein). This crosslinked polymeric network can be produced by polymerizing one or more isocyanates with one or more polyamino compounds, polysulfhydryl compounds, or combinations thereof, as shown in Formulas 11 and 12, below:

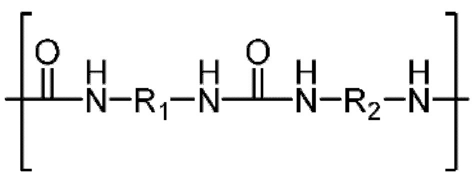

(Formula 11)

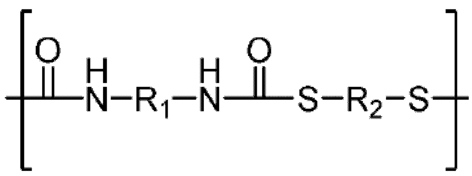

(Formula 12)

wherein the variables are as described above. Additionally, the isocyanates can also be chain extended with one or more polyamino or polythiol chain extenders to bridge two or more isocyanates, such as previously described for the polyurethanes of Formula 2.

As described herein, the thermoplastic polyurethane can be physically crosslinked through *e.g.,* nonpolar or polar interactions between the urethane or carbamate groups on the polymers (the hard segments. In these aspects, component $R_1$ in Formula 1, and components $R_1$ and $R_3$ in Formula 2, forms the portion of the polymer often referred to as the "hard segment", and component $R_2$ forms the portion of the polymer often referred to as the "soft segment". In these aspects, the soft segment can be covalently bonded to the hard segment. In some examples, the thermoplastic polyurethane having physically crosslinked hard and soft segments can be a hydrophilic thermoplastic polyurethane (i.e., a thermoplastic polyurethane including hydrophilic groups as disclosed herein).

Thermoplastic Polyamides

In various aspects, the thermoplastic polymer can comprise a thermoplastic polyamide. The thermoplastic polyamide can be a polyamide homopolymer having repeating polyamide segments of the same chemical structure. Alternatively, the polyamide can comprise a number of polyamide segments having different polyamide chemical structures *(e.g.,* polyamide 6 segments, polyamide 11 segments, polyamide 12 segments, polyamide 66 segments, etc.). The polyamide segments having different chemical structure can be arranged randomly, or can be arranged as repeating blocks.

In aspects, the thermoplastic polymers can be a block co-polyamide. For example, the block co-polyamide can have repeating hard segments, and repeating soft segments. The hard segments can comprise polyamide segments, and the soft segments can comprise non-polyamide segments. The thermoplastic polymers can be an elastomeric thermoplastic co-polyamide comprising or consisting of block co-polyamides having repeating hard segments and repeating soft segments. In block co-polymers, including block co-polymers having repeating hard segments and soft segments, physical crosslinks can be present within the segments or between the segments or both within and between the segments.

The thermoplastic polyamide can be a co-polyamide (i.e., a co-polymer including polyamide segments and non-polyamide segments). The polyamide segments of the co-polyamide can comprise or consist of polyamide 6 segments, polyamide 11 segments, polyamide 12 segments, polyamide 66 segments, or any combination thereof. The polyamide segments of the co-polyamide can be arranged randomly, or can be arranged as repeating segments. In a particular example, the polyamide segments can comprise or consist of polyamide 6 segments, or polyamide 12 segments, or both polyamide 6 segment and polyamide 12 segments. In the example where the polyamide segments of the co-polyamide include of polyamide 6 segments and polyamide 12 segments, the segments can be arranged randomly. The non-polyamide segments of the co-polyamide can comprise or consist of polyether segments, polyester segments, or both polyether segments and polyester segments. The co-polyamide can be a co-polyamide, or can be a random co-polyamide. The thermoplastic copolyamide can be formed from the polycondensation of a polyamide oligomer or prepolymer with a second oligomer prepolymer to form a copolyamide (i.e., a co-polymer including polyamide segments. Optionally, the second prepolymer can be a hydrophilic prepolymer.

In some aspects, the thermoplastic polyamide itself, or the polyamide segment of the thermoplastic copolyamide can be derived from the condensation of polyamide prepolymers, such as lactams, amino acids, and/or diamino compounds with dicarboxylic acids, or activated forms thereof. The resulting polyamide segments include amide linkages (-(CO)NH-). The term "amino acid" refers to a molecule having at least one amino group and at least one carboxyl group. Each polyamide segment of the thermoplastic polyamide can be the same or different.

In some aspects, the thermoplastic polyamide or the polyamide segment of the thermoplastic copolyamide is derived from the polycondensation of lactams and/or amino acids, and includes an amide segment having a structure shown in Formula 13, below, wherein $R_6$ is the segment of the polyamide derived from the lactam or amino acid.

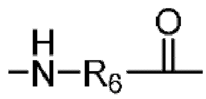

(Formula 13)

In some aspects, $R_6$ is derived from a lactam. In some cases, $R_6$ is derived from a $C_{3-20}$ lactam, or a $C_{4-15}$ lactam, or a $C_{6-12}$ lactam. For example, $R_6$ can be derived from caprolactam or laurolactam. In some cases, $R_6$ is derived from one or more amino acids. In various cases, $R_6$ is derived from a $C_{4-25}$ amino acid, or a $C_{5-20}$ amino acid, or a $C_{8-15}$ amino acid. For example, $R_6$ can be derived from 12-aminolauric acid or 11-aminoundecanoic acid.

Optionally, in order to increase the relative degree of hydrophilicity of the thermoplastic copolyamide, Formula 13 can include a polyamide-polyether block copolymer segment, as shown below:

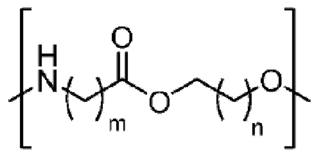

(Formula 14)

wherein m is 3-20, and n is 1-8. In some exemplary aspects, m is 4-15, or 6-12 *(e.g.,* 6, 7, 8, 9, 10, 11, or 12), and n is 1, 2, or 3. For example, m can be 11 or 12, and n can be 1 or 3. In various aspects, the thermoplastic polyamide or the polyamide segment of the thermoplastic co-polyamideis derived from the condensation of diamino compounds with dicarboxylic acids, or activated forms thereof, and includes an amide segment having a structure shown in Formula 15, below, wherein $R_7$ is the segment of the polyamide derived from the diamino compound, $R_8$ is the segment derived from the dicarboxylic acid compound:

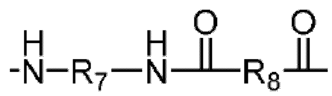

(Formula 15)

In some aspects, $R_7$ is derived from a diamino compound that includes an aliphatic group having $C_{4-15}$ carbon atoms, or $C_{5-10}$ carbon atoms, or $C_{6-9}$ carbon atoms. In some aspects, the diamino compound includes an aromatic group, such as phenyl, naphthyl, xylyl, and tolyl. Suitable diamino compounds from which $R_7$ can be derived include, but are not limited to, hexamethylene diamine (HMD), tetramethylene diamine, trimethyl hexamethylene diamine ($T_mD$),m-xylylene diamine (MXD), and 1,5-pentamine diamine. In various aspects, $R_8$ is derived from a dicarboxylic acid or activated form thereof, includes an aliphatic group having $C_{4-15}$ carbon atoms, or $C_{5-12}$ carbon atoms, or $C_{6-10}$ carbon atoms. In some cases, the dicarboxylic acid or activated form thereof from which $R_8$ can be derived includes an aromatic group, such as phenyl, naphthyl, xylyl, and tolyl groups. Suitable carboxylic acids or activated forms thereof from which $R_8$ can be derived include, but are not limited to adipic acid, sebacic acid, terephthalic acid, and isophthalic acid. In some aspects, the polymer chains are substantially free of aromatic groups.

In some aspects, each polyamide segment of the thermoplastic polyamide (including the thermoplastic copolyamide) is independently derived from a polyamide prepolymer selected from the group consisting of 12-aminolauric acid, caprolactam, hexamethylene diamine and adipic acid.

In some aspects, the thermoplastic polyamide comprises or consists of a thermoplastic poly(ether-block-amide). The thermoplastic poly(ether-block-amide) can be formed from the polycondensation of a carboxylic acid terminated polyamide prepolymer and a hydroxyl terminated polyether prepolymer to form a thermoplastic poly(ether-block-amide), as shown in Formula 16:

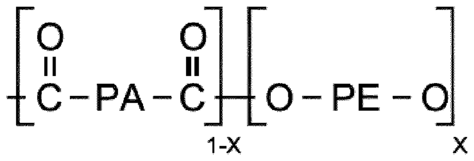

(Formula 16)

In various aspects, a disclosed poly(ether block amide) polymer is prepared by polycondensation of polyamide blocks containing reactive ends with polyether blocks containing reactive ends. Examples include, but are not limited to: 1) polyamide blocks containing diamine chain ends with polyoxyalkylene blocks containing carboxylic chain ends; 2) polyamide blocks containing dicarboxylic chain ends with polyoxyalkylene blocks containing diamine chain ends obtained by cyanoethylation and hydrogenation of aliphatic dihydroxylated alpha-omega polyoxyalkylenes known as polyether diols; 3) polyamide blocks containing dicarboxylic chain ends with polyether diols, the products obtained in this particular case being polyetheresteramides. The polyamide block of the thermoplastic poly(ether-block-amide) can be derived from lactams, amino acids, and/or diamino compounds with dicarboxylic acids as previously described. The polyether block can be derived from one or more polyethers selected from the group consisting of polyethylene oxide (PEO), polypropylene oxide (PPO), polytetrahydrofuran (PTHF), polytetramethylene oxide (PTMO), and combinations thereof.

Disclosed poly(ether block amide) polymers include those comprising polyamide blocks comprising dicarboxylic chain ends derived from the condensation of a, ω-aminocarboxylic acids, of lactams or of dicarboxylic acids and diamines in the presence of a chain-limiting dicarboxylic acid. In poly(ether block amide) polymers of this type, a a, ω-aminocarboxylic acid such as aminoundecanoic acid can be used; a lactam such as caprolactam or lauryllactam can be used; a dicarboxylic acid such as adipic acid, decanedioic acid or dodecanedioic acid can be used; and a diamine such as hexamethylenediamine can be used; or various combinations of any of the foregoing. In various aspects, the copolymer comprises polyamide blocks comprising polyamide 12 or of polyamide 6.

Disclosed poly(ether block amide) polymers include those comprising polyamide blocks derived from the condensation of one or more a, ω-aminocarboxylic acids and/or of one or more lactams containing from 6 to 12 carbon atoms in the presence of a dicarboxylic acid containing from 4 to 12 carbon atoms, and are of low mass, i.e., they have an $M_n$ of from 400 to 1000. In poly(ether block amide) polymers of this type, a a, ω-aminocarboxylic acid such as aminoundecanoic acid or aminododecanoic acid can be used; a dicarboxylic acids such as adipic acid, sebacic acid, isophthalic acid, butanedioic acid, 1,4-cyclohexyldicarboxylic acid, terephthalic acid, the sodium or lithium salt of sulphoisophthalic acid, dimerized fatty acids (these dimerized fatty acids have a dimer content of at least 98% and are preferably hydrogenated) and dodecanedioic acid $HOOC-(CH_2)_{10}-COOH$ can be used; and a lactam such as caprolactam and lauryllactam can be used; or various combinations of any of the foregoing. In various aspects, the copolymer comprises polyamide blocks obtained by condensation of lauryllactam in the presence of adipic acid or dodecanedioic acid and with a $M_n$ of 750 have a melting point of 127-130 °C. In a further aspect, the various constituents of the polyamide block and their proportion can be chosen in order to obtain a melting point of less than 150° C. and advantageously between 90° C and 135° C.

Disclosed poly(ether block amide) polymers include those comprising polyamide blocks derived from the condensation of at least one a, ω-aminocarboxylic acid (or a lactam), at least one diamine and at least one dicarboxylic acid. In copolymers of this type, a α,ω-aminocarboxylic acid, the lactam and the dicarboxylic acid can be chosen from those described herein above and the diamine such as an aliphatic diamine containing from 6 to 12 atoms and can be arylic and/or saturated cyclic such as, but not limited to, hexamethylenediamine, piperazine, 1-aminoethylpiperazine, bisaminopropylpiperazine, tetramethylenediamine, octamethylenediamine, decamethylenediamine, dodecamethylenediamine, 1,5-diaminohexane, 2,2,4-trimethyl-1,6-diaminohexane, diamine polyols, isophoronediamine (IPD), methylpentamethylenediamine (MPDM), bis(aminocyclohexyl)methane (BACM) and bis(3-methyl-4-aminocyclohexyl)methane (BMACM) can be used.

In various aspects, the constituents of the polyamide block and their proportion can be chosen in order to obtain a melting point of less than 150 °C and advantageously between 90 °C and 135 °C. In a further aspect, the various constituents of the polyamide block and their proportion can be chosen in order to obtain a melting point of less than 150 °C and advantageously between 90 °C and 135 °C.

In an aspect, the number average molar mass of the polyamide blocks can be from 300 g/mol and 15,000 g/mol, from 500 g/mol and 10,000 g/mol, from 500 g/mol and 6,000 g/mol, from 500 g/mol to 5,000 g/mol, and from 600 g/mol and 5,000 g/mol. In a further aspect, the number average molecular weight of the polyether block can range from 100 g/mol to 6,000 g/mol, from 400 g/mol to 3000 g/mol and from 200 g/mol to 3,000 g/mol. In a still further aspect, the polyether (PE) content (x) of the poly(ether block amide) polymer can be from 0.05 to 0.8 (*i.e.,* from 5 mol% to 80 mol%). In a yet further aspect, the polyether blocks can be present from 10 wt% to 50 wt%, from 20 wt% to 40 wt%, and from

30 wt% to 40 wt%. The polyamide blocks can be present from 50 wt% to 90 wt%, from 60 wt% to 80 wt%, and from 70 wt% to MK90 wt%.

In an aspect, the polyether blocks can contain units other than ethylene oxide units, such as, for example, propylene oxide or polytetrahydrofuran (which leads to polytetramethylene glycol sequences). It is also possible to use simultaneously PEG blocks, i.e. those consisting of ethylene oxide units, PPG blocks, i.e. those consisting of propylene oxide units, and P $T_m$G blocks, i.e. those consisting of tetramethylene glycol units, also known as polytetrahydrofuran. PPG or P $T_m$G blocks are advantageously used. The amount of polyether blocks in these copolymers containing polyamide and polyether blocks can be from 10 wt% to 50 wt% of the copolymer and from 35 wt% to 50 wt%.

The copolymers containing polyamide blocks and polyether blocks can be prepared by any means for attaching the polyamide blocks and the polyether blocks. In practice, two processes are essentially used, one being a 2-step process and the other a one-step process.

In the two-step process, the polyamide blocks having dicarboxylic chain ends are prepared first, and then, in a second step, these polyamide blocks are linked to the polyether blocks. The polyamide blocks having dicarboxylic chain ends are derived from the condensation of polyamide precursors in the presence of a chain-stopper dicarboxylic acid. If the polyamide precursors are only lactams or $\alpha,\omega$-aminocarboxylic acids, a dicarboxylic acid is added. If the precursors already comprise a dicarboxylic acid, this is used in excess with respect to the stoichiometry of the diamines. The reaction usually takes place between 180 and 300 °C, preferably 200 to 290 °C, and the pressure in the reactor is set between 5 and 30 bar and maintained for approximately 2 to 3 hours. The pressure in the reactor is slowly reduced to atmospheric pressure and then the excess water is distilled off, for example for one or two hours.

Once the polyamide having carboxylic acid end groups has been prepared, the polyether, the polyol and a catalyst are then added. The total amount of polyether can be divided and added in one or more portions, as can the catalyst. In an aspect, the polyether is added first and the reaction of the OH end groups of the polyether and of the polyol with the COOH end groups of the polyamide starts, with the formation of ester linkages and the elimination of water. Water is removed as much as possible from the reaction mixture by distillation and then the catalyst is introduced in order to complete the linking of the polyamide blocks to the polyether blocks. This second step takes place with stirring, preferably under a vacuum of at least 50 mbar (5000 Pa) at a temperature such that the reactants and the copolymers obtained are in the molten state. By way of example, this temperature can be between 100 and 400 °C and usually between 200 and 250 °C. The reaction is monitored by measuring the torque exerted by the polymer melt on the stirrer or by measuring the electric power consumed by the stirrer. The end of the reaction is determined by the value of the torque or of the target power. The catalyst is defined as being any product which promotes the linking of the polyamide blocks to the polyether blocks by esterification. Advantageously, the catalyst is a derivative of a metal (M) chosen from the group formed by titanium, zirconium and hafnium. In an aspect, the derivative can be prepared from a tetraalkoxides consistent with the general formula $M(OR)_4$, in which M represents titanium, zirconium or hafnium and R, which can be identical or different, represents linear or branched alkyl radicals having from 1 to 24 carbon atoms.

In a further aspect, the catalyst can comprise a salt of the metal (M), particularly the salt of (M) and of an organic acid and the complex salts of the oxide of (M) and/or the hydroxide of (M) and an organic acid. In a still further aspect, the organic acid can be formic acid, acetic acid, propionic acid, butyric acid, valeric acid, caproic acid, caprylic acid, lauric acid, myristic acid, palmitic acid, stearic acid, oleic acid, linoleic acid, linolenic acid, cyclohexanecarboxylic acid, phenylacetic acid, benzoic acid, salicylic acid, oxalic acid, malonic acid, succinic acid, glutaric acid, adipic acid, maleic acid, fumaric acid, phthalic acid and crotonic acid. Acetic and propionic acids are particularly preferred. In some aspects, M is zirconium and such salts are called zirconyl salts, *e.g.,* the commercially available product sold under the name zirconyl acetate.

In an aspect, the weight proportion of catalyst varies from 0.01 to 5% of the weight of the mixture of the dicarboxylic polyamide with the polyetherdiol and the polyol. In a further aspect, the weight proportion of catalyst varies from 0.05 to 2% of the weight of the mixture of the dicarboxylic polyamide with the polyetherdiol and the polyol.

In the one-step process, the polyamide precursors, the chain stopper and the polyether are blended together; what is then obtained is a polymer having essentially polyether blocks and polyamide blocks of very variable length, but also the various reactants that have reacted randomly, which are distributed randomly along the polymer chain. They are the same reactants and the same catalyst as in the two-step process described above. If the polyamide precursors are only lactams, it is advantageous to add a little water. The copolymer has essentially the same polyether blocks and the same polyamide blocks, but also a small portion of the various reactants that have reacted randomly, which are distributed randomly along the polymer chain. As in the first step of the two-step process described above, the reactor is closed and heated, with stirring. The pressure established is between 5 and 30 bar. When the pressure no longer changes, the reactor is put under reduced pressure while still maintaining vigorous stirring of the molten reactants. The reaction is monitored as previously in the case of the two-step process.

The proper ratio of polyamide to polyether blocks can be found in a single poly(ether block amide), or a blend of two or more different composition poly(ether block amide)s can be used with the proper average composition. In one aspect, it can be useful to blend a block copolymer having a high level of polyamide groups with a block copolymer

having a higher level of polyether blocks, to produce a blend having an average level of polyether blocks of 20 to 40 wt% of the total blend of poly(amid-block-ether) copolymers, and preferably 30 to 35 wt%. In a further aspect, the copolymer comprises a blend of two different poly(ether-block-amide)s comprising at least one block copolymer having a level of polyether blocks below 35 wt%, and a second poly(ether-block-amide) having at least 45 wt% of polyether blocks.

In various aspects, the thermoplastic polymer is a polyamide or a poly(ether-block-amide) with a melting temperature ($T_m$) from 90 °C to 120 °C when determined in accordance with AS $T_m$ D3418-97 as described herein below. In a further aspect, the thermoplastic polymer is a polyamide or a poly(ether-block-amide) with a melting temperature ($T_m$) from 93 °C to 99 °C when determined in accordance with AS $T_m$ D3418-97 as described herein below. In a still further aspect, the thermoplastic polymer is a polyamide or a poly(ether-block-amide) with a melting temperature ($T_m$) from 112 °C to 118 °C when determined in accordance with AS $T_m$ D3418-97 as described herein below. In some aspects, the thermoplastic polymer is a polyamide or a poly(ether-block-amide) with a melting temperature of 90 °C, 91 °C, 92 °C, 93 °C, 94 °C, 95 °C, 96 °C, 97 °C, 98 °C, 99 °C, 100 °C, 101 °C, 102 °C, 103 °C, 104 °C, 105 °C, 106 °C, 107 °C, 108 °C, 109 °C, 110 °C, 111 °C, 112 °C, 113 °C, 114 °C, 115 °C, 116 °C, 117 °C, 118 °C, 119 °C, 120 °C, any range of melting temperature ($T_m$) values encompassed by any of the foregoing values, or any combination of the foregoing melting temperature ($T_m$) values, when determined in accordance with AS $T_m$ D3418-97 as described herein below.

In various aspects, the thermoplastic polymer is a polyamide or a poly(ether-block-amide) with a glass transition temperature ($T_g$) from -20 °C to 30 °C when determined in accordance with AS $T_m$ D3418-97 as described herein below. In a further aspect, the thermoplastic polymer is a polyamide or a poly(ether-block-amide) with a glass transition temperature ($T_g$) from -13 °C to - 7 °C when determined in accordance with AS $T_m$ D3418-97 as described herein below. In a still further aspect, the thermoplastic polymer is a polyamide or a poly(ether-block-amide) with a glass transition temperature ($T_g$) from 17 °C to 23 °C when determined in accordance with AS $T_m$ D3418-97 as described herein below. In some aspects, the thermoplastic polymer is a polyamide or a poly(ether-block-amide) with a glass transition temperature ($T_g$) of -20 °C, -19 °C, -18 °C, - 17 °C, -16 °C, -15 °C, -14 °C, -13 °C, -12 °C, -10 °C, -9 °C, -8 °C, -7 °C, -6 °C, -5 °C, -4 °C, - 3 °C, -2 °C, -1 °C, 0 °C, 1 °C, 2 °C, 3 °C, 4 °C, 5 °C, 6 °C, 7 °C, 8 °C, 9 °C, 10 °C, 11 °C, 12 °C, 13 °C, 14 °C, 15 °C, 16 °C, 17 °C, 18 °C, 19 °C, 20 °C, any range of glass transition temperature values encompassed by any of the foregoing values, or any combination of the foregoing glass transition temperature values, when determined in accordance with AS $T_m$ D3418-97 as described herein below.

In various aspects, the thermoplastic polymer is a polyamide or a poly(ether-block-amide) with a melt flow index from 10 $cm^3$/10 min to 30 $cm^3$/10 min when tested in accordance with AS $T_m$ D1238-13 as described herein below at 160 °C using a weight of 2.16 kg. In a further aspect, the thermoplastic polymer is a polyamide or a poly(ether-block-amide) with a melt flow index from 22 $cm^3$/10 min to 28 $cm^3$/10 min when tested in accordance with AS $T_m$ D1238-13 as described herein below at 160 °C using a weight of 2.16 kg. In some aspects, the thermoplastic polymer is a polyamide or a poly(ether-block-amide) with a melt flow index of 10 $cm^3$/10 min, 11 $cm^3$/10 min, 12 $cm^3$/10 min, 13 $cm^3$/10 min, 14 $cm^3$/10 min, 15 $cm^3$/10 min, 16 $cm^3$/10 min, 17 $cm^3$/10 min, of 18 $cm^3$/10 min, 19 $cm^3$/10 min, of 20 $cm^3$/10 min, 21 $cm^3$/10 min, 22 $cm^3$/10 min, 23 $cm^3$/10 min, 24 $cm^3$/10 min, 25 $cm^3$/10 min, 26 $cm^3$/10 min, 27 $cm^3$/10 min, of 28 $cm^3$/10 min, 29 $cm^3$/10 min, of 30 $cm^3$/10 min, any range of melt flow index values encompassed by any of the foregoing values, or any combination of the foregoing melt flow index values, when determined in accordance with AS $T_m$ D1238-13 as described herein below at 160 °C using a weight of 2.16 kg.

In various aspects, the thermoplastic polymer is a polyamide or a poly(ether-block-amide) with a cold Ross flex test result of 120,000 to 180,000 when tested on a thermoformed plaque of the polyamide or the poly(ether-block-amide) in accordance with the cold Ross flex test as described herein below. In a further aspect, the thermoplastic polymer is a polyamide or a poly(ether-block-amide) with a cold Ross flex test result of 140,000 to 160,000 when tested on a thermoformed plaque of the polyamide or the poly(ether-block-amide) in accordance with the cold Ross flex test as described herein below. In a still further aspect, the thermoplastic polymer is a polyamide or a poly(ether-block-amide) with a cold Ross flex test result of 130,000 to 170,000 when tested on a thermoformed plaque of the polyamide or the poly(ether-block-amide) in accordance with the cold Ross flex test as described herein below. In some aspects, the thermoplastic polymer is a polyamide or a poly(ether-block-amide) with a cold Ross flex test result of 120,000, 125,000, 130,000, 135,000, 140,000, 145,000, 150,000, 155,000, 160,000, 165,000, 170,000, 175,000, 180,000, any range of cold Ross flex test values encompassed by any of the foregoing values, or any combination of the foregoing cold Ross flex test values, when tested on a thermoformed plaque of the polyamide or the poly(ether-block-amide) in accordance with the cold Ross flex test as described herein below.

In various aspects, the thermoplastic polymer is a polyamide or a poly(ether-block-amide) with a modulus from 5 MPa tom100 MPa when determined on a thermoformed plaque in accordance with AS $T_m$ D412-98 Standard Test Methods for Vulcanized Rubber and Thermoplastic Rubbers and Thermoplastic Elastomers-Tension with modifications described herein below. In a further aspect, the thermoplastic polymer is a polyamide or a poly(ether-block-amide) with a modulus from 20 MPa to 80 MPa when determined on a thermoformed plaque in accordance with AS $T_m$ D412-98 Standard Test Methods for Vulcanized Rubber and Thermoplastic Rubbers and Thermoplastic Elastomers-Tension with

modifications described herein below. In some aspects, the thermoplastic polymer is a polyamide or a poly(ether-block-amide) with a modulus of 5 MPa, 10 MPa, 15 MPa, 20 MPa, 25 MPa, 30 MPa, 35 MPa, 40 MPa, 45 MPa, 50 MPa, 55 MPa, 60 MPa, 65 MPa, 70 MPa, 75 MPa, 80 MPa, 85 MPa, 90 MPa, 95 MPa, 100 MPa, any range of modulus values encompassed by any of the foregoing values, or any combination of the foregoing modulus values, when tested on a thermoformed plaque of the polyamide or the poly(ether-block-amide) in accordance with AS $T_m$ D412-98 Standard Test Methods for Vulcanized Rubber and Thermoplastic Rubbers and Thermoplastic Elastomers-Tension with modifications described herein below.

In various aspects, the thermoplastic polymer is a polyamide or a poly(ether-block-amide) with a melting temperature ($T_m$) of 115 °C when determined in accordance with AS $T_m$ D3418-97 as described herein below; a glass transition temperature ($T_g$) of -10 °C when determined in accordance with AS $T_m$ D3418-97 as described herein below; a melt flow index of 25 $cm^3$/10 min when tested in accordance with AS $T_m$ D1238-13 as described herein below at 160 °C using a weight of 2.16 kg; a cold Ross flex test result of 150,000 when tested on a thermoformed plaque in accordance with the cold Ross flex test as described herein below; and a modulus from 25 MPa to 70 MPa when determined on a thermoformed plaque in accordance with AS $T_m$ D412-98 Standard Test Methods for Vulcanized Rubber and Thermoplastic Rubbers and Thermoplastic Elastomers-Tension with modifications described herein below.

In various aspects, the thermoplastic polymer is a polyamide or a poly(ether-block-amide) with a melting temperature ($T_m$) of 96 °C when determined in accordance with AS $T_m$ D3418-97 as described herein below; a glass transition temperature ($T_g$) of 20 °C when determined in accordance with AS $T_m$ D3418-97 as described herein below; a cold Ross flex test result of 150,000 when tested on a thermoformed plaque in accordance with the cold Ross flex test as described herein below; and a modulus of less than or equal to 10 MPa a when determined on a thermoformed plaque in accordance with AS $T_m$ D412-98 Standard Test Methods for Vulcanized Rubber and Thermoplastic Rubbers and Thermoplastic Elastomers-Tension with modifications described herein below.

In various aspects, the thermoplastic polymer is a polyamide or a poly(ether-block-amide) is a mixture of a first polyamide or a poly(ether-block-amide) with a melting temperature ($T_m$) of 115 °C when determined in accordance with AS $T_m$ D3418-97 as described herein below; a glass transition temperature ($T_g$) of -10 °C when determined in accordance with AS $T_m$ D3418-97 as described herein below; a melt flow index of 25 $cm^3$/10 min when tested in accordance with AS $T_m$ D1238-13 as described herein below at 160 °C using a weight of 2.16 kg; a cold Ross flex test result of 150,000 when tested on a thermoformed plaque in accordance with the cold Ross flex test as described herein below; and a modulus from 25 MPa to 70 MPa when determined on a thermoformed plaque in accordance with AS $T_m$ D412-98 Standard Test Methods for Vulcanized Rubber and Thermoplastic Rubbers and Thermoplastic Elastomers-Tension with modifications described herein below; and a second polyamide or a poly(ether-block-amide) with a melting temperature ($T_m$) of 96 °C when determined in accordance with AS $T_m$ D3418-97 as described herein below; a glass transition temperature ($T_g$) of 20 °C when determined in accordance with AS $T_m$ D3418-97 as described herein below; a cold Ross flex test result of 150,000 when tested on a thermoformed plaque in accordance with the cold Ross flex test as described herein below; and a modulus of less than or equal to 10 MPa a when determined on a thermoformed plaque in accordance with AS $T_m$ D412-98 Standard Test Methods for Vulcanized Rubber and Thermoplastic Rubbers and Thermoplastic Elastomers-Tension with modifications described herein below.

Exemplary commercially available copolymers include, but are not limited to, those available under the tradenames of VESTAMID® (Evonik Industries); PLATAMID® (Arkema), *e.g.,* product code H2694; PEBAX® (Arkema), *e.g.,* product code "PEBAX MH1657" and "PEBAX MV1074"; PEBAX® RNEW (Arkema); GRILAMID® (EMS-Chemie AG), or also to other similar materials produced by various other suppliers.

In some examples, the thermoplastic polyamide is physically crosslinked through, *e.g.,* nonpolar or polar interactions between the polyamide groups of the polymers. In examples where the thermoplastic polyamide is a thermoplastic copolyamide, the thermoplastic copolyamide can be physically crosslinked through interactions between the polyamide groups, an optionally by interactions between the copolymer groups. When the thermoplastic copolyamide is physically crosslinked thorough interactions between the polyamide groups, the polyamide segments can form the portion of the polymer referred to as the "hard segment", and copolymer segments can form the portion of the polymer referred to as the "soft segment". For example, when the thermoplastic copolyamide is a thermoplastic poly(ether-block-amide), the polyamide segments form the hard segment portion of the polymer, and polyether segments can form the soft segment portion of the polymer. Therefore, in some examples, the thermoplastic polymer can include a physically crosslinked polymeric network having one or more polymer chains with amide linkages.

In some aspects, the polyamide segment of the thermoplastic co-polyamide includes polyamide-11 or polyamide-12 and the polyether segment is a segment selected from the group consisting of polyethylene oxide, polypropylene oxide, and polytetramethylene oxide segments, and combinations thereof.

Optionally, the thermoplastic polyamide can be partially covalently crosslinked, as previously described herein. In such cases, it is to be understood that the degree of crosslinking present in the thermoplastic polyamide is such that, when it is thermally processed in the form of a yarn or fiber to form the articles of footwear of the present disclosure, the partially covalently crosslinked thermoplastic polyamide retains sufficient thermoplastic character that the partially covalently crosslinked thermoplastic polyamide is softened or melted during the processing and re-solidifies.

Thermoplastic Polyesters

In aspects, the thermoplastic polymers can comprise a thermoplastic polyester. The thermoplastic polyester can be formed by reaction of one or more carboxylic acids, or its ester-forming derivatives, with one or more bivalent or multivalent aliphatic, alicyclic, aromatic or araliphatic alcohols or a bisphenol. The thermoplastic polyester can be a polyester homopolymer having repeating polyester segments of the same chemical structure. Alternatively, the polyester can comprise a number of polyester segments having different polyester chemical structures *(e.g.,* polyglycolic acid segments, polylactic acid segments, polycaprolactone segments, polyhydroxyalkanoate segments, polyhydroxybutyrate segments, etc.). The polyester segments having different chemical structure can be arranged randomly, or can be arranged as repeating blocks.

Exemplary carboxylic acids that that can be used to prepare a thermoplastic polyester include, but are not limited to, adipic acid, pimelic acid, suberic acid, azelaic acid, sebacic acid, nonane dicarboxylic acid, decane dicarboxylic acid, undecane dicarboxylic acid, terephthalic acid, isophthalic acid, alkyl-substituted or halogenated terephthalic acid, alkyl-substituted or halogenated isophthalic acid, nitro-terephthalic acid, 4,4'-diphenyl ether dicarboxylic acid, 4,4'-diphenyl thioether dicarboxylic acid, 4,4'-diphenyl sulfone-dicarboxylic acid, 4,4'-diphenyl alkylenedicarboxylic acid, naphthalene-2,6-dicarboxylic acid, cyclohexane-1,4-dicarboxylic acid and cyclohexane-1,3-dicarboxylic acid. Exemplary diols or phenols suitable for the preparation of the thermoplastic polyester include, but are not limited to, ethylene glycol, diethylene glycol, 1,3-propanediol, 1,4-butanediol, 1,6-hexanediol, 1,8-octanediol, 1,10-decanediol, 1,2-propanediol, 2,2-dimethyl-1,3-propanediol, 2,2,4-trimethylhexanediol, p-xylenediol, 1,4-cyclohexanediol, 1,4-cyclohexane dimethanol, and bis-phenol A.

In some aspects, the thermoplastic polyester is a polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), a liquid crystal polyester, or a blend or mixture of two or more of the foregoing.

The thermoplastic polyester can be a co-polyester (i.e., a co-polymer including polyester segments and non-polyester segments). The co-polyester can be an aliphatic co-polyester (i.e., a co-polyester in which both the polyester segments and the non-polyester segments are aliphatic). Alternatively, the co-polyester can include aromatic segments. The polyester segments of the co-polyester can comprise or consist of polyglycolic acid segments, polylactic acid segments, polycaprolactone segments, polyhydroxyalkanoate segments, polyhydroxybutyrate segments, or any combination thereof. The polyester segments of the co-polyester can be arranged randomly, or can be arranged as repeating blocks.

For example, the thermoplastic polyester can be a block co-polyester having repeating blocks of polymeric units of the same chemical structure (segments) which are relatively harder (hard segments), and repeating blocks of polymeric segments which are relatively softer (soft segments). In block co-polyesters, including block co-polyesters having repeating hard segments and soft segments, physical crosslinks can be present within the blocks or between the blocks or both within and between the blocks. In a particular example, the thermoplastic material can comprise or consist essentially of an elastomeric thermoplastic co-polyester having repeating blocks of hard segments and repeating blocks of soft segments.

The non-polyester segments of the co-polyester can comprise or consist of polyether segments, polyamide segments, or both polyether segments and polyamide segments. The co-polyester can be a block co-polyester, or can be a random co-polyester. The thermoplastic co-polyester can be formed from the polycodensation of a polyester oligomer or prepolymer with a second oligomer prepolymer to form a block copolyester. Optionally, the second prepolymer can be a hydrophilic prepolymer. For example, the co-polyester can be formed from the polycondensation of terephthalic acid or naphthalene dicarboxylic acid with ethylene glycol, 1,4-butanediol, or 1-3 propanediol. Examples of co-polyesters include polyethelene adipate, polybutylene succinate, poly(3-hydroxbutyrate-co-3-hydroxyvalerate), polyethylene terephthalate, polybutylene terephthalate, polytrimethylene terephthalate, polyethylene napthalate, and combinations thereof. In a particular example, the co-polyamide can comprise or consist of polyethylene terephthalate.

In some aspects, the thermoplastic polyester is a block copolymer comprising segments of one or more of polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), and a liquid crystal polyester. For example, a suitable thermoplastic polyester that is a block copolymer can be a PET/PEI copolymer, a polybutylene terephthalate/tetraethylene glycol copolymer, a polyoxyalkylenediimide diacid/polybutylene terephthalate copolymer, or a blend or mixture of any of the foregoing.

In some aspects, the thermoplastic polyester is a biodegradable resin, for example, a copolymerized polyester in which poly(a-hydroxy acid) such as polyglycolic acid or polylactic acid is contained as principal repeating units.

The disclosed thermoplastic polyesters can be prepared by a variety of polycondensation methods known to

the skilled artisan, such as a solvent polymerization or a melt polymerization process.

Thermoplastic Polyolefins

In some aspects, the thermoplastic polymers can comprise or consist essentially of a thermoplastic polyolefin. Exemplary of thermoplastic polyolefins useful can include, but are not limited to, polyethylene, polypropylene, and thermoplastic olefin elastomers (*e.g.*,metallocene-catalyzed block copolymers of ethylene and $\alpha$-olefins having 4 to 8 carbon atoms). In a further aspect, the thermoplastic polyolefin is a polymer comprising a polyethylene, an ethylene-$\alpha$-olefin copolymer, an ethylene-propylene rubber (EPDM), a polybutene, a polyisobutylene, a poly-4-methylpent-1-ene, a polyisoprene, a polybutadiene, a ethylene-methacrylic acid copolymer, and an olefin elastomer such as a dynamically cross-linked polymer obtained from polypropylene (PP) and an ethylene-propylene rubber (EPDM), and blends or mixtures of the foregoing. Further exemplary thermoplastic polyolefins useful in the disclosed compositions, yarns, and fibers are polymers of cycloolefins such as cyclopentene or norbornene.

It is to be understood that polyethylene, which optionally can be crosslinked, is inclusive a variety of polyethylenes, including, but not limited to, low density polyethylene (LDPE), linear low density polyethylene (LLDPE), (VLDPE) and (ULDPE), medium density polyethylene (MDPE), high density polyethylene (HDPE), high density and high molecular weight polyethylene (HDPE-HMW), high density and ultrahigh molecular weight polyethylene (HDPE-UHMW), and blends or mixtures of any the foregoing polyethylenes. A polyethylene can also be a polyethylene copolymer derived from monomers of monolefins and diolefins copolymerized with a vinyl, acrylic acid, methacrylic acid, ethyl acrylate, vinyl alcohol, and/or vinyl acetate. Polyolefin copolymers comprising vinyl acetate-derived units can be a high vinyl acetate content copolymer, *e.g.,* greater than 50 wt% vinyl acetate-derived composition.

In some aspects, the thermoplastic polyolefin, as disclosed herein, can be formed through free radical, cationic, and/or anionic polymerization by methods well known to those skilled in the art *(e.g.,* using a peroxide initiator, heat, and/or light). In a further aspect, the disclosed thermoplastic polyolefin can be prepared by radical polymerization under high pressure and at elevated temperature. Alternatively, the thermoplastic polyolefin can be prepared by catalytic polymerization using a catalyst that normally contains one or more metals from group IVb, Vb, Vlb or VIII metals. The catalyst usually has one or more than one ligand, typically oxides, halides, alcoholates, esters, ethers, amines, alkyls, alkenyls and/or aryls that can be either p- or s-coordinated complexed with the group IVb, Vb, Vlb or VIII metal. In various aspects, the metal complexes can be in the free form or fixed on substrates, typically on activated magnesium chloride, titanium(III) chloride, alumina or silicon oxide. It is understood that the metal catalysts can be soluble or insoluble in the polymerization medium. The catalysts can be used by themselves in the polymerization or further activators can be used, typically a group Ia, IIa and/or IIIa metal alkyls, metal hydrides, metal alkyl halides, metal alkyl oxides or metal alkyloxanes. The activators can be modified conveniently with further ester, ether, amine or silyl ether groups.

Suitable thermoplastic polyolefins can be prepared by polymerization of monomers of monolefins and diolefins as described herein. Exemplary monomers that can be used to prepare disclosed thermoplastic polyolefin include, but are not limited to, ethylene, propylene, 1-butene, 1-pentene, 1-hexene, 2-methyl-1-propene, 3-methyl-1-pentene, 4-methyl-1-pentene, 5-methyl-1-hexene and mixtures thereof.

Suitable ethylene-$\alpha$-olefin copolymers can be obtained by copolymerization of ethylene with an $\alpha$-olefin such as propylene, butene-1, hexene-1, octene-1,4-methyl-1-pentene or the like having carbon numbers of 3 to 12.

Suitable dynamically cross-linked polymers can be obtained by cross-linking a rubber component as a soft segment while at the same time physically dispersing a hard segment such as PP and a soft segment such as EPDM by using a kneading machine such as a Banbbury mixer and a biaxial extruder.

In some aspects, the thermoplastic polyolefin can be a mixture of thermoplastic polyolefins, such as a mixture of two or more polyolefins disclosed herein above. For example, a suitable mixture of thermoplastic polyolefins can be a mixture of polypropylene with polyisobutylene, polypropylene with polyethylene (for example PP/HDPE, PP/LDPE) or mixtures of different types of polyethylene (for example LDPE/HDPE).

In some aspects, the thermoplastic polyolefin can be a copolymer of suitable monolefin monomers or a copolymer of a suitable monolefin monomer and a vinyl monomer. Exemplary thermoplastic polyolefin copolymers include, but are not limited to, ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidenenorbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof

with other polymers, for example polyamides.

In some aspects, the thermoplastic polyolefin can be a polypropylene homopolymer, a polypropylene copolymers, a polypropylene random copolymer, a polypropylene block copolymer, a polyethylene homopolymer, a polyethylene random copolymer, a polyethylene block copolymer, a low density polyethylene (LDPE), a linear low density polyethylene (LLDPE), a medium density polyethylene, a high density polyethylene (HDPE), or blends or mixtures of one or more of the preceding polymers.

In some aspects, the polyolefin is a polypropylene. The term "polypropylene," as used herein, is intended to encompass any polymeric composition comprising propylene monomers, either alone or in mixture or copolymer with other randomly selected and oriented polyolefins, dienes, or other monomers (such as ethylene, butylene, and the like). Such a term also encompasses any different configuration and arrangement of the constituent monomers (such as atactic, syndiotactic, isotactic, and the like). Thus, the term as applied to fibers is intended to encompass actual long strands, tapes, threads, and the like, of drawn polymer. The polypropylene can be of any standard melt flow (by testing); however, standard fiber grade polypropylene resins possess ranges of Melt Flow Indices between 1 and 1000.

In some aspects, the polyolefin is a polyethylene. The term" polyethylene," as used herein, is intended to encompass any polymeric composition comprising ethylene monomers, either alone or in mixture or copolymer with other randomly selected and oriented polyolefins, dienes, or other monomers (such as propylene, butylene, and the like). Such a term also encompasses any different configuration and arrangement of the constituent monomers (such as atactic, syndiotactic, isotactic, and the like). Thus, the term as applied to fibers is intended to encompass actual long strands, tapes, threads, and the like, of drawn polymer. The polyethylene can be of any standard melt flow (by testing); however, standard fiber grade polyethylene resins possess ranges of Melt Flow Indices between 1 and 1000.

**Methods of Making Resin Compositions**

In various aspects, this disclosure also provides a method for making a resin composition, the method including blending a polypropylene polymer and an effective amount of a polymeric resin modifier, wherein the effective amount of the polymeric resin modifier is effective to allow the resin composition to pass a flex test pursuant to the Cold Ross Flex Test using the Plaque Sampling Procedure.

A method is provided for making a resin composition, the method including blending a polypropylene polymer and an effective amount of a polymeric resin modifier, wherein the effective amount of the polymeric resin modifier is effective to allow the resin composition to pass a flex test pursuant to the Cold Ross Flex Test using the Plaque Sampling Procedure without a significant change in abrasion loss when measured pursuant to ASTM D 5963-97a using the Material Sampling Procedure.

The resin compositions provided herein can be made by blending an effective amount of a polymeric resin modifier and a polyolefin polymer to form a blended resin composition, wherein the effective amount is as described above. Methods of blending polymers can include film blending in a press, blending in a mixer (e.g. mixers commercially available under the tradename "HAAKE" from Thermo Fisher Scientific, Waltham, MA), solution blending, hot melt blending, and extruder blending. In some aspects, the polymeric resin modifier and polyolefin copolymer are miscible such that they can be readily mixed by the screw in the injection barrel during injection molding, e.g. without the need for a separate blending step.

The resin compositions provided herein can be made by blending an effective amount of an isotactic polyolefin polymer resin modifier, wherein the effective amount is an amount effective to allow the resin composition to pass a flex test pursuant to the Cold Ross Flex Test using the Plaque Sampling Procedure, where a second resin composition identical to the resin composition except without the isotactic polyolefin copolymer resin modifier fails the flex test pursuant to the Cold Ross Flex Test using the Plaque Sampling Procedure. The effective amount can be an amount effective to maintain an abrasion loss of the resin composition within 20% of an abrasion loss of the second resin composition as measured pursuant to ASTM D 5963-97a using the Material Sampling Procedure. The effective amount can be the effective amount of the isotactic polyolefin copolymer resin modifier is an amount effective to decrease a % crystallization of the resin composition by at least 4 percentage points as compared to a % crystallization of the second resin composition when measured according to the Differential Scanning Calorimeter (DSC) Test using the Material Sampling Procedure.

The methods can further include extruding the blended resin composition to form an extruded resin composition. The methods of extruding the blended resin can include manufacturing long products of relatively constant cross-section (rods, sheets, pipes, films, wire insulation coating). The methods of extruding the blended resin can include conveying a softened blended resin composition through a die with an opening. The blended resin can be conveyed forward by a feeding screw and forced through the die. Heating elements, placed over the barrel, can soften and melt the blended resin. The temperature of the material can be controlled by thermocouples. The product going out of the die can be cooled by blown air or in a water bath to form the extruded resin composition. Alternatively, the product going out of the die can be pelletized with little cooling as described below.

The method can further include pelletizing the extruded resin composition to form a pelletized resin composition.

Methods of pelletizing can include melt pelletizing (hot cut) whereby the melt coming from a die is almost immediately cut into pellets that are conveyed and cooled by liquid or gas. Methods of pelletizing can include strand pelletizing (cold cut) whereby the melt coming from the die head is converted into strands (the extruded resin composition) that are cut into pellets after cooling and solidification.

The method can further include injection molding the pelletized resin composition to form an article. The injection molding can include the use of a non-rotating, cold plunger to force the pelletized resin through a heated cylinder wherein the resin composition is heated by heat conducted from the walls of the cylinder to the resin composition. The injection molding can include the use of a rotating screw, disposed co-axially of a heated barrel, for conveying the pelletized resin composition toward a first end of the screw and to heat the resin composition by the conduction of heat from the heated barrel to the resin composition. As the resin composition is conveyed by the screw mechanism toward the first end, the screw is translated toward the second end so as to produce a reservoir space at the first end. When sufficient melted resin composition is collected in the reservoir space, the screw mechanism can be pushed toward the first end so as to inject the material into a selected mold.

**Property Analysis And Characterization Procedure**

Adhesive Peel Strength Test

The adhesive peel strength test is determined according the following test method. The test can be performed on a strip of a first component and a second component that are adhesively bonded at an interface. The strip can be obtained using the Strip Sampling Procedure.

Intervals are marked out along the length of the test strip, and a maximum number of intervals can be set to 32 intervals. The intervals should have a length of 2 cm to 4 cm. One of the first component and the second component is then clamped into the upper clamp of the test machine. The other component is clamped into the lower clamp, ensuring the test strip is oriented correctly when it is held by the testing fixture throughout the testing and readjusting as needed. The first component and the second component are pulled apart by the test machine at a rate of 200 millimeters per minute (which can be reduced to as low as 50 millimeters per minutes in areas of difficult separation). There should be clear and distinct bond separation between the two components when the test is in progress. If not, a knife can be used to guide the bond separation between the two components, but use of the knife should be stopped when separation is straight back to normal position. Once the machine reaches the end of its testing daylight, the test should be stopped to regrip the components. Re-grip should be completed at least every 5 intervals immediately after starting a new interval. The testing should be repeated for the entire length of the test strip. The adhesive strength should be recorded in units of kilograms force per centimeter.

Cold Ross Flex Test

The cold Ross flex test is determined according the following test method. The test can be performed on a plaque obtained using the Plaque Sampling Procedure.

The purpose of this test is to evaluate the resistance to cracking of a sample under repeated flexing to a 60 degree angle in a cold environment. A molded plaque of the material for testing is sized to fit inside the flex tester machine. Each material is tested as five separate samples. The flex tester machine is capable of flexing samples to 60 degrees at a rate of 100 +/-5 cycles per minute. The mandrel diameter of the machine is 10 millimeters. The flex tester machine is a Gotech GT-7006. The sample(s) are inserted into the machine according to the specific parameters of the flex machine. The machine is placed in a freezer set to -6 °C for the test. The motor is turned on to begin flexing with the flexing cycles counted until the sample forms visible creases (e.g., whitens), or cracks. Cracking of the sample means that the surface of the material is physically split. Visible creases of lines that do not actually penetrate the surface are not cracks. The number of flex cycles the sample is exposed to is measured to a point where visible creases develop in the sample or until the sample has cracked but not yet broken in two, whichever comes first. The term "visible," as used herein, means capable of being perceived at a distance of 12 inches by an unimpeded naked eye of a viewer having 20/20 vision under ambient light levels of 1000 foot candles. A sample which develops visible creases or cracks before completing 150,000 flex cycles is considered to fail the test, while a sample which has not developed visible creases or cracks after completing 150,000 flex cycles is considered to pass the cold Ross flex test.

Deutsches Institut für Normung (DIN) Abrasion Loss Test ASTM D 5963-97a

Abrasion loss is tested on cylindrical test pieces with a diameter of 16±0.2 mm and a minimum thickness of 6 mm cut from sheets using a ASTM standard hole drill. The abrasion loss is measured using Method B of ASTM D 5963-97a on a Gotech GT-7012-D abrasion test machine. The tests are performed as 22°C with an abrasion path of 40

meters. The Standard Rubber #1 used in the tests has a density of 1.336 grams per cubic centimeter (g/$cm^3$). The smaller the abrasion loss volume, the better the abrasion resistance.

Mud Pull Off Testing Method

A two-inch diameter material sample is cut and affixed to the top plate of a set of parallel, flat aluminum test plates on a standard mechanical testing machine (e.g. Instron tensile testing equipment.) A 1-inch diameter mud sample, approximately 7 millimeter in height is loaded onto the bottom plate of the mechanical tester. The soil used to make the mud is commercially available under the tradename "TIMBERLINE TOP SOIL", model 50051562, from Timberline (subsidiary of Old Castle, Inc., Atlanta, Ga.) and was sifted with a square mesh with a pore dimension of 1.5 millimeter on each side. The mud was previously dried and then diluted to water to 22% water by weight. The force transducers are normalized to zero force. The plates are then pressed together to a load of 445 Newtons in the compressive direction. The load is then immediately removed and a small force hysteresis is measured at the mud detachment point that is greater than the tared value of zero in the tensile direction. The maximum force measured is the pull off force for the mud adhesion to the material substrate. The compression/detachment cycle is repeated at least 10 times until a stable value is obtained.

Differential Scanning Calorimeter (DSC) Test

To determine percent crystallinity of a resin composition including a copolymer and a polymeric resin modifier, samples of the copolymer, the resin composition, and of a homopolymer of the main component of the copolymer (e.g., polypropylene homopolymer polypropylene) are all analyzed by differential scanning calorimetry (DSC) over the temperature range from -80 °C to 250°C. A heating rate of 10 °C per minute is used. The melting endotherm is measured for each sample during heating. Universal Analysis software (TA Instruments, New Castle, DE, USA) is used to calculate percent crystallinity (% crystallinity) based upon the melting endotherm for the homopolymer (e.g., 207 Joules per gram for 100% crystalline polypropylene material). Specifically, the percent crystallinity (% crystallinity) is calculated by dividing the melting endotherm measured for the copolymer or for the resin composition by the 100% crystalline homopolymer melting endotherm.

Method to Determine the Creep Relation Temperature $T_{cr}$.

The creep relation temperature $T_{cr}$ is determined according to the exemplary techniques described in U.S. Patent No. 5,866,058. The creep relaxation temperature $T_{cr}$ is calculated to be the temperature at which the stress relaxation modulus of the tested material is 10% relative to the stress relaxation modulus of the tested material at the solidification temperature of the material, where the stress relaxation modulus is measured according to AS $T_m$ E328-02. The solidification temperature is defined as the temperature at which there is little to no change in the stress relaxation modulus or little to no creep about 300 seconds after a stress is applied to a test material, which can be observed by plotting the stress relaxation modulus (in Pa) as a function of temperature (in °C).

Method to Determine the Vicat Softening Temperature $T_{vs}$.

The Vicat softening temperature $T_{vs}$ is be determined according to the test method detailed in AS $T_m$ D1525-09 Standard Test Method for Vicat Softening Temperature of Plastics, preferably using Load A and Rate A. Briefly, the Vicat softening temperature is the temperature at which a flat-ended needle penetrates the specimen to the depth of 1 mm under a specific load. The temperature reflects the point of softening expected when a material is used in an elevated temperature application. It is taken as the temperature at which the specimen is penetrated to a depth of 1 mm by a flat-ended needle with a 1 $mm^2$ circular or square cross-section. For the Vicat A test, a load of 10 N is used, whereas for the Vicat B test, the load is 50 N. The test involves placing a test specimen in the testing apparatus so that the penetrating needle rests on its surface at least 1 mm from the edge. A load is applied to the specimen per the requirements of the Vicat A or Vicate B test. The specimen is then lowered into an oil bath at 23 °C. The bath is raised at a rate of 50 °C or 120 °C per hour until the needle penetrates 1 mm. The test specimen must be between 3 and 6.5 mm thick and at least 10 mm in width and length. No more than three layers can be stacked to achieve minimum thickness.

Method to Determine the Heat DeflectionTemperature $T_{hd}$.

The heat deflection temperature $T_{hd}$ is be determined according to the test method detailed in AS $T_m$ D648-16 Standard Test Method for Deflection Temperature of Plastics Under Flexural Load in the Edgewise Position, using a 0.455 MPa applied stress. Briefly, the heat deflection temperature is the temperature at which a polymer or plastic sample

deforms under a specified load. This property of a given plastic material is applied in many aspects of product design, engineering, and manufacture of products using thermoplastic components. In the test method, the bars are placed under the deflection measuring device and a load (0.455 MPa) of is placed on each specimen. The specimens are then lowered into a silicone oil bath where the temperature is raised at 2° C per minute until they deflect 0.25 mm per AS $T_m$ D648-16. AS $T_m$ uses a standard bar 5" x ½" x ¼". ISO edgewise testing uses a bar 120mm x 10mm x 4mm. ISO flatwise testing uses a bar 80mm x 10mm x 4mm.

Method to Determine the Melting Temperature, $T_m$, and Glass Transition Temperature, $T_{g.}$

The melting temperature $T_m$ and glass transition temperature $T_g$ are determined using a commercially available Differential Scanning Calorimeter ("DSC") in accordance with AS $T_m$ D3418-97. Briefly, a 10-15 gram sample is placed into an aluminum DSC pan and then the lead was sealed with the crimper press. The DSC is configured to scan from -100°C to 225°C with a 20 °C/minute heating rate, hold at 225°C for 2 minutes, and then cool down to 25°C at a rate of - 10 °C/minute. The DSC curve created from this scan is then analyzed using standard techniques to determine the glass transition temperature $T_g$ and the melting temperature $T_m$.

Method to Determine the Melt Flow Index.

The melt flow index is determined according to the test method detailed in AS $T_m$ D1238-13 Standard Test Method for Melt Flow Rates of Thermoplastics by Extrusion Plastometer, using Procedure A described therein. Briefly, the melt flow index measures the rate of extrusion of thermoplastics through an orifice at a prescribed temperature and load. In the test method, approximately 7 grams of the material is loaded into the barrel of the melt flow apparatus, which has been heated to a temperature specified for the material. A weight specified for the material is applied to a plunger and the molten material is forced through the die. A timed extrudate is collected and weighed. Melt flow rate values are calculated in g/10 min.

Method to Determine the Modulus (plaque).

The modulus for a thermoformed plaque of material is determined according to the test method detailed in AS $T_m$ D412-98 Standard Test Methods for Vulcanized Rubber and Thermoplastic Rubbers and Thermoplastic Elastomers-Tension, with the following modifications. The sample dimension is the AS $T_m$D412-98 Die C, and the sample thickness used is 2.0 millimeters +/- 0.5 millimeters. The grip type used is a pneumatic grip with a metal serrated grip face. The grip distance used is 75 millimeters. The loading rate used is 500 millimeters/minute. The modulus (initial) is calculated by taking the slope of the stress (MPa) versus the strain in the initial linear region.

Method to Determine the Modulus (yarn).

The modulus for a yarn is determined according to the test method detailed in EN ISO 2062 (Textiles-Yarns from Packages) - Determination of Single-End Breaking Force and Elongation at Break Using Constant Rate of Extension (CRE) Tester, with the following modifications. The sample length used is 600 millimeters. The equipment used is an Instron and Gotech Fixture. The grip distance used is 250 millimeters. The pre-loading is set to 5 grams and the loading rate used is 250 millimeters/minute. The first meter of yarn is thrown away to avoid using damaged yarn. The modulus (initial) is calculated by taking the slope of the stress (MPa) versus the strain in the initial linear region.

Method to Determine Tenacity and Elongation.

The tenacity and elongation of yarn can be determined according to the test method detailed in EN ISO 2062 Determination of single end breaking force and elongation at break using constant rate of extension tester with the pre-load set to 5 grams.

Method to Determine Shrinkage.

The free-standing shrinkage of fibers and/or yarns can be determined by the following method. A sample fiber or yarn is cut to a length of approximately 30 millimeters with minimal tension at approximately room temperature *(e.g.,* 20 °C). The cut sample is placed in a 50 °C or 70 °C oven for 90 seconds. The sample is removed from the oven and measured. The percentage of shrink is calculated using the pre-and post-oven measurements of the sample, by dividing the post-oven measurement by the pre-oven measurement, and multiplying by 100.

Method to Determine Enthalpy of Melting.

The enthalpy of melting is determined by the following method. A 5-10 mg sample of fibers or yarn is weighed to determine the sample mass,is placed into an aluminum DSC pan, and then the lid of the DSC pan is sealed using a crimper press. The DSC is configured to scan from -100 °C to 225 °C with a 20 °C/minute heating rate, hold at 225°C for 2 minutes, and then cool down to room temperature *(e.g.,* 25 °C) at a rate of -10 °C/minute. The enthalpy of melting is calculated by integrating the area of the melting endotherm peak and normalizing by the sample mass.

Water Uptake Capacity Test Protocol

This test measures the water uptake capacity of the layered material after a predetermined soaking duration for a sample (e.g., taken with the above-discussed Footwear Sampling Procedure). The sample is initially dried at 60°C until there is no weight change for consecutive measurement intervals of at least 30 minutes apart (e.g., a 24-hour drying period at 60°C is typically a suitable duration). The total weight of the dried sample ($Wt,_{sample\ dry}$) is then measured in grams. The dried sample is allowed to cool down to 25°C, and is fully immersed in a deionized water bath maintained at 25°C. After a given soaking duration, the sample is removed from the deionized water bath, blotted with a cloth to remove surface water, and the total weight of the soaked sample ($Wt,_{sample\ wet}$) is measured in grams.

Any suitable soaking duration can be used, where a 24-hour soaking duration is believed to simulate saturation conditions for the layered material of the present disclosure (i.e., the hydrophilic resin will be in its saturated state). Accordingly, as used herein, the expression "having a water uptake capacity at 5 minutes" refers to a soaking duration of 5 minutes, the expression "having a water uptake capacity at 1 hour" refers to a soaking duration of 1 hour, the expression "having a water uptake capacity at 24 hours" refers to a soaking duration of 24 hours, and the like. If no time duration is indicated after a water uptake capacity value, the soaking duration corresponds to a period of 24 hours.

As can be appreciated, the total weight of a sample taken pursuant to the Footwear Sampling Procedure includes the weight of the material as dried or soaked ($Wt,_{sample\ dry}$ or $Wt,_{sample\ wet}$) and the weight of the substrate ($Wt,_{substrate}$) needs to be subtracted from the sample measurements.

The weight of the substrate ($Wt,_{substrate}$) is calculated using the sample surface area (e.g., 4.0 $cm^2$), an average measured thickness of the layered material, and the average density of the layered material. Alternatively, if the density of the material for the substrate is not known or obtainable, the weight of the substrate ($Wt,_{substrate}$) is determined by taking a second sample using the same sampling procedure as used for the primary sample, and having the same dimensions (surface area and film/substrate thicknesses) as the primary sample. The material of the second sample is then cut apart from the substrate of the second sample with a blade to provide an isolated substrate. The isolated substrate is then dried at 60°C for 24 hours, which can be performed at the same time as the primary sample drying. The weight of the isolated substrate ($Wt,_{substrate}$) is then measured in grams.

The resulting substrate weight ($Wt,_{substrate}$) is then subtracted from the weights of the dried and soaked primary sample ($Wt''_{Sample\ dry}$ or $Wt,_{sample\ wet}$) to provide the weights of the material as dried and soaked ($Wt,,_{component\ dry}$ or $Wt,_{component\ wet}$) as depicted by Equations 1 and 2.

$$Wt._{component\ dry} = Wt,,_{sample\ dry} - Wt,_{substrate} \qquad \text{(Eq. 1)}$$

$$Wt_{component\ wet} = Wt,,_{sample\ wet} - Wt,_{substrate} \qquad \text{(Eq. 2)}$$

The weight of the dried component ($Wt._{component\ dry}$) is then subtracted from the weight of the soaked component ($Wt_{component\ wet}$) to provide the weight of water that was taken up by the component, which is then divided by the weight of the dried component ($Wt._{component\ dry}$) to provide the water uptake capacity for the given soaking duration as a percentage, as depicted below by Equation 3.

$$\text{Water Uptake Capacity} = \frac{Wt_{component\ wet} - Wt._{component\ dry}}{Wt._{component\ dry}} (100\%) \qquad \text{(Eq. 3)}$$

Glass Transition Temperature Test

This test measures the glass transition temperature ($T_g$) of the outsole film for a sample, where the outsole film is provided in neat form, such as with the Neat Film Sampling Procedure or the Neat Material Sampling Procedure, with a 10-milligram sample weight. The sample is measured in both a dry state and a wet state (i.e., after exposure to a humid environment as described herein).

The glass transition temperature is determined with DMA using a DMA analyzer commercially available under the tradename "Q2000 DMA ANALYZER" from TA Instruments, New Castle, Del., which is equipped with aluminum hermetic pans with pinhole lids, and the sample chamber is purged with 50 milliliters/minute of nitrogen gas during analysis. Samples in the dry state are prepared by holding at 0% RH until constant weight (less than 0.01% weight change over 120 minute period). Samples in the wet state are prepared by conditioning at a constant 25 degree C according to the following time/relative humidity (RH) profile: (i) 250 minutes at 0% RH, (ii) 250 minutes at 50% RH, and (iii) 1,440 minutes at 90% RH. Step (iii) of the conditioning program can be terminated early if sample weight is measured during conditioning and is measured to be substantially constant within 0.05% during an interval of 100 minutes.

After the sample is prepared in either the dry or wet state, it is analyzed by DSC to provide a heat flow versus temperature curve. The DSC analysis is performed with the following time/temperature profile: (i) equilibrate at -90 degree C for 2 minutes, (ii) ramp at +10 degree C/minute to 250 degree C, (iii) ramp at -50 degree C/minute to -90 degree C, and (iv) ramp at +10 degree C/minute to 250 degree C. The glass transition temperature value (in Celsius) is determined from the DSC curve according to standard DSC techniques.

Sampling Procedures

Various properties of the resin compositions and plates and other articles formed therefrom can be characterized using samples prepared with the following sampling procedures:

***Material Sampling Procedure***

A material sampling procedure can be used to obtain a neat sample of a resin composition or, in some instances, a sample of a material used to form a resin composition. The material is provided in media form, such as flakes, granules, powders, pellets, and the like. If a source of the resin composition is not available in a neat form, the sample can be cut from a plate or other component containing the resin composition, thereby isolating a sample of the material.

***Plaque Sampling Procedure***

Polyolefin resin is combined with the effective amount of the polymeric resin modifier along with any additional components to form the resin composition. A portion of the resin composition is then be molded into a plaque sized to fit inside the Ross flexing tester used, the plaque having dimensions of 15 centimeters (cm) by 2.5 centimeters (cm) and a thickness of 1 millimeter (mm) to 4 millimeter (mm) by thermoforming the resin composition in a mold. The sample is prepared by mixing the components of the resin composition together, melting the components, pouring or injecting the melted composition into the mold cavity, cooling the melted composition to solidify it in the mold cavity to form the plaque, and then removing the solid plaque from the mold cavity.

***Strip Sampling Procedure***

A test strip can be sampled from a first component and a second component that are adhesively bonded at an interface by cutting a strip of 1 centimeter in length with a band saw or sharp hand cutting tool. If the test strip width is too small (less than 0.9 centimeters), cut another sample. If the test strip width is above 1.1 centimeters, re-shape the width to be within the range of 1.0 +/- 0.1 centimeter. This should be done whenever it occurs even in the test strip.

**Definitions**

Unless defined otherwise, all technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

Although any methods and materials similar or equivalent to those described herein can also be used in the practice or testing of the present disclosure, the preferred methods and materials are now described. Functions or

constructions well-known in the art may not be described in detail for brevity and/or clarity. Aspects of the present disclosure will employ, unless otherwise indicated, techniques of nanotechnology, organic chemistry, material science and engineering and the like, which are within the skill of the art. Such techniques are explained fully in the literature.

It should be noted that ratios, concentrations, amounts, and other numerical data can be expressed herein in a range format. Where the stated range includes one or both of the limits, ranges excluding either or both of those included limits are also included in the disclosure, e.g. the phrase "x to y" includes the range from 'x' to 'y' as well as the range greater than 'x' and less than 'y'. The range can also be expressed as an upper limit, e.g. 'x, y, z, or less' and should be interpreted to include the specific ranges of 'x', 'y', and 'z' as well as the ranges of 'less than x', less than y', and 'less than z'. Likewise, the phrase 'x, y, z, or greater' should be interpreted to include the specific ranges of 'x', 'y', and 'z' as well as the ranges of 'greater than x', greater than y', and 'greater than z'. In addition, the phrase "'x' to 'y'", where 'x' and 'y' are numerical values, includes "'x' to 'y'". It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "0.1% to 5%" should be interpreted to include not only the explicitly recited values of 0.1% to 5%, but also include individual values (e.g., 1%, 2%, 3%, and 4%) and the sub-ranges (e.g., 0.5%, 1.1%, 2.4%, 3.2%, and 4.4%) within the indicated range.

The term "providing," as used herein and as recited in the claims, is not intended to require any particular delivery or receipt of the provided item. Rather, the term "providing" is merely used to recite items that will be referred to in subsequent elements of the claim(s), for purposes of clarity and ease of readability. The terms "Material Sampling Procedure", "Plaque Sampling Procedure", "Cold Ross Flex Test", "ASTM D 5963-97a", and "Differential Scanning Calorimeter (DSC) Test" as used herein refer to the respective sampling procedures and test methodologies described in the Property Analysis And Characterization Procedure section. These sampling procedures and test methodologies characterize the properties of the recited materials, films, articles and components, and the like, and are not required to be performed as active steps in the claims.

Numerical values as used herein, can include traditional rounding according to significant figures of the numerical value.

The articles "a" and "an," as used herein, mean one or more when applied to any feature in aspects of the present disclosure described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

A random copolymer of propylene with about 2.2% by weight (wt %) ethylene is commercially available under the tradename "PP9054" from ExxonMobil Chemical Company, Houston, TX. It has a MFR (ASTM-1238D, 2.16 kilograms, 230°C.) of about 12 grams/10 minutes and a density of 0.90 grams/cubic centimeter (g/cm$^3$).

PP9074 is a random copolymer of propylene with about 2.8% by weight (wt %) ethylene and is commercially available under the tradename "PP9074" from ExxonMobil Chemical Company, Houston, TX. It has a MFR (ASTM-1238D, 2.16 kilograms, 230°C.) of about 24 grams/10 minutes and a density of 0.90 grams/cubic centimeter (g/cm$^3$).

PP1024E4 is a propylene homopolymer commercially available under the tradename "PP1024E4" from ExxonMobil Chemical Company, Houston, TX. It has an MFR (ASTM-1238D, 2.16 kilograms, 230°C.) of about 13 grams/10 minutes and a density of 0.90 grams/cubic centimeter (g/cm$^3$).

Vistamaxx 6202 is a copolymer primarily composed of isotactic propylene repeat units with about 15% by weight (wt %) of ethylene repeat units randomly distributed along the copolymer. It is a metallocene catalyzed copolymer available under the tradename "VISTAMAXX 6202" from ExxonMobil Chemical Company, Houston, TX and has an MFR (ASTM-1238D, 2.16 kilograms, 230°C.) of about 20 grams/10 minutes, a density of 0.862 grams/cubic centimeter (g/cm$^3$), and a Durometer Hardness of about 64 (Shore A).

Vistamaxx™ 3000 is a copolymer primarily composed of isotactic propylene repeat units with about 11% by weight (wt %) of ethylene repeat units randomly distributed along the copolymer. It is a metallocene catalyzed copolymer available from ExxonMobil Chemical Company and has an MFR (ASTM-1238D, 2.16 kilograms, 230°C.) of about 8 grams/10 minutes, a density of 0.873 grams/cubic centimeter (g/cm$^3$), and a Durometer Hardness of about 27 (Shore D).

Vistamaxx™ 6502 is a copolymer primarily composed of isotactic propylene repeat units with about 13% by weight of ethylene repeat units randomly distributed along the copolymer. It is a metallocene catalyzed copolymer available from ExxonMobil Chemical Company and has an MFR (ASTM-1238D, 2.16 kilograms, 230°C.) of about 45 grams/10 minutes, a density of 0.865 grams/cubic centimeter (g/cm$^3$), and a Durometer Hardness of about 71 (Shore A).

## EXAMPLES

Now having described the aspects of the present disclosure, in general, the following Examples describe some

additional aspects of the present disclosure.

**Materials**

For the examples described below, the following components were bonded

**Table 1. Materials bonded**

| **Material Reference** | **Layer 1** | **Layer 2** | Physical Properties |
|---|---|---|---|
| A | TPO Film (Extrusion) | PET non-woven | Stoll Abrasion 500+<br>Bally Flex 100,000+ |
| B | TPO Film (Extrusion) | PET non-woven | Stoll Abrasion 500+<br>Bally Flex 100,000+ |
| C | TPO Film (Extrusion) | PET non-woven | Stoll Abrasion 500+<br>Bally Flex 100,000+ |
| D | TPO Hot Melt Film (Extrusion) | PET non-woven | Stoll Abrasion 500+<br>Bally Flex 100,000+ |
| E | TPO Hot Melt Film (Extrusion) | PP non-woven | Stoll Abrasion 2000+<br>Bally Flex 100,000+<br>TearT/Y: 11.8/8.5 (kg)<br>Tensile T/Y: 59/39 (kg)<br>Elongation T/Y: 81/90 (%) |

**Bonding of polyolefins with CPO primers**

The adhesive bonding with Rubber was examined for the various Reference Materials described in Table 1 using the bonding procedures described in **FIG. 9.** In summary, strips of the Reference Material TPO Synthetic Leathers from Table 1 and strips of Rubber (strips ~ 15cm by 2.54 cm) were prepared for bonding.

The TPO Films were prepared by first cleaning by applying P039 solvent with a clean, lint-free cloth. Optionally, the film layer could be cleaned using a different solvent such as hexane, or using a high energy cleaning process such as corona, flame, or plasma treatment. The cleaned synthetic leather was heated in a 60 degree C oven for 3 minutes to evaporate solvent from the cleaning. The chlorinated polyolefin primer (P840 from Nan Pao) was applied to the film layer of the synthetic leather. Following application of the primer, the primed synthetic leather was heated in a 60 degree C oven for 3 minutes to dry the primer. The dried primed synthetic leather was exposed to UV light (a dose of 1.385 joules per square meter was used). A second primer layer using a mixture of NUV-24N and 1070 (hardener, 3-5 wt%) was then applied to the dried primer layer on the synthetic leather.

Following application of the second primer layer, the synthetic leather was heated in a 60 degree C oven for 3 minutes to dry the second primer layer. A reinforcing layer of a mixture of 111GN and 1071 (hardener, 3-5 wt%) was then applied to the dried second primer layer on the synthetic leather. Following application of the reinforcing layer, the synthetic leather was heated in a 60 degree C oven for 3 minutes to dry the reinforcing layer. An adhesive layer of a mixture of NP99 and CL-01 (3-5%) was then applied to the dried reinforcing layer on the synthetic leather. Following application of the adhesive layer, the synthetic leather was heated in a 60 degree C oven for 3 minutes to dry the adhesive layer.

The rubber was prepared by first washing with water. The washed rubber was heated in a 60 degree C oven for 3 minutes to dry the washed rubber. A two-part primer (1016A+1016B) was applied to the dry rubber. Following application of the primer, the primed rubber was heated in a 60 degree C oven for 3 minutes to dry the primer. An adhesive layer of a mixture of NP99 and CL-01 (3-5%) was then applied to the dried primer layer on the rubber. Following application of the adhesive layer, the rubber was heated in a 60 degree C oven for 3 minutes to dry the adhesive layer.

The prepared TPO synthetic leather and the prepared rubber sample were adhered to each other by pressing (40kg/cm$^2$) the adhesive layer of the synthetic leather against the adhesive layer of the rubber after activating both of them for 3 minutes at 60 degree C. The adhered synthetic leather and rubber samples were then tested to determine their wet and dry bonding scores. The measured wet and dry Ply Adhesion is reported in **Table 2.** As a point of reference, when all samples reported in Table 2 are bonded without the CPO primer the bond adhesion is less than 1 kg/cm.

**Table 2. Wet and Dry Ply Adhesion (kg/cm) between Reference Material Synthetic Leathers and Rubber.**

| Ply Adhesion Sample | Ply 1: Synthetic Leather Layer (from Table 1) | Ply 2 | Ply Adhesion (in machine direction) |
|---|---|---|---|
| F | A | Rubber | dry: 5.2<br>wet: 4.5 |
| G | B | Rubber | dry: 2.4 wet: 2.5 |
| H | C | Rubber | dry: 4.6<br>wet: 4.5 |
| I | D | Rubber | dry: 4.9<br>wet: 4.0 |
| J | E | Rubber | dry: 3.5<br>wet: 3.7 |

## Claims

**1.** An article of footwear (110; 210; 310; 410; 610; 710), athletic apparel, sporting equipment, or portion thereof comprising:

a textile component (810) and a second component (820) adhesively bonded together at an interface (800);
wherein the textile component (810) comprises a polyolefin; and
wherein the interface (800) comprises: (a) a chlorinated polyolefin primer (830; 850) disposed on a surface of the textile component (810) and (b) a first waterborne primer and a polyurethane adhesive disposed between the chlorinated polyolefin primer (830; 850) and a surface (821) of the second component (820).

**2.** The article of footwear (110; 210; 310; 410; 610; 710), athletic apparel, sporting equipment, or portion thereof according to claim 1, wherein the interface (800) further comprises a polyurethane primer disposed with the polyurethane adhesive (840).

**3.** The article of footwear (110; 210; 310; 410; 610; 710), athletic apparel, sporting equipment, or portion thereof according to claim 1 or claim 2; wherein the textile component (810) and the second component (820) are adhesively bonded together by a method comprising:

(i) applying the chlorinated polyolefin primer (830; 850) to a surface (811) of the textile component (810) to produce a primed surface;
(ii) applying the first waterborne primer to the primed surface, prior to or contemporaneously with applying the first waterborne polyurethane adhesive (840) to the primed surface to produce an adhesive surface; and
(iii) contacting a surface (821) of the second component (820) to the adhesive surface to adhesively bond the second component (820) to the textile component (810).

**4.** The article of footwear (110; 210; 310; 410; 610; 710), athletic apparel, sporting equipment, or portion thereof according to claim 3, wherein the method further comprises, prior to step (i), cleaning the surface (811) of the textile component (810) by one or both of (a) treating the surface (811) with a high energy discharge and (b) applying a chemical cleaner to the surface (811).

**5.** The article of footwear (110; 210; 310; 410; 610; 710), athletic apparel, sporting equipment, or portion thereof according to claim 3 or claim 4, wherein the textile component (810) and the second component (820) are adhesively bonded together by a method further comprising in step (ii) applying a second waterborne polyurethane adhesive (840) to the surface (821) of the second component (820) prior to the contacting step.

**6.** The article of footwear (110; 210; 310; 410; 610; 710), athletic apparel, sporting equipment, or portion thereof according to any one of claims 1-5, wherein an adhesive peel strength between the surface (811) of the textile component (810) and the surface (821) of the second component (820) is 2.0 kilograms of force per centimeter to 7.0 kilograms of force per centimeter when measured according to the Adhesive Peel Strength Test.

**7.** The article of footwear (110; 210; 310; 410; 610; 710), athletic apparel, sporting equipment, or portion thereof according to any one of claims 1-6, wherein the second component (820) comprises a polymeric material selected from the group consisting of a polyurethane, a polyamide, a polyester, a copolymer thereof, and a blend thereof, and/or a polyolefin foam or a solid polyolefin resin.

**8.** The article of footwear (110; 210; 310; 410; 610; 710), athletic apparel, sporting equipment, or portion thereof according to any one of claims 1-7, wherein the textile component (810) comprises a synthetic leather, or a fiber or a yarn comprising a polyolefin.

**9.** The article of footwear, athletic apparel, sporting equipment, or portion thereof according to any one of claims 1-8, wherein the textile component (810) comprises a first textile component and a polyolefin coating on at least a portion of the first textile component, wherein the first textile component optionally comprises a woven or non-woven textile or a synthetic leather.

**10.** The article of footwear (110; 210; 310; 410; 610; 710), athletic apparel, sporting equipment, or portion thereof according to any one of claims 1-9, wherein the chlorinated polyolefin primer (830; 850) comprises a polyolefin selected from the group consisting of polyethylene, polypropylene, ethylene-propylene copolymer, ethylene-propylene-diene terpolymer, ethylene-propylene hexadiene terpolymer, ethylene-propylenedicyclopentadiene terpolymer, ethylene-propylene-ethylidenenorbornene terpolymer, and ethylene-vinyl acetate.

**11.** The article of footwear (110; 210; 310; 410; 610; 710), or portion thereof according to any one of claims 1-10, wherein the textile component (810) comprises an upper (112; 212; 312; 412; 612; 712) and the second component (820) comprises a sole component (113; 114; 313; 413; 613), and the textile component (810) is optionally adhesively bonded directly to the sole component (113; 114; 313; 413; 613).

**12.** The article of footwear (110; 210; 310; 410; 610; 710), , or portion thereof according to claim 11, wherein the sole component (113; 313; 413; 613) comprises a plate (116; 216; 316; 416; 500; 616; 715, 716, 717) comprising a polyolefin, and wherein the textile component (314; 614; 735, 737, 736) is adhesively bonded directly to the plate (316; 616; 715, 717; 716).

**13.** The article of footwear (110; 210; 310; 410; 610; 710), or portion thereof according to claim 11, wherein the sole component (113) comprises a foam composition (114) comprising a polyolefin resin, and the textile component is adhesively bonded directly to the foam composition (114); or
wherein the sole component (113; 313; 413; 613) comprises a thermoplastic polymer selected from the group consisting of a polyurethane, a polyamide, a polyester, a copolymer thereof, and a blend thereof, and the textile component (314; 614; 735, 737, 736) is adhesively bonded directly to the thermoplastic polymer.

**14.** A method of making an article of footwear (110; 210; 310; 410; 610; 710), athletic apparel, sporting equipment, or portion thereof, the method comprising

(i) applying a chlorinated polyolefin primer (830; 850) to a surface (811) of a textile component (810) to produce a primed surface, wherein the textile component (810) comprises a polyolefin;
(ii) applying a first waterborne primer to the primed surface, prior to or contemporaneously with applying a first waterborne polyurethane adhesive (840) to the primed surface to produce an adhesive surface; and
(iii) contacting a surface (821) of the second component (820) to the adhesive surface to adhesively bond the second component to the textile component.

**15.** The method according to claim 14, further comprising, prior to step (i), cleaning the surface (811) of the textile component (810) by one or both of (a) treating the surface with a high energy discharge and (b) applying a chemical cleaner to the surface.

## Patentansprüche

**1.** Fußbekleidungs- (110; 210; 310; 410; 610; 710), Athletikbekleidungs-, Sportausrüstungsartikel oder Teil davon mit:

einer Textilkomponente (810) und einer zweiten Komponente (820), die an einer Übergangsstelle (800) haftend miteinander verbunden sind;

bei dem die Textilkomponente (810) ein Polyolefin aufweist; und
bei dem die Übergangsstelle (800) aufweist: (a) eine chlorierte Polyolefingrundierung (830; 850), die auf einer Oberfläche der Textilkomponente (810) angeordnet ist, und (b) eine erste wasserbasierte Grundierung und ein Polyurethanhaftmittel, die zwischen der chlorierten Polyolefingrundierung (830; 850) und einer Oberfläche (821) der zweiten Komponente (820) angeordnet sind.

**2.** Fußbekleidungs- (110; 210; 310; 410; 610; 710), Athletikbekleidungs-, Sportausrüstungsartikel oder Teil davon nach Anspruch 1, bei dem die Übergangsstelle (800) ferner eine Polyurethangrundierung, die mit dem Polyurethanhaftmittel (840) angeordnet ist, aufweist.

**3.** Fußbekleidungs- (110; 210; 310; 410; 610; 710), Athletikbekleidungs-, Sportausrüstungsartikel oder Teil davon nach Anspruch 1 oder Anspruch 2; bei dem die Textilkomponente (810) und die zweite Komponente (820) durch ein Verfahren haftend miteinander verbunden sind, das aufweist:

(i) Auftragen der chlorierten Polyolefingrundierung (830; 850) auf eine Oberfläche (811) der Textilkomponente (810) zum Erzeugen einer grundierten Oberfläche;
(ii) Auftragen der ersten wasserbasierten Grundierung auf die grundierte Oberfläche vor oder gleichzeitig mit Auftragen des ersten wasserbasierten Polyurethanhaftmittels (840) auf die grundierte Oberfläche zum Erzeugen einer Haftmitteloberfläche; und
(iii) Kontaktieren einer Oberfläche (821) der zweiten Komponente (820) mit der Haftmitteloberfläche zum haftenden Verbinden der zweiten Komponente (820) mit der Textilkomponente (810).

**4.** Fußbekleidungs- (110; 210; 310; 410; 610; 710), Athletikbekleidungs-, Sportausrüstungsartikel oder Teil davon nach Anspruch 3, bei dem das Verfahren ferner vor Schritt (i) ein Reinigen der Oberfläche (811) der Textilkomponente (810) durch eines oder beides von (a) Behandeln der Oberfläche (811) mit einer Hochenergieentladung und (b) Auftragen eines chemischen Reinigungsmittels auf die Oberfläche (811) aufweist.

**5.** Fußbekleidungs- (110; 210; 310; 410; 610; 710), Athletikbekleidungs-, Sportausrüstungsartikel oder Teil davon nach Anspruch 3 oder Anspruch 4, bei dem die Textilkomponente (810) und die zweite Komponente (820) durch ein Verfahren haftend miteinander verbunden sind, das ferner in Schritt (ii) ein Auftragen eines zweiten wasserbasierten Polyurethanhaftmittels (840) auf die Oberfläche (821) der zweiten Komponente (820) vor dem Kontaktierungsschritt aufweist.

**6.** Fußbekleidungs- (110; 210; 310; 410; 610; 710), Athletikbekleidungs-, Sportausrüstungsartikel oder Teil davon nach einem der Ansprüche 1-5, bei dem eine Haftschälfestigkeit zwischen der Oberfläche (811) der Textilkomponente (810) und der Oberfläche (821) der zweiten Komponente (820) 2,0 Kilogramm an Kraft pro Zentimeter bis 7,0 Kilogramm an Kraft pro Zentimeter ist, wenn sie gemäß dem Haftschälfestigkeitstest gemessen wird.

**7.** Fußbekleidungs- (110; 210; 310; 410; 610; 710), Athletikbekleidungs-, Sportausrüstungsartikel oder Teil davon nach einem der Ansprüche 1-6, bei dem die zweite Komponente (820) ein Polymermaterial aufweist, das aus der Gruppe ausgewählt ist, die aus einem Polyurethan, einem Polyamid, einem Polyester, einem Copolymer davon und einer Mischung davon und/oder einem Polyolefinschaumstoff oder einem festen Polyolefinharz besteht.

**8.** Fußbekleidungs- (110; 210; 310; 410; 610; 710), Athletikbekleidungs-, Sportausrüstungsartikel oder Teil davon nach einem der Ansprüche 1-7, bei dem die Textilkomponente (810) ein synthetisches Leder oder eine Faser oder ein Garn aufweist, das/die ein Polyolefin aufweist.

**9.** Fußbekleidungs-, Athletikbekleidungs-, Sportausrüstungsartikel oder Teil davon nach einem der Ansprüche 1-8, bei dem die Textilkomponente (810) eine erste Textilkomponente und eine Polyolefinbeschichtung auf zumindest einem Teil der ersten Textilkomponente aufweist, bei dem die erste Textilkomponente optional ein gewobenes oder nicht gewobenes Textil oder ein synthetisches Leder aufweist.

**10.** Fußbekleidungs- (110; 210; 310; 410; 610; 710), Athletikbekleidungs-, Sportausrüstungsartikel oder Teil davon nach einem der Ansprüche 1-9, bei dem die chlorierte Polyolefingrundierung (830; 850) ein Polyolefin aufweist, das aus der Gruppe ausgewählt ist, die aus Polyethylen, Polypropylen, Ethylen-Propylen-Copolymer, Ethylen-Propylen-Dien-Terpolymer, Ethylen-Propylen-Hexadien-Terpolymer, Ethylen-Propylen-Dicyclopentadien-Terpolymer, Ethylen-Propylen-Ethylidenorbornen-Terpolymer und Ethylen-Vinylacetat besteht.

**11.** Fußbekleidungsartikel (110; 210; 310; 410; 610; 710) oder Teil davon nach einem der Ansprüche 1-10, bei dem die Textilkomponente (810) ein Obermaterial (112; 212; 312; 412; 612; 712) aufweist und die zweite Komponente (820) eine Sohlenkomponente (113; 114; 313; 413; 613) aufweist, und die Textilkomponente (810) optional direkt mit der Sohlenkomponente (113; 114; 313; 413; 613) haftend verbunden ist.

**12.** Fußbekleidungsartikel (110; 210; 310; 410; 610; 710) oder Teil davon nach Anspruch 11, bei dem die Sohlenkomponente (113; 313; 413; 613) eine Platte (116; 216; 316; 416; 500; 616; 715, 716, 717) aufweist, die ein Polyolefin aufweist, und bei dem die Textilkomponente (314; 614; 735, 737, 736) direkt mit der Platte (316; 616; 715, 717; 716) haftend verbunden ist.

**13.** Fußbekleidungsartikel (110; 210; 310; 410; 610; 710) oder Teil davon nach Anspruch 11, bei dem die Sohlenkomponente (113) eine Schaumstoffzusammensetzung (114) aufweist, die ein Polyolefinharz aufweist, und die Textilkomponente direkt mit der Schaumstoffzusammensetzung (114) haftend verbunden ist; oder
bei dem die Sohlenkomponente (113; 313; 413; 613) ein thermoplastisches Polymer aufweist, das aus der Gruppe ausgewählt ist, die aus einem Polyurethan, einem Polyamid, einem Polyester, einem Copolymer davon und einer Mischung davon besteht, und die Textilkomponente (314; 614; 735, 737, 736) direkt mit dem thermoplastischen Polymer haftend verbunden ist.

**14.** Verfahren zum Ausbilden eines Fußbekleidungs- (110; 210; 310; 410; 610; 710), Athletikbekleidungs-, Sportausrüstungsartikels oder eines Teils davon, mit

(i) Auftragen einer chlorierten Polyolefingrundierung (830; 850) auf eine Oberfläche (811) einer Textilkomponente (810) zum Erzeugen einer grundierten Oberfläche, bei dem die Textilkomponente (810) ein Polyolefin aufweist;
(ii) Auftragen einer ersten wasserbasierten Grundierung auf die grundierte Oberfläche vor oder gleichzeitig mit Auftragen eines ersten wasserbasierten Polyurethanhaftmittels (840) auf die grundierte Oberfläche zum Erzeugen einer Haftmitteloberfläche; und
(iii) Kontaktieren einer Oberfläche (821) der zweiten Komponente (820) mit der Haftmitteloberfläche zum haftenden Verbinden der zweiten Komponente mit der Textilkomponente.

**15.** Verfahren nach Anspruch 14, ferner mit, vor Schritt (i), Reinigen der Oberfläche (811) der Textilkomponente (810) durch eines oder beides von (a) Behandeln der Oberfläche mit einer Hochenergieentladung und (b) Auftragen eines chemischen Reinigungsmittels auf die Oberfläche.

## Revendications

**1.** Article chaussant (110 ; 210 ; 310 ; 410 ; 610 ; 710), vêtement de sport, équipement sportif, ou partie de ceux-ci comprenant :

un composant textile (810) et un second composant (820) liés l'un à l'autre de manière adhésive au niveau d'une interface (800) ;
dans lequel le composant textile (810) comprend une polyoléfine ; et
dans lequel l'interface (800) comprend : (a) un apprêt de polyoléfine chlorée (830 ; 850) disposée sur une surface du composant textile (810) et (b) un premier apprêt à base d'eau et un adhésif de polyuréthane disposés entre l'apprêt de polyoléfine chlorée (830 ; 850) et une surface (821) du second composant (820).

**2.** Article chaussant (110 ; 210 ; 310 ; 410 ; 610 ; 710), vêtement de sport, équipement sportif, ou partie de ceux-ci selon la revendication 1, dans lequel l'interface (800) comprend en outre un apprêt de polyuréthane disposée avec l'adhésif de polyuréthane (840).

**3.** Article chaussant (110 ; 210 ; 310 ; 410 ; 610 ; 710), vêtement de sport, équipement sportif, ou partie de ceux-ci selon la revendication 1 ou la revendication 2 ; dans lequel le composant textile (810) et le second composant (820) sont liés l'un à l'autre de manière adhésive par un procédé comprenant :

(i) l'application de l'apprêt de polyoléfine chlorée (830 ; 850) sur une surface (811) du composant textile (810) pour produire une surface apprêtée ;
(ii) l'application du premier apprêt à base d'eau à la surface apprêtée, avant, ou simultanément à, l'application

du premier adhésif de polyuréthane à base d'eau (840) à la surface apprêtée pour produire une surface adhésive ; et

(iii) la mise en contact d'une surface (821) du second composant (820) avec la surface adhésive pour lier de manière adhésive le second composant (820) au composant textile (810).

**4.** Article chaussant (110 ; 210 ; 310 ; 410 ; 610 ; 710), vêtement de sport, équipement sportif, ou partie de ceux-ci selon la revendication 3, dans lequel le procédé comprend en outre, avant l'étape (i), le nettoyage de la surface (811) du composant textile (810) par une ou deux méthodes parmi (a) le traitement de la surface (811) avec une décharge à haute énergie et (b) l'application d'un nettoyant chimique à la surface (811).

**5.** Article chaussant (110 ; 210 ; 310 ; 410 ; 610 ; 710), vêtement de sport, équipement sportif, ou partie de ceux-ci selon la revendication 3 ou la revendication 4, dans lequel le composant textile (810) et le second composant (820) sont liés l'un à l'autre de manière adhésive par un procédé comprenant en outre à l'étape (ii) l'application d'un second adhésif de polyuréthane à base d'eau (840) à la surface (821) du second composant (820) avant l'étape de mise en contact.

**6.** Article chaussant (110 ; 210 ; 310 ; 410 ; 610 ; 710), vêtement de sport, équipement sportif, ou partie de ceux-ci selon l'une quelconque des revendications 1 à 5, dans lequel une force de décollement adhésif entre la surface (811) du composant textile (810) et la surface (821) du second composant (820) est de 2,0 kilogrammes de force par centimètre à 7,0 kilogrammes de force par centimètre lorsqu'elle est mesurée selon le test de force de décollement adhésif.

**7.** Article chaussant (110 ; 210 ; 310 ; 410 ; 610 ; 710), vêtement de sport, équipement sportif, ou partie de ceux-ci selon l'une quelconque des revendications 1 à 6, dans lequel le second composant (820) comprend un matériau polymère choisi dans le groupe constitué d'un polyuréthane, d'un polyamide, d'un polyester, d'un copolymère de ceux-ci, et d'un mélange de ceux-ci, et/ou d'une mousse de polyoléfine ou d'un résine de polyoléfine solide.

**8.** Article chaussant (110 ; 210 ; 310 ; 410 ; 610 ; 710), vêtement de sport, équipement sportif, ou partie de ceux-ci selon l'une quelconque des revendications 1 à 7, dans lequel le composant textile (810) comprend un cuir synthétique, ou une fibre ou un fil comprenant un polyoléfine.

**9.** Article chaussant, vêtement de sport, équipement sportif, ou partie de ceux-ci selon l'une quelconque des revendications 1 à 8, dans lequel le composant textile (810) comprend un premier composant textile et un revêtement de polyoléfine sur au moins une partie du premier composant textile, dans lequel le premier composant textile comprend éventuellement un textile tissé ou non-tissé ou un cuir synthétique.

**10.** Article chaussant (110 ; 210 ; 310 ; 410 ; 610 ; 710), vêtement de sport, équipement sportif, ou partie de ceux-ci selon l'une quelconque des revendications 1 à 9, dans lequel l'apprêt de polyoléfine chlorée (830 ; 850) comprend une polyoléfine choisie dans le groupe constitué du polyéthylène, du polypropylène, du copolymère d'éthylène-propylène, du terpolymère d'éthylène-propylène-diène, du terpolymère d'éthylène-propylène-hexadiène, du terpolymère d'éthylène-propylène-dicyclopentadiène, du terpolymère d'éthylène-propylène-éthylidènenorbornène, et de l'acétate de vinyle-éthylène.

**11.** Article chaussant (110 ; 210 ; 310 ; 410 ; 610 ; 710), ou partie de celui-ci selon l'une quelconque des revendications 1 à 10, dans lequel le composant textile (810) comprend une tige (112 ; 212 ; 312 ; 412 ; 612 ; 712) et le second composant (820) comprend un composant de semelle (113 ; 114 ; 313 ; 413 ; 613), et le composant textile (810) est éventuellement lié de manière adhésive directement au composant de semelle (113 ; 114 ; 313 ; 413 ; 613).

**12.** Article chaussant (110 ; 210 ; 310 ; 410 ; 610 ; 710), ou partie de celui-ci selon la revendication 11, dans lequel le composant de semelle (113 ; 313 ; 413 ; 613) comprend une plaque (116 ; 216 ; 316 ; 416 ; 500 ; 616 ; 715, 716, 717) comprenant une polyoléfine, et dans lequel le composant textile (314 ; 614 ; 735, 737, 736) est lié de manière adhésive directement à la plaque (316 ; 616 ; 715, 717 ; 716).

**13.** Article chaussant (110 ; 210 ; 310 ; 410 ; 610 ; 710), ou partie de celui-ci selon la revendication 11, dans lequel le composant de semelle (113) comprend une composition de mousse (114) comprenant une résine de polyoléfine, et le composant textile est lié de manière adhésive directement à la composition de mousse (114) ; ou
dans lequel le composant de semelle (113 ; 313 ; 413 ; 613) comprend un polymère thermoplastique choisi dans le groupe constitué d'un polyuréthane, d'un polyamide, d'un polyester, d'un copolymère de ceux-ci, et d'un mélange

de ceux-ci, et le composant textile (314 ; 614 ; 735, 737, 736) est lié de manière adhésive directement au polymère thermoplastique.

**14.** Procédé de réalisation d'un article chaussant (110 ; 210 ; 310 ; 410 ; 610 ; 710), d'un vêtement de sport, d'un équipement sportif, ou d'une partie de ceux-ci, le procédé comprenant

(i) l'application d'un apprêt de polyoléfine chlorée (830 ; 850) sur une surface (811) d'un composant textile (810) pour produire une surface apprêtée, dans lequel le composant textile (810) comprend une polyoléfine ;
(ii) l'application d'un premier apprêt à base d'eau à la surface apprêtée, avant, ou simultanément à, l'application d'un premier adhésif de polyuréthane à base d'eau (840) à la surface apprêtée pour produire une surface adhésive ; et
(iii) la mise en contact d'une surface (821) du second composant (820) avec la surface adhésive pour lier de manière adhésive le second composant au composant textile.

**15.** Procédé selon la revendication 14, comprenant en outre, avant l'étape (i), le nettoyage de la surface (811) du composant textile (810) par une ou deux méthodes parmi (a) le traitement de la surface avec une décharge à haute énergie et (b) l'application d'un nettoyant chimique à la surface.

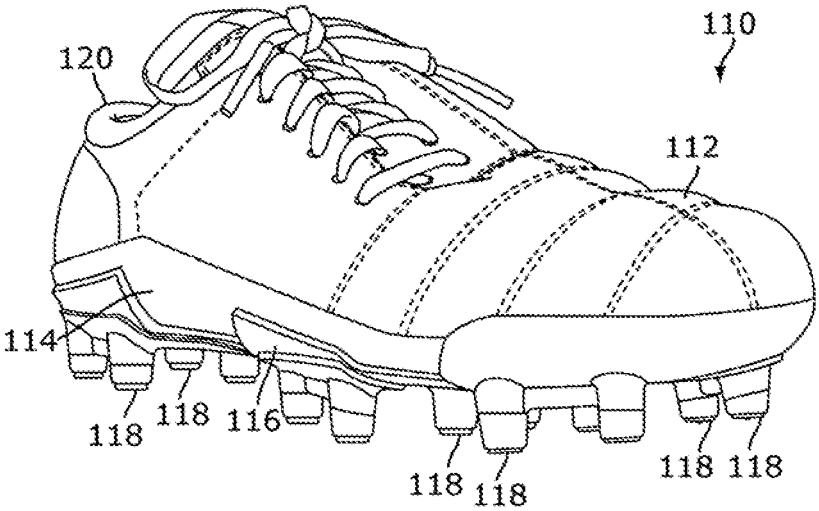
110
120
112
114
118
118
116
118
118
118
118

FIG. 1A

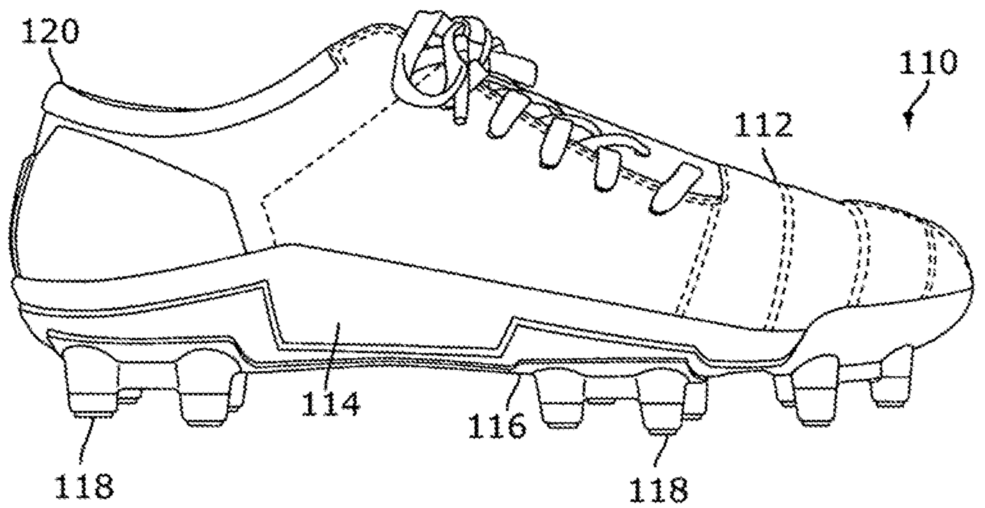
120
110
112
114
116
118
118

FIG. 1B

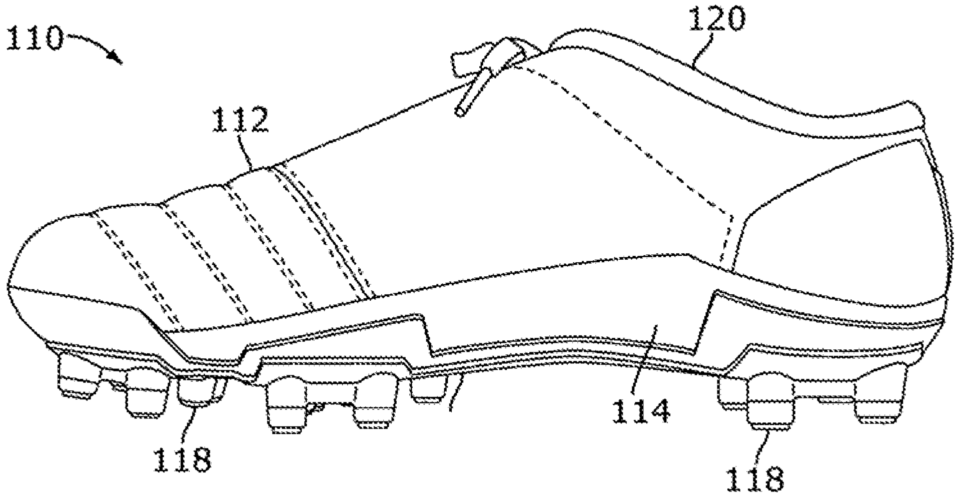


FIG. 1C

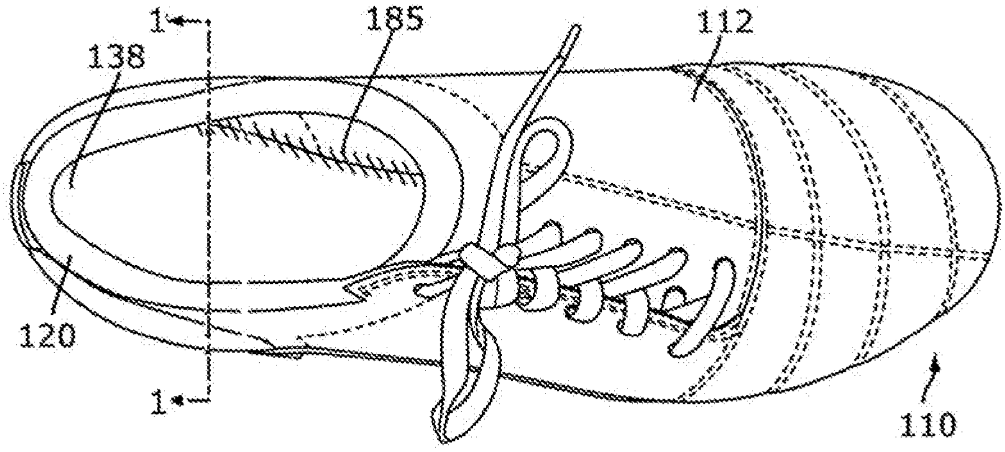


FIG. 1D

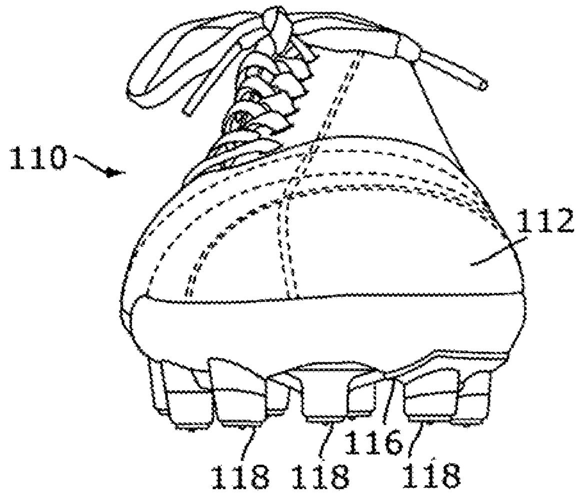


FIG. 1E

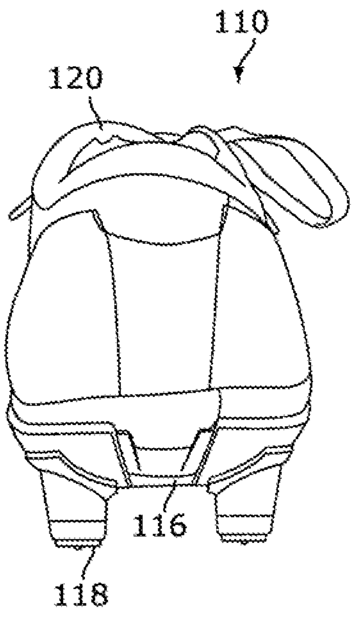


FIG. 1F

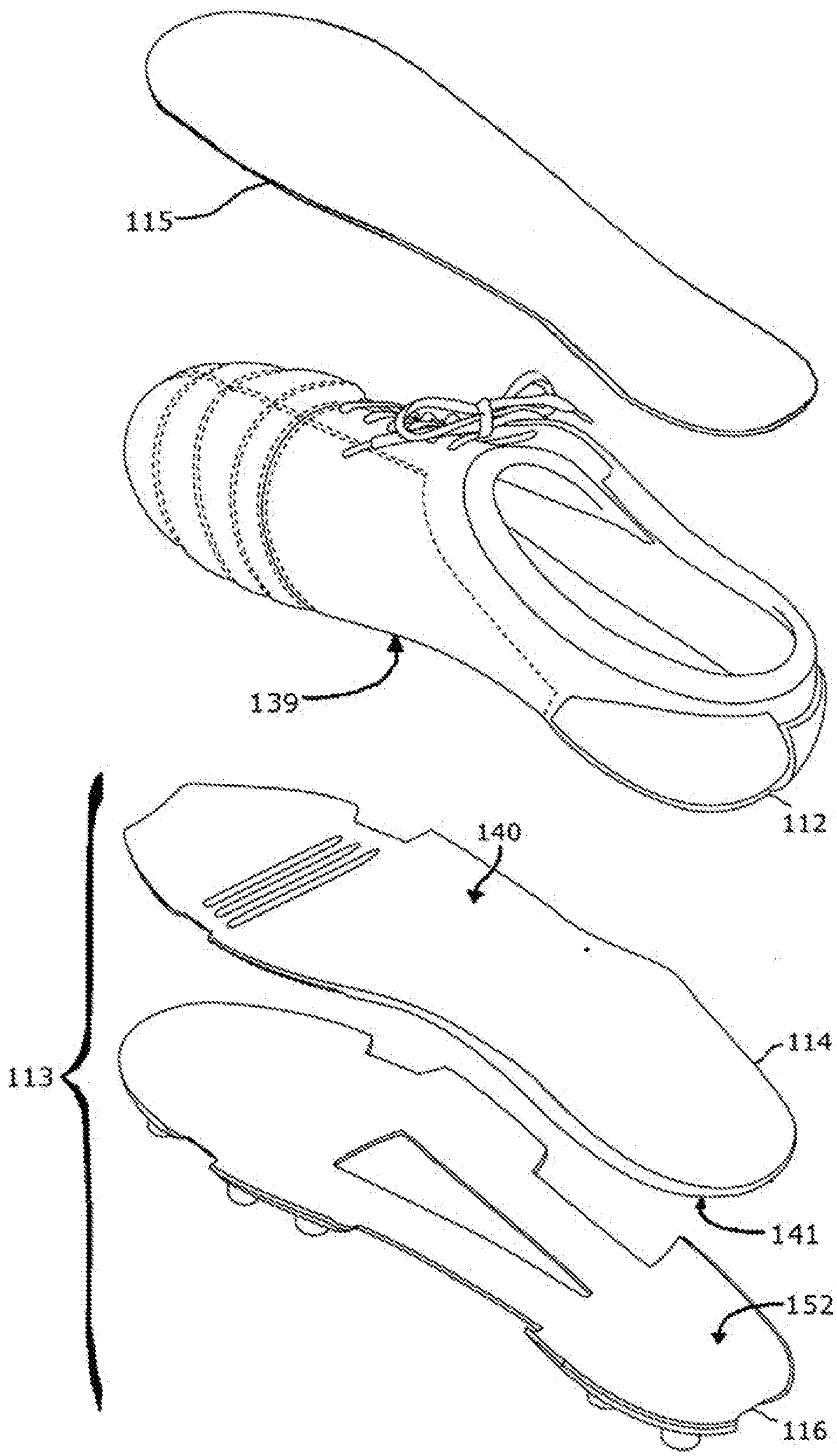


FIG. 1G

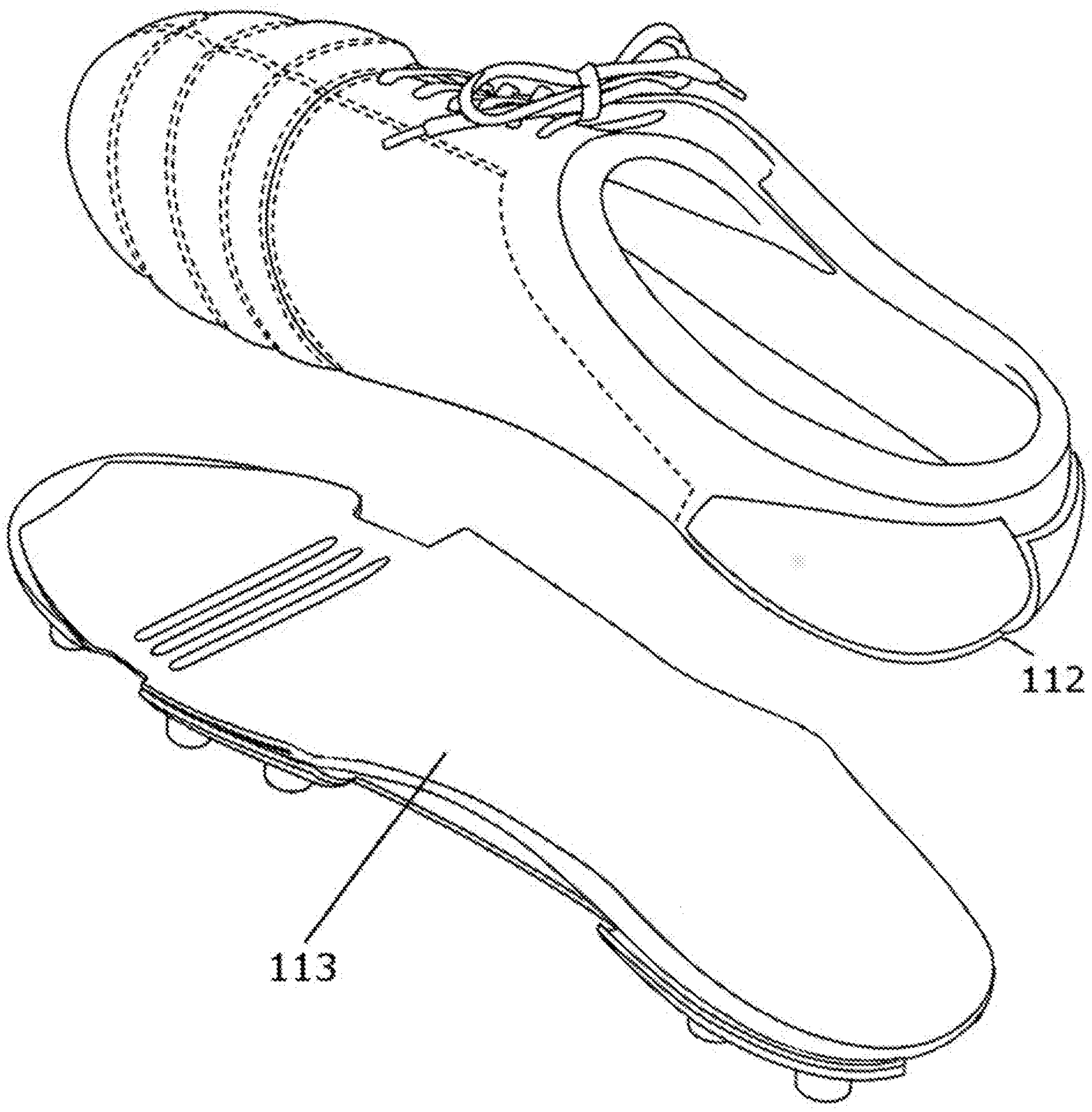


FIG. 1H

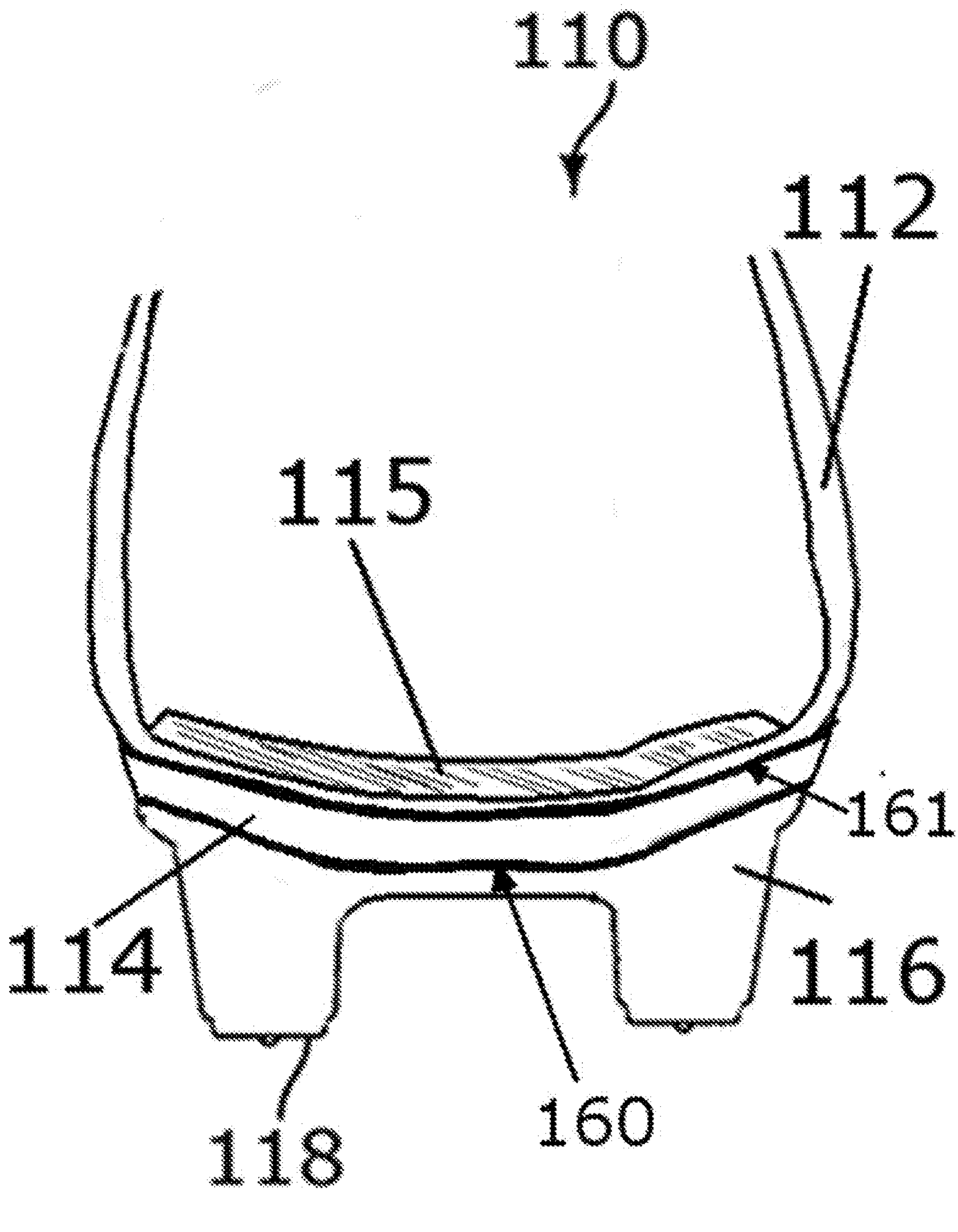


FIG. 1I

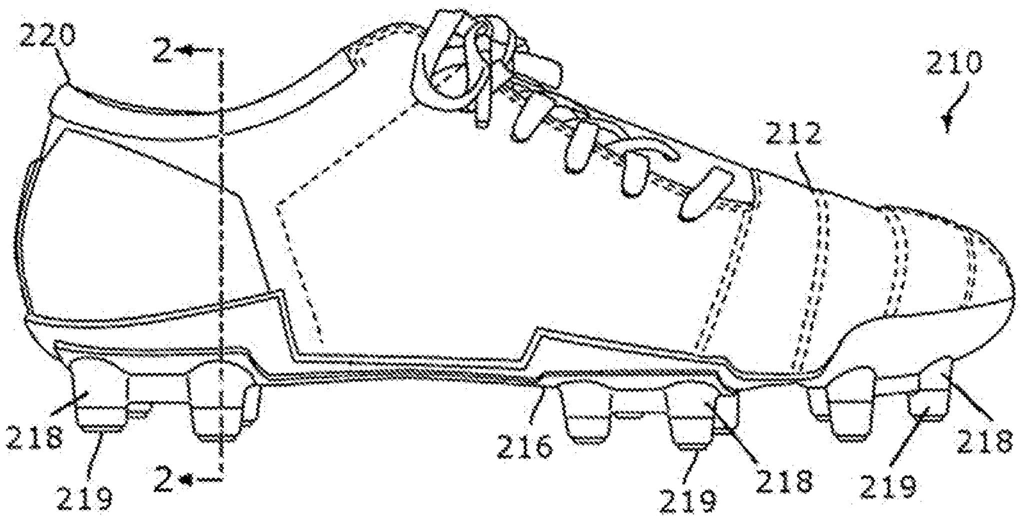


FIG. 2A

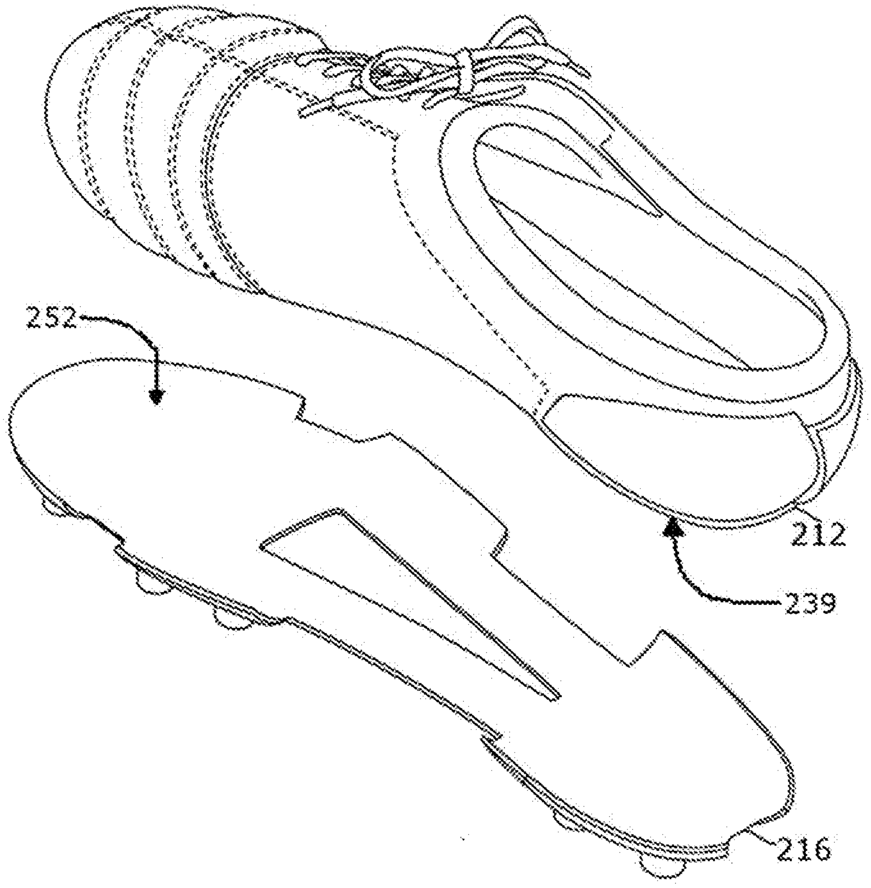


FIG. 2B

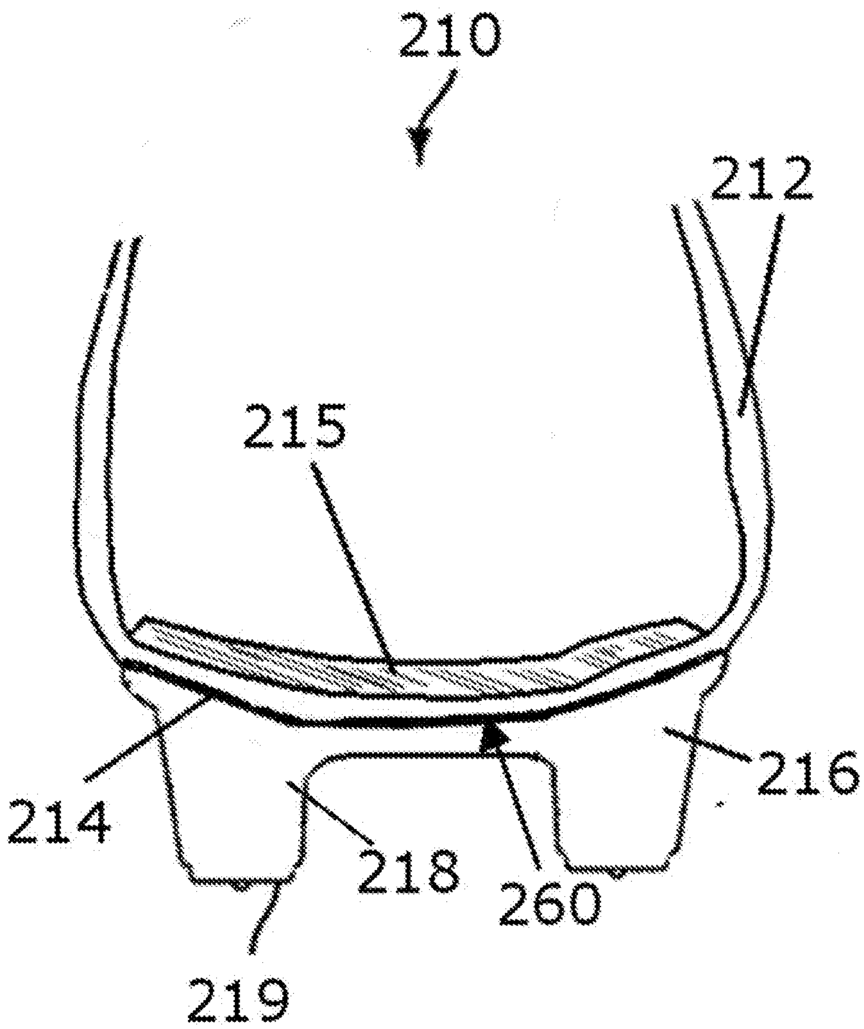


FIG. 2C

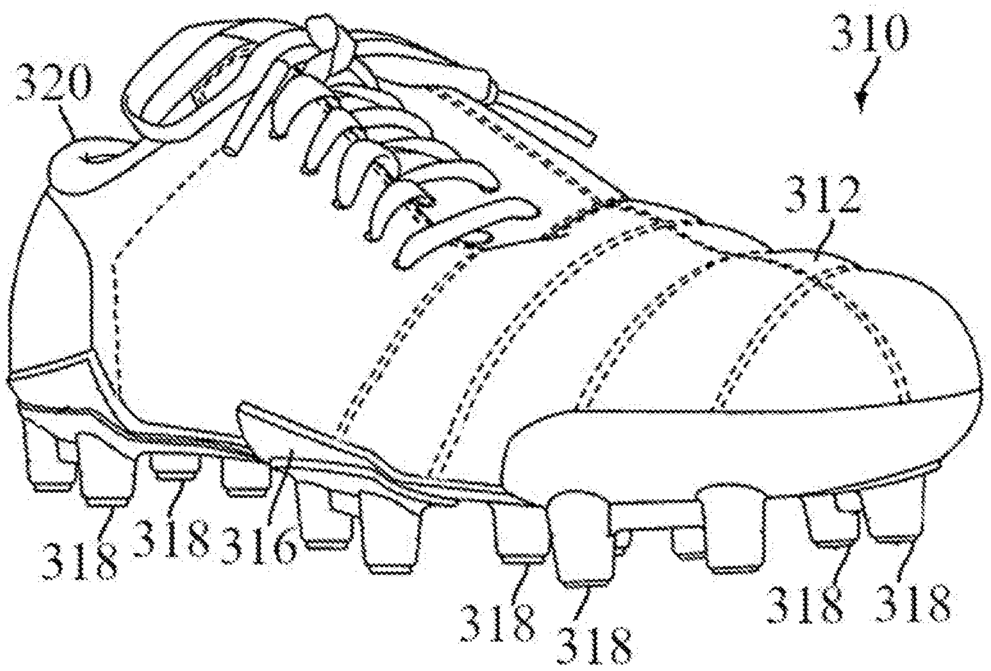
310
320
312
318
318
316
318
318
318
318

FIG. 3A

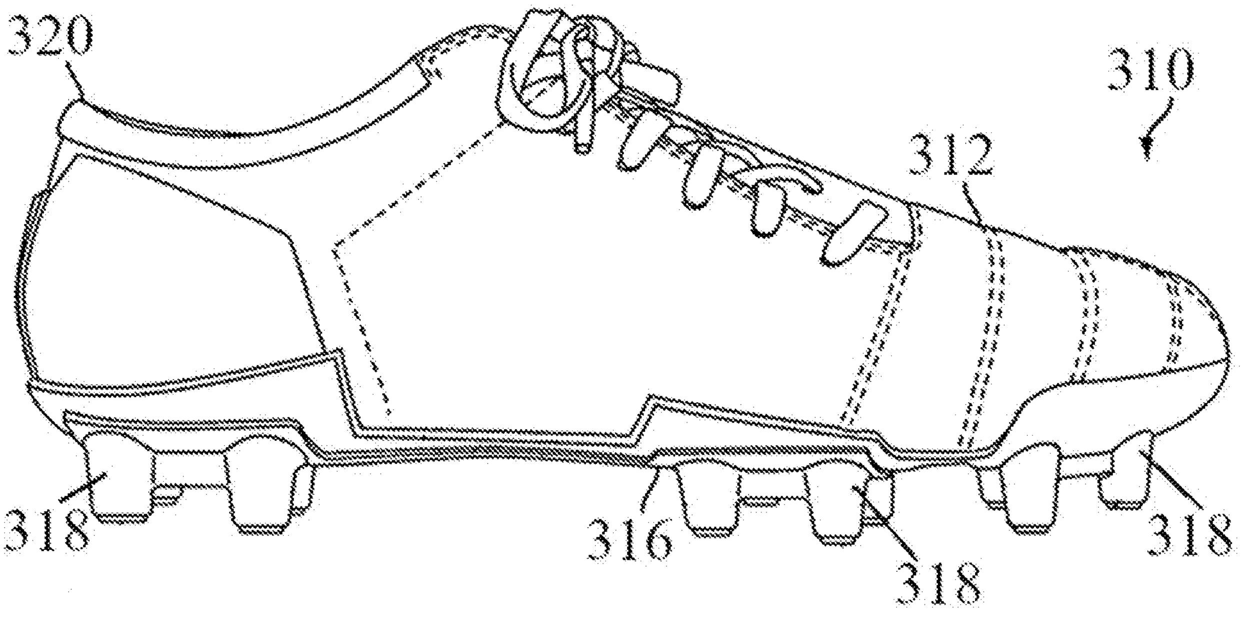
320
310
312
318
316
318
318

FIG. 3B

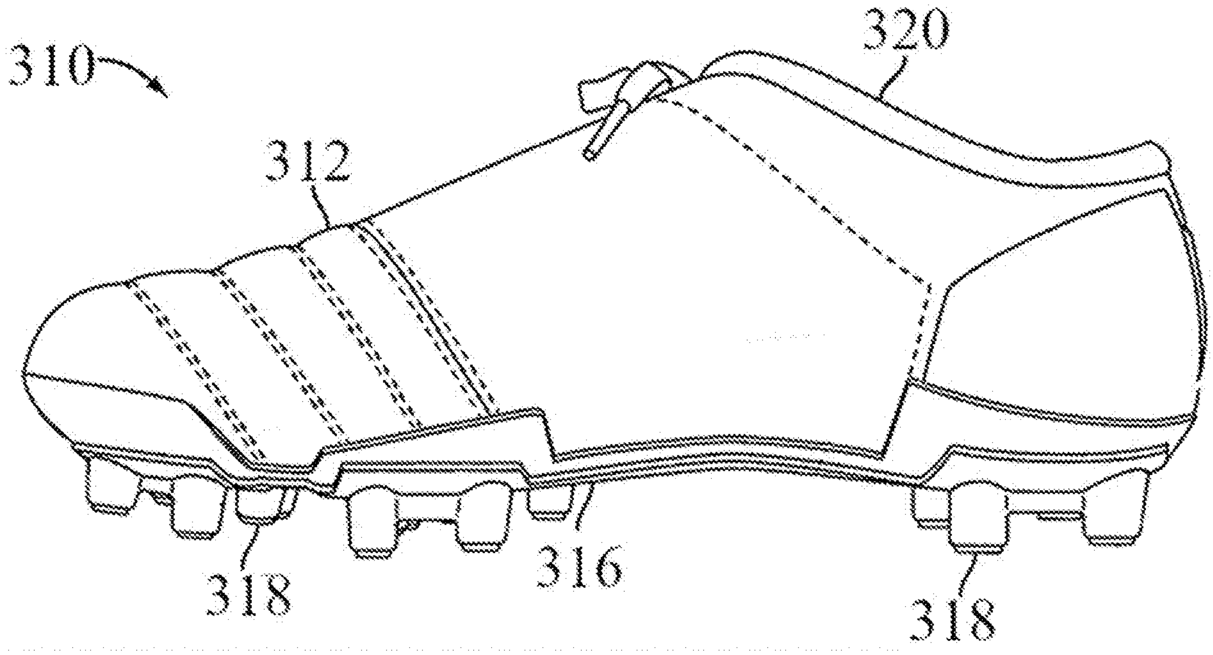


FIG. 3C

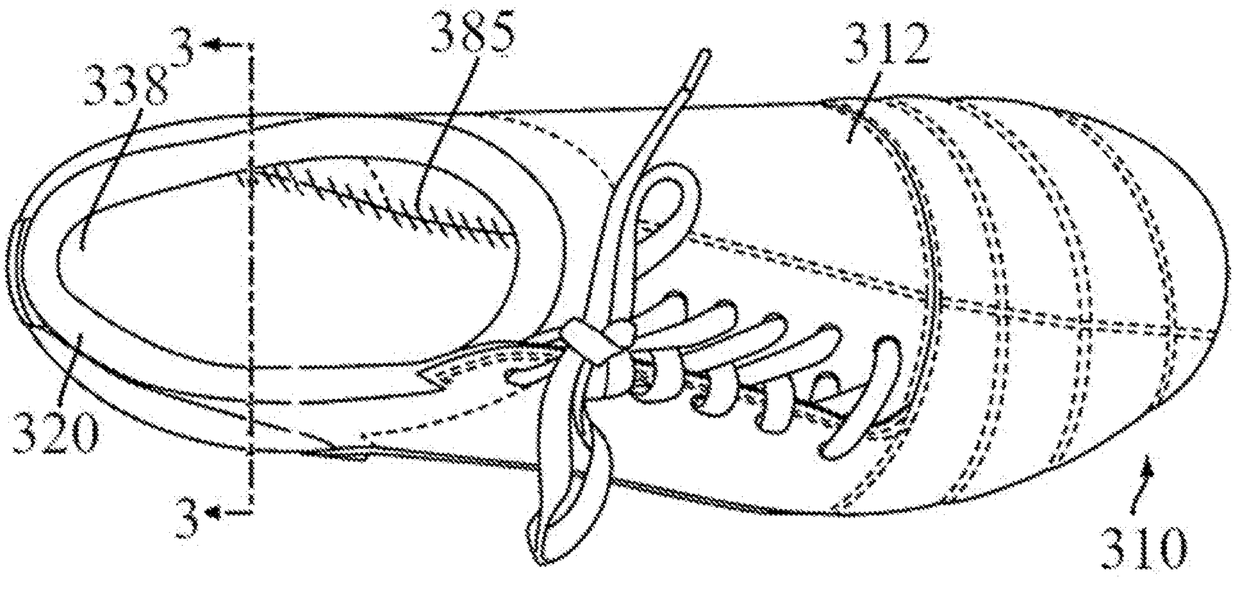


FIG. 3D

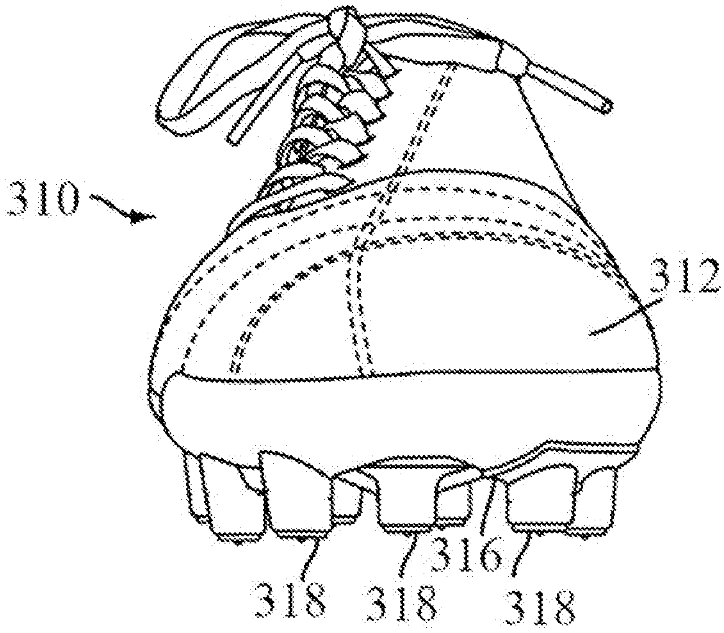


FIG. 3E

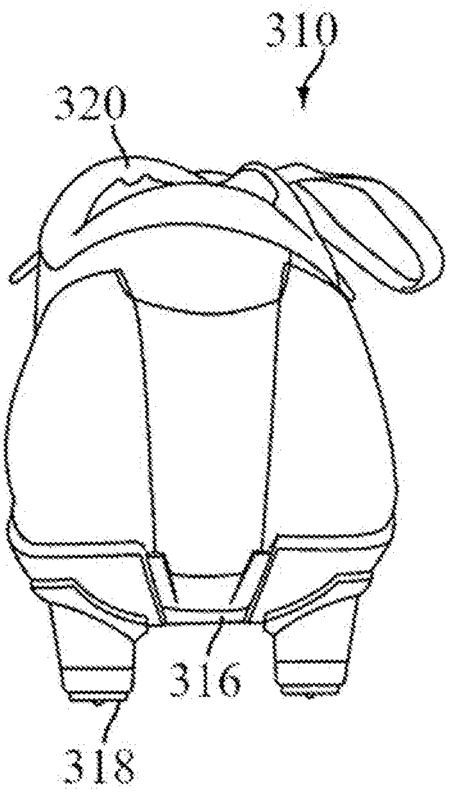


FIG. 3F

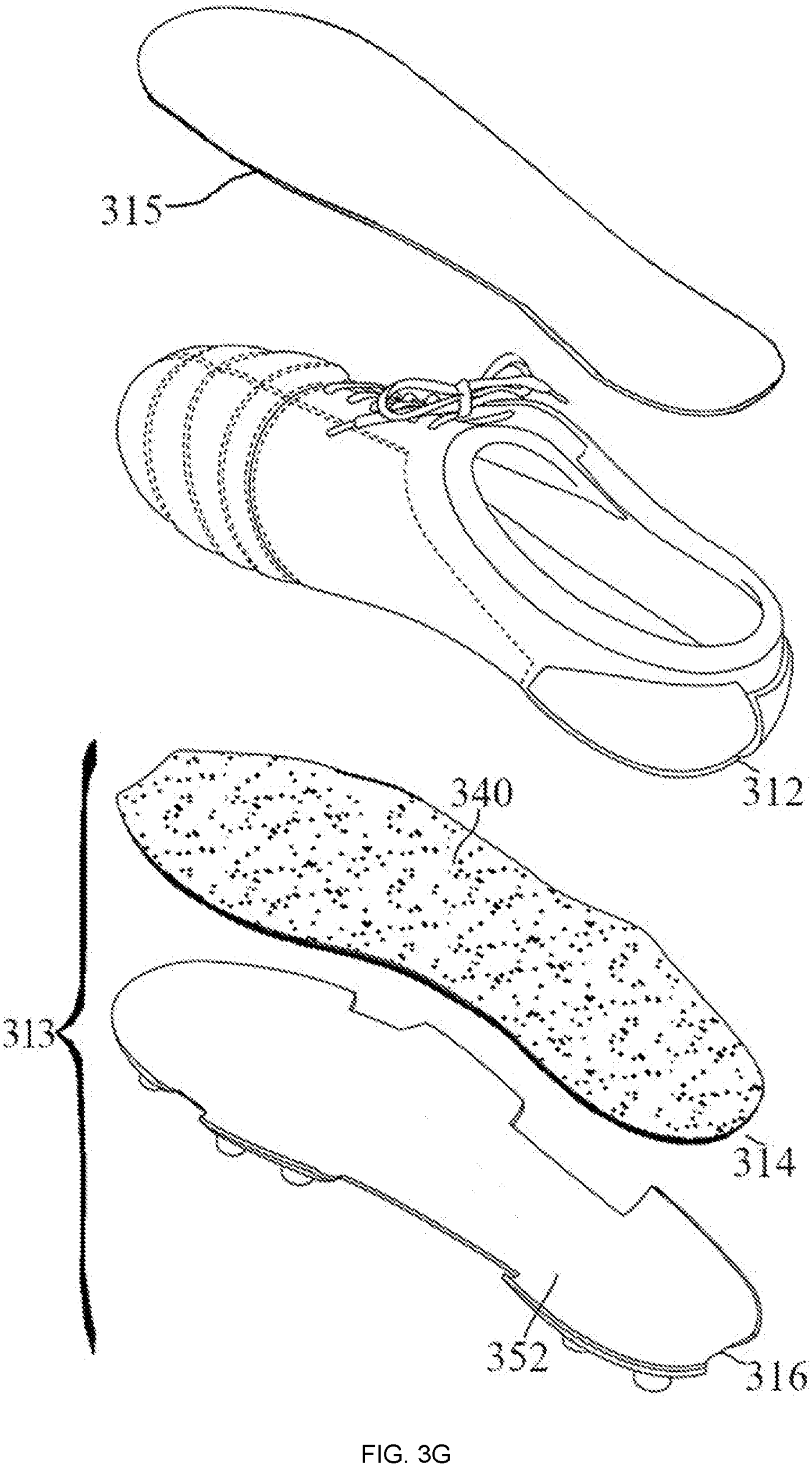


FIG. 3G

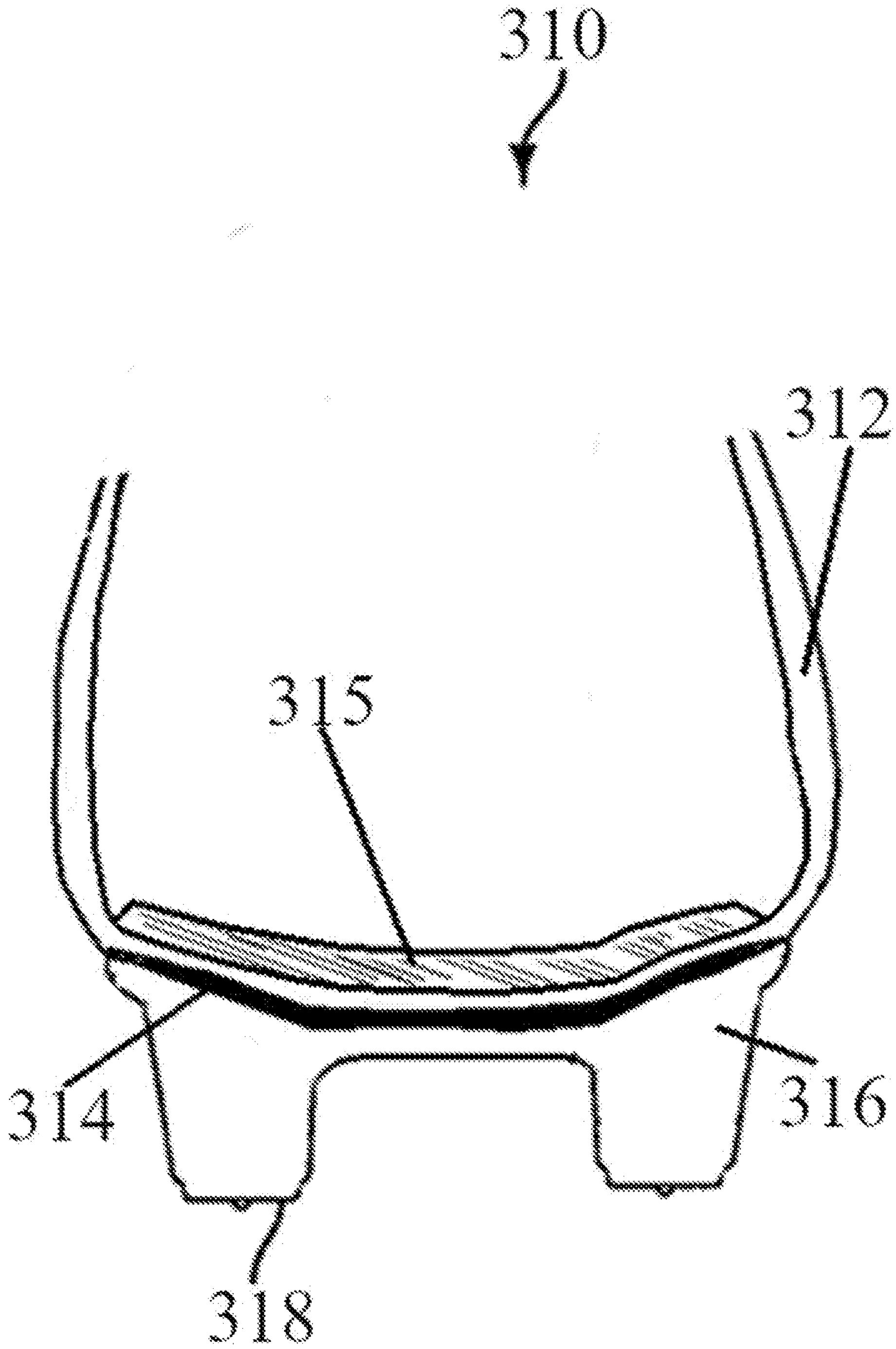


FIG. 3H

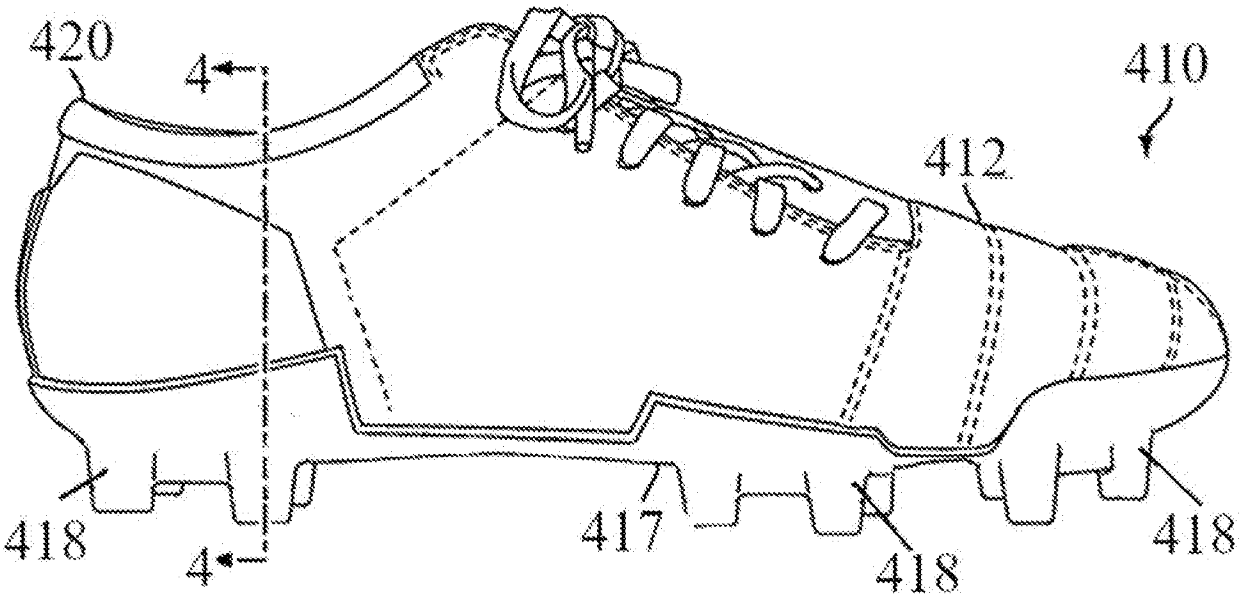


FIG. 4A

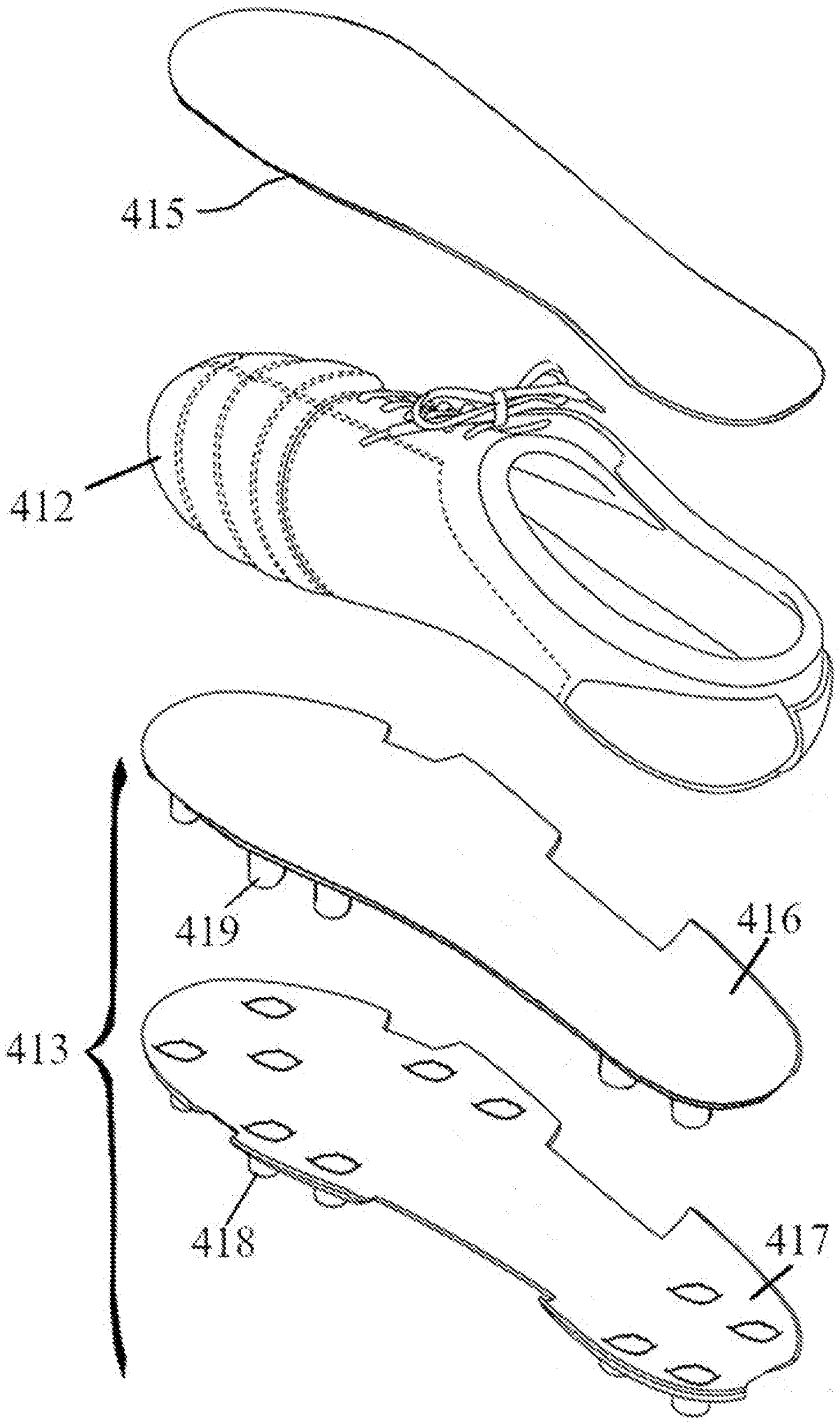


FIG. 4B

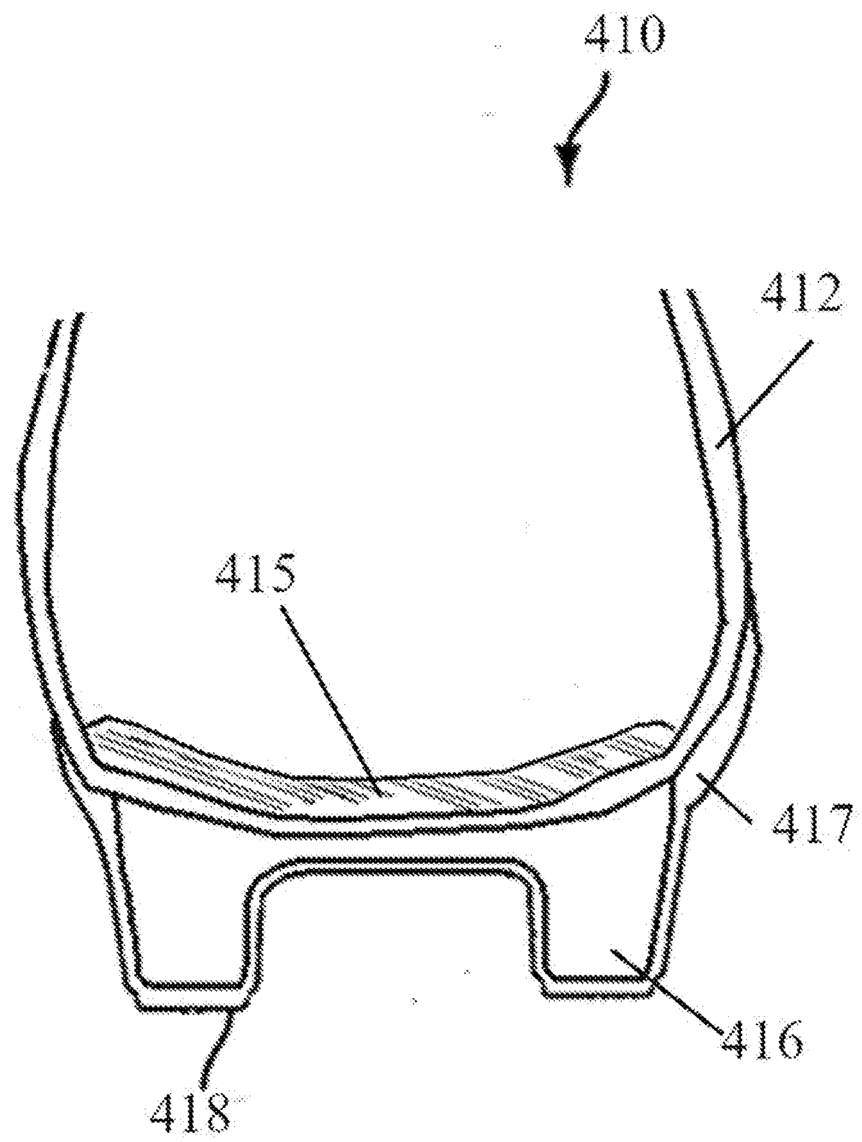


FIG. 4C

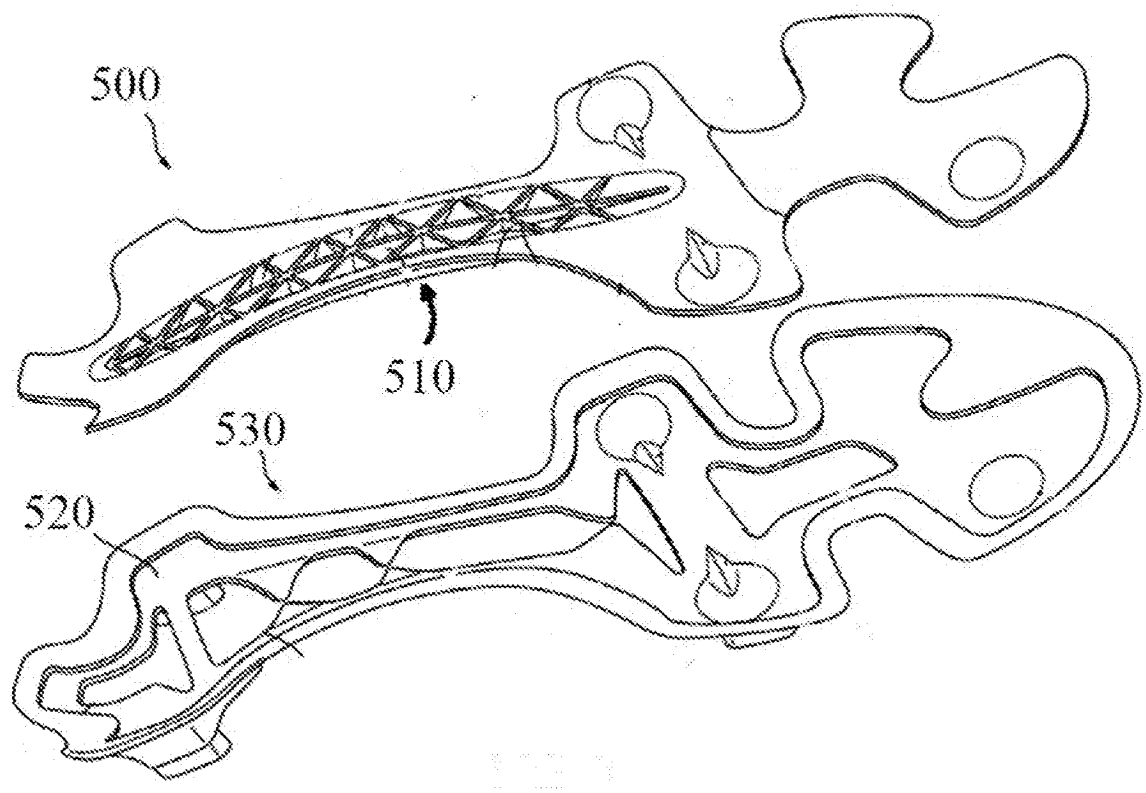


FIG. 5

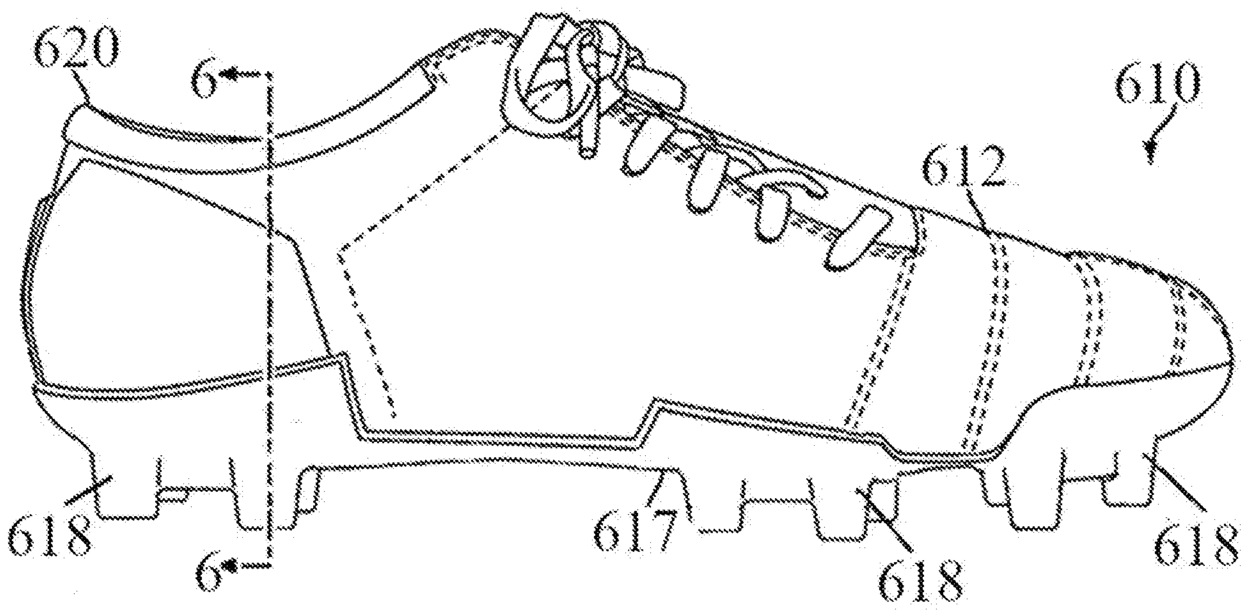


FIG. 6A

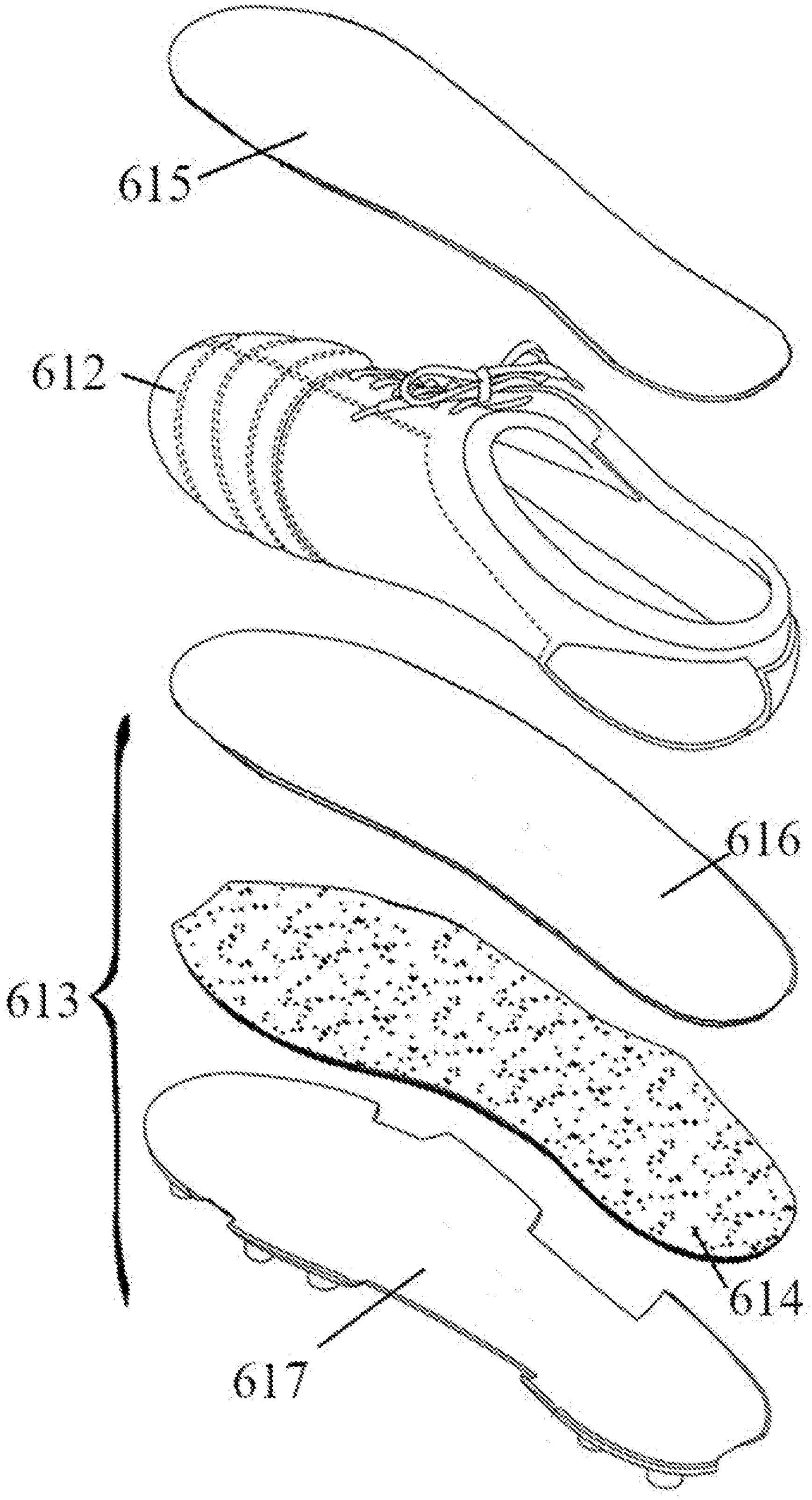


FIG. 6B

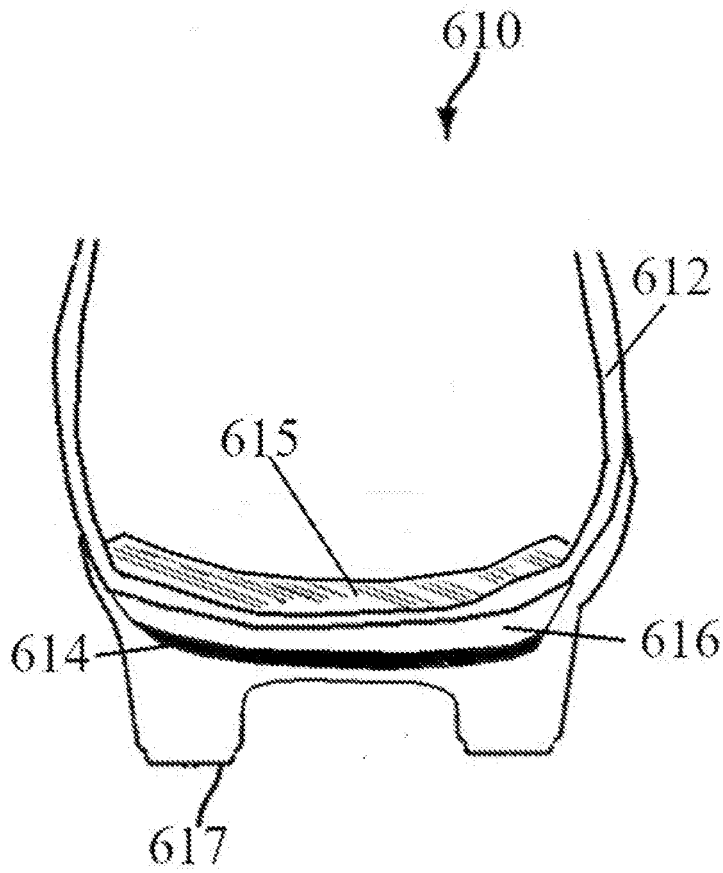


FIG. 6C

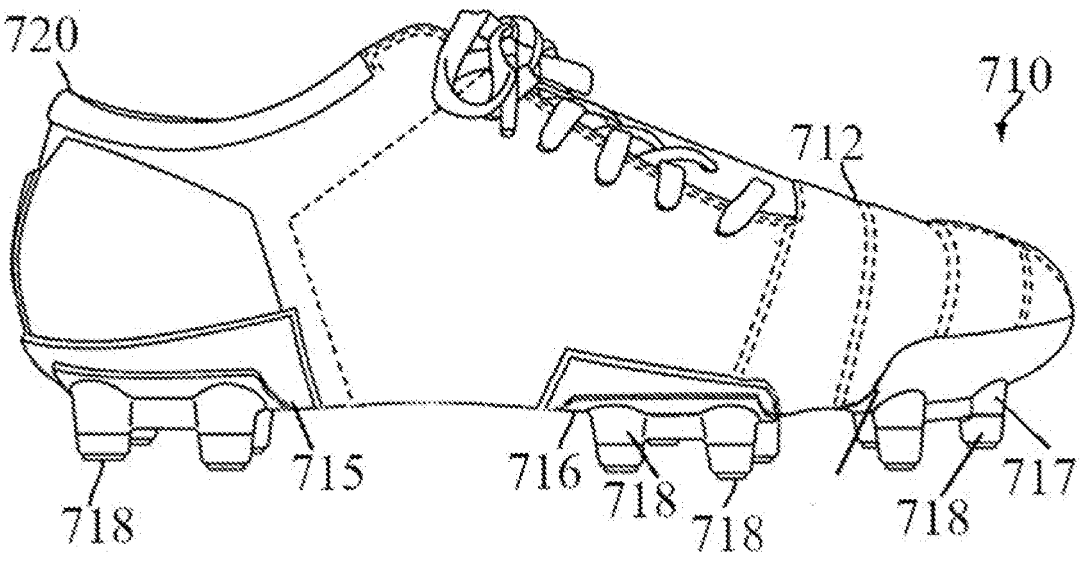


FIG. 7A

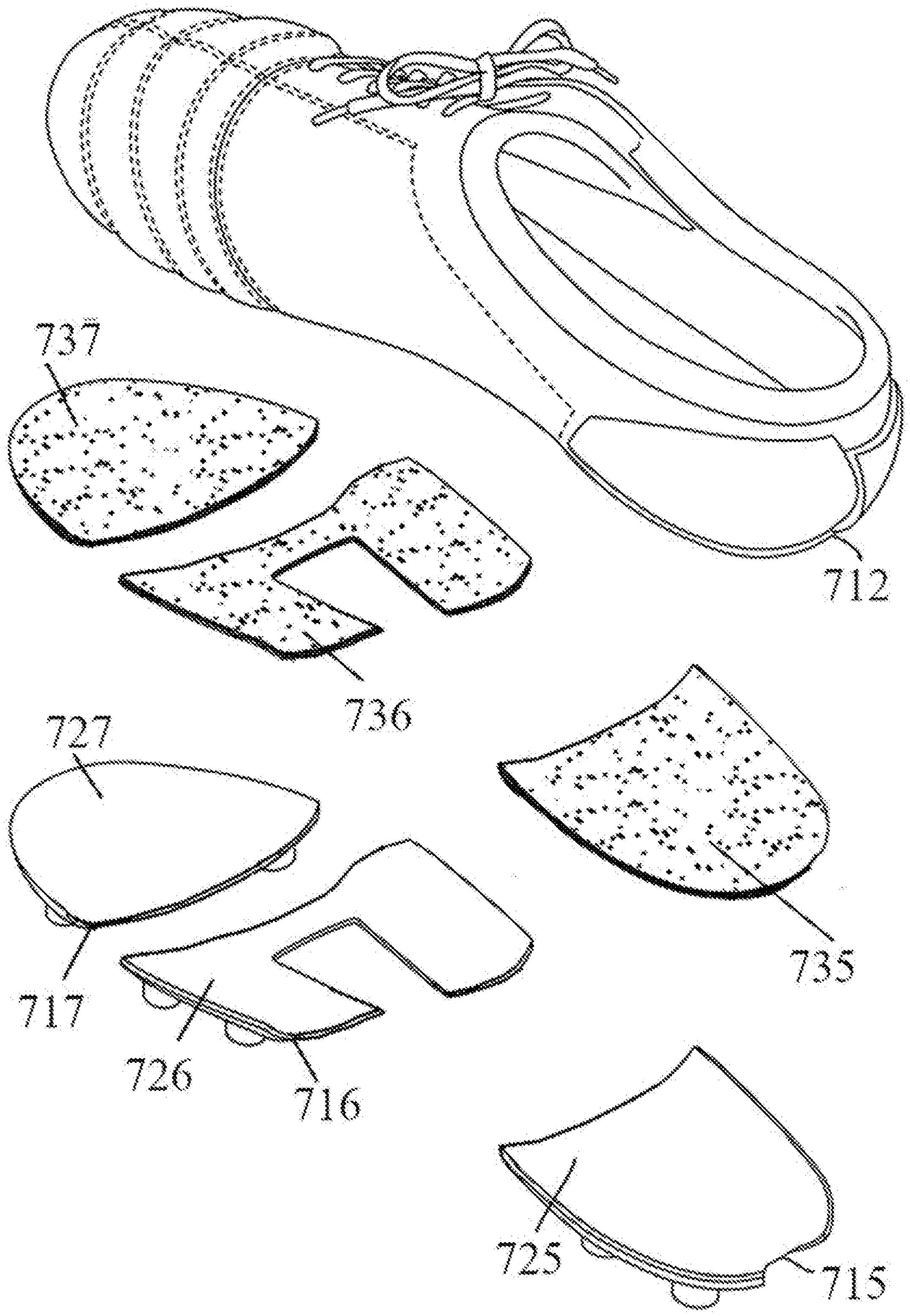


FIG. 7B

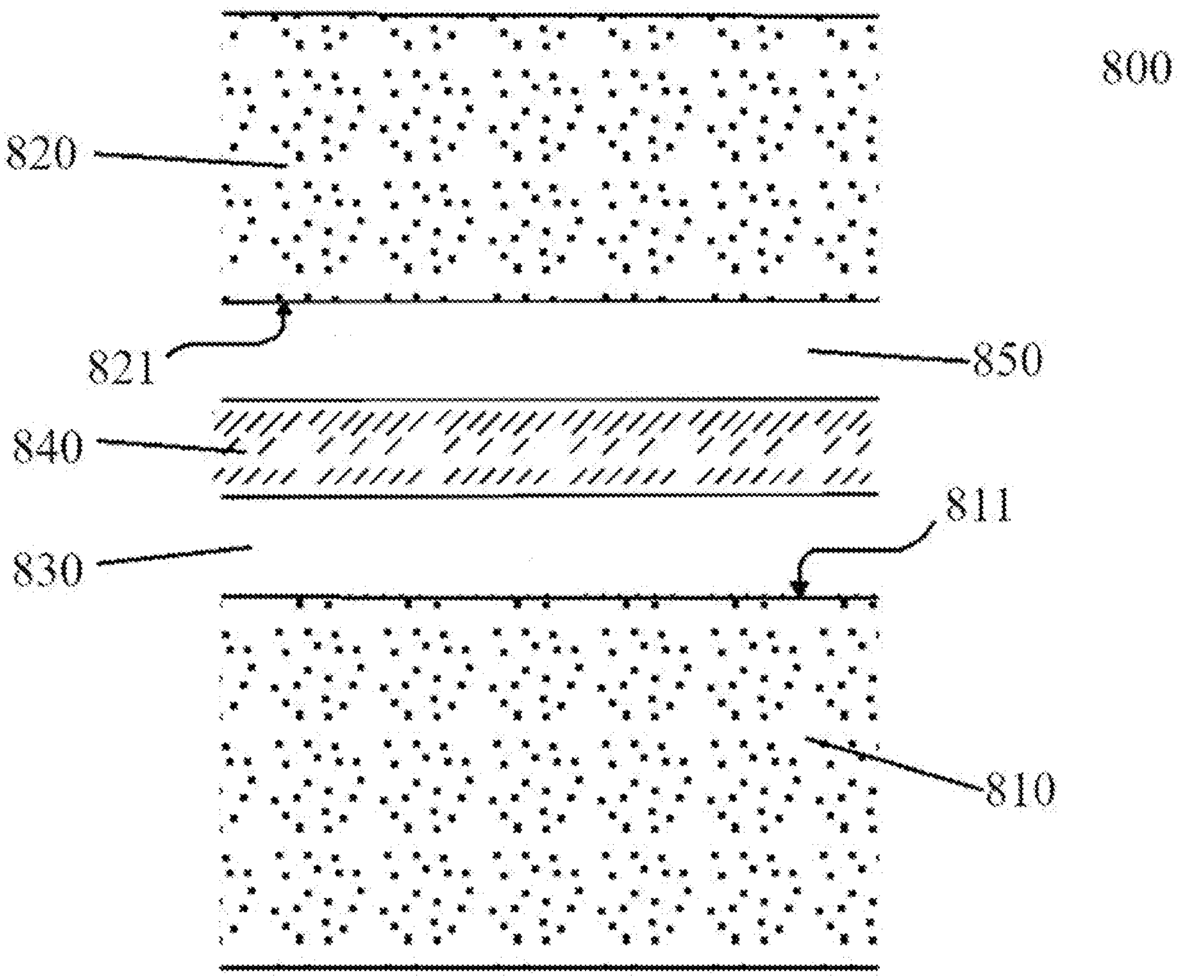


FIG. 8

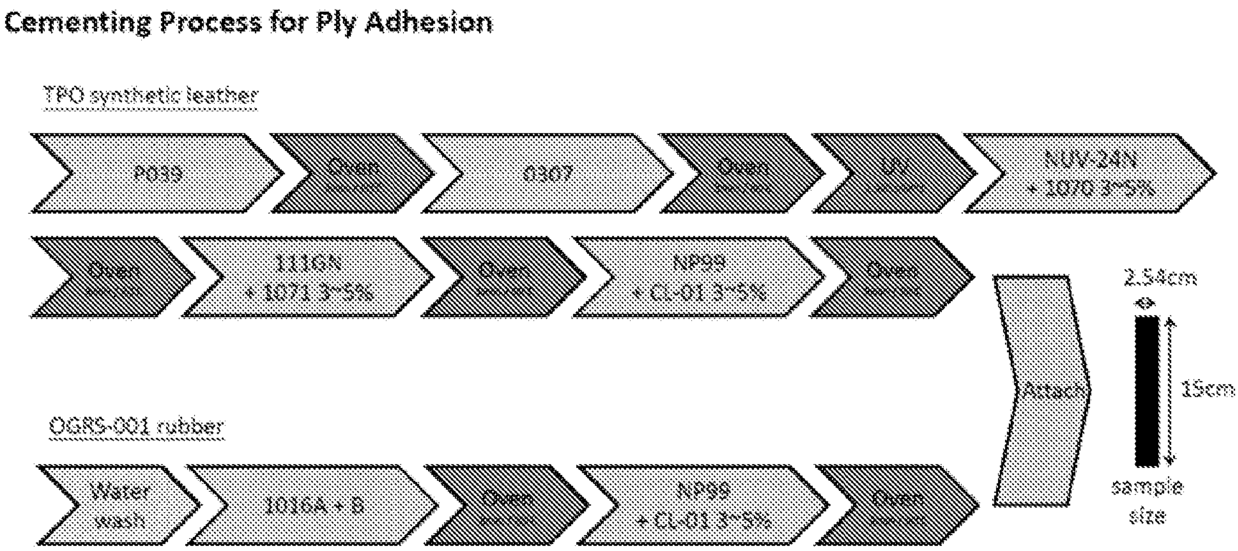
Cementing Process for Ply Adhesion
TPO synthetic leather
P039
Oven
0307
Oven
UV
NUV-24N
+ 1070 3~5%
Oven
111GN
+ 1071 3~5%
Oven
NP99
+ CL-01 3~5%
Oven
OGRS-001 rubber
Water
wash
1016A + B
Oven
NP99
+ CL-01 3~5%
Oven
Attach
2.54cm
15cm
sample
size

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017104452 A1
- EP 2462908 A
- US 5969076 A
- US 5866058 A